(19) Europäisches Patentamt
European Patent Office
Office européen des brevets

(11) **EP 3 575 187 B1**

(12) **EUROPEAN PATENT SPECIFICATION**

(45) Date of publication and mention
of the grant of the patent:
**02.12.2020 Bulletin 2020/49**

(51) Int Cl.:
***B62D 6/04*** *(2006.01)*  ***B62D 6/00*** *(2006.01)*

(21) Application number: **19176962.9**

(22) Date of filing: **28.05.2019**

(54) **STEERING CONTROL APPARATUS**

LENKSTEUERUNGSVORRICHTUNG

APPAREIL DE COMMANDE DE DIRECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.05.2018 JP 2018102711
29.05.2018 JP 2018102712**

(43) Date of publication of application:
**04.12.2019 Bulletin 2019/49**

(73) Proprietor: **JTEKT CORPORATION
Osaka 542-8502 (JP)**

(72) Inventors:
• **KODERA, Takashi
Osaka-shi, Osaka 542-8502 (JP)**
• **TAMAIZUMI, Terutaka
Osaka-shi, Osaka 542-8502 (JP)**
• **KITA, Masayuki
Osaka-shi, Osaka 542-8502 (JP)**
• **NAMIKAWA, Isao
Osaka-shi, Osaka 542-8502 (JP)**

(74) Representative: **Winter, Brandl, Fürniss, Hübner,
Röss, Kaiser, Polte - Partnerschaft mbB
Patent- und Rechtsanwaltskanzlei
Alois-Steinecker-Straße 22
85354 Freising (DE)**

(56) References cited:
**EP-A2- 2 772 412**

## Description

BACKGROUND OF THE INVENTION

1. Field of the Invention

The invention relates to a steering control apparatus.

2. Description of Related Art

There is known an electric power steering system that assists a driver with steering by applying the power of an electric motor to a steering mechanism of a vehicle. For example, a controller for an electric power steering (EPS) of Japanese Patent No. 4453012 (JP 4453012 B) controls an electric motor based on a steering torque, steering angle, and wheel steering angle that are acquired by various sensors.

The controller has first and second reference models (models obtained by formulating controlled objects). The first reference model defines the relationship between a steering angle and a target steering torque. The second reference model defines the relationship between a steering torque and a target wheel steering angle. The controller runs proportional-integral-derivative (PID) control that is a kind of feedback control based on a target steering torque that is determined by the first reference model and a target wheel steering angle that is determined by the second reference model.

The controller finds a deviation of an actual steering torque from the target steering torque determined by the first reference model and a deviation of an actual wheel steering angle from the target wheel steering angle determined by the second reference model, and controls the electric motor such that these deviations are minimized. The controller causes the actual steering torque to follow the target steering torque and causes the actual wheel steering angle to follow the target wheel steering angle through the control.

Furthermore, the preamble of the independent claim is disclosed in European Patent Application No. EP 2772412 A2.

SUMMARY OF THE INVENTION

When a vehicle having no second reference model travels on, for example, a bank road that is a curve with a cross slope, a steering wheel takes a steering angle position (tire position) for the inclination of the bank road based on the equilibrium of forces (gravity and centrifugal force) that act on the vehicle without any steering torque added by a driver. That is, while a vehicle is traveling on a bank road, a driver does not need to turn the steering wheel by a large amount.

However, an actual steering angle commensurate with a steering torque is achieved in a vehicle having the second reference model, so there is a concern that the steering wheel is returned to a neutral position with no steering torque added while the vehicle is traveling on a bank road. For this reason, the driver needs to add a steering torque such that the steering wheel does not return to the neutral position while the vehicle is traveling on a bank road.

Similar inconvenience arises when the vehicle travels on a cant road that is a straight road with a cross slope. That is, while a vehicle is traveling on a cant road, the vehicle is not able to keep traveling along the course on the cant road and gradually goes down toward the lower side as the vehicle travels forward unless a driver continues holding the steering wheel by adding a force to the steering wheel. This is because a vehicle is placed under the influence of the inclination of a road surface.

In this way, when a vehicle travels on a bank road or travels on a cant road, a driver needs to continue holding a steering wheel by adding a force commensurate with the inclination of a road surface to the steering wheel to drive the vehicle along the course. Therefore, a driver may not have got an appropriate steering feel while driving on a bank road or a cant road.

The invention provides a steering control apparatus that gives an appropriate steering feel even on an incline road.

A first aspect of the invention relates to a steering control apparatus. The steering control apparatus controls a motor based on a command value. The motor is a source that generates a driving force that is applied to a steering mechanism of a vehicle. The command value is computed for a steering status. The steering control apparatus includes an electronic control unit. The electronic control unit is configured to compute a first component of the command value as a function of a steering torque that is applied to a steering wheel. The electronic control unit is configured to compute a target rotation angle of a rotatable element based on an input torque. The rotatable element is configured to rotate with an operation of the steering wheel. The input torque includes at least one of the steering torque and the first component. The electronic control unit is configured to compute a second component of the command value through feedback control that brings an actual rotation angle of the rotatable element into coincidence with the target rotation angle. The electronic control unit is configured to compute an ideal axial force based on the target rotation angle. The ideal axial force is an axial force that acts on a steered wheel and that is an axial force to be incorporated in the input torque. The electronic control unit is configured to shift the ideal axial force in a specified direction as a function of a cross slope, which is a slope in a direction that intersects at right angles with a course of a road, with reference to a neutral value of the ideal axial force, associated with a state where the vehicle travels straight ahead. The specified direction is a direction along the cross slope and heading toward a side opposite to a side toward which the vehicle departs from the road because of the cross slope.

When the vehicle travels on a road with a cross slope, the vehicle may depart from the road because of the cross slope of the road without an operation of the steering wheel. In this respect, with the above configuration, when the vehicle is traveling on a road with a cross slope, which is a slope in a direction that intersects at right angles with a course of the road, the ideal axial force is shifted as a function of the cross slope toward a side opposite to a side toward which the vehicle departs from the road because of the cross slope in a direction along the cross slope with reference to the neutral value of the ideal axial force, associated with the state where the vehicle travels straight ahead.

Therefore, when the vehicle is traveling on a road with a cross slope, the ideal axial force, by extension, the input torque, does not become zero even when the steering wheel is not operated, and the target rotation angle is computed based on the input torque. Through feedback control that brings the rotation angle of the rotatable element into coincidence with the target rotation angle, the steering angle, that is, the rotation angle of the rotatable element, by extension, the rotation angle of the steering wheel, commensurate with the cross slope of the road is achieved. The rotation angle of the rotatable element and the steering angle of the steering wheel at this time are angles shifted in a specified direction, which is a direction along the cross slope and that is heading toward a side toward which the vehicle departs from the road, with reference to the neutral value of each angle, associated with the state where the vehicle travels straight ahead. Therefore, when the vehicle travels on a road with a cross slope, the steering angle commensurate with the cross slope of the road is achieved even with no steering torque added to the steering wheel. As a result, an appropriate steering feel is obtained.

In the steering control apparatus, the electronic control unit may be configured to, when the electronic control unit determines, based on a state quantity that reflects a turning motion of the vehicle, that the vehicle is traveling on a first incline road that is a curve with a cross slope, which is a slope in a direction that intersects at right angles with the course of the road, shift the ideal axial force as the function of the cross slope toward a side, toward which the cross slope of the first incline road goes down and toward which the specified direction is heading, with reference to the neutral value of the ideal axial force, associated with the state where the vehicle travels straight ahead.

The ideal axial force that is computed based on the target rotation angle is an axial force without taking the equilibrium of forces that act on the vehicle into consideration. For this reason, when the vehicle travels on the first incline road that is a curve, the steering angle of the steering wheel does not become an angle commensurate with the cross slope of the first incline road unless a driver continues holding the steering wheel by adding a steering torque to the steering wheel, and is kept at the neutral angle associated with the state where the vehicle travels straight ahead. Therefore, when the vehicle is traveling on the first incline road, the vehicle is not able to keep traveling along the first incline road and travels straight ahead unless the driver continues holding the steering wheel by adding a steering torque to the steering wheel. As a result, the vehicle may go up on the first incline road toward the outer side of the curve.

In this respect, with the above configuration, through feedback control that brings the rotation angle of the rotatable element into coincidence with the target rotation angle, the rotation angle of the rotatable element and the steering angle of the steering wheel become angles shifted toward a side opposite to a side toward which the vehicle departs from the road because of the cross slope, that is, a side toward which the cross slope of the first incline road goes down, with reference to the neutral value of each angle, associated with the state where the vehicle travels straight ahead. Therefore, when the vehicle travels on the first incline road, a steering angle commensurate with the cross slope of the first incline road is achieved with no steering torque added to the steering wheel. As a result, an appropriate steering feel is obtained.

In the steering control apparatus, the electronic control unit may be configured to, when the electronic control unit determines, based on a state quantity that reflects a turning motion of the vehicle, that the vehicle is traveling on a second incline road that is a straight road with the cross slope, which is a slope in a direction that intersects at right angles with a course of the road, shift the ideal axial force as the function of the cross slope toward a side, toward which the cross slope of the second incline road goes up and toward which the specified direction is heading, with reference to the neutral value of the ideal axial force, associated with the state where the vehicle travels straight ahead.

When the vehicle travels on the second incline road that is a straight road, the vehicle is not able to keep traveling along the second incline road unless a driver continues holding the steering wheel by adding a steering torque to the steering wheel, and gradually goes down toward a side where the level of the second incline road is low as the vehicle travels forward. This is because the vehicle is influenced by the cross slope of the second incline road.

In this respect, with the above configuration, through feedback control that brings the rotation angle of the rotatable element into coincidence with the target rotation angle, the rotation angle of the rotatable element and the steering angle of the steering wheel are angles shifted toward a side toward which the vehicle departs from the road because of the cross slope, that is, a side toward which the cross slope of the second incline road goes up, with reference to the neutral value of each angle, associated with the state where the vehicle travels straight ahead. Therefore, when the vehicle travels on the second incline road, a steering angle commensurate with the cross slope of the second incline road is achieved with no steering torque added to the steering wheel. As a result, an appropriate steering feel is obtained.

In the steering control apparatus, the electronic control unit may be configured to shift the ideal axial force in the specified direction by adding a correction angle computed as the function of the cross slope to the target rotation angle that is used in computing the ideal axial force.

With the above configuration, by adding the correction angle that is computed as a function of the cross slope of the road to the target rotation angle that is used in computing the ideal axial force in the electronic control unit, the ideal axial force is shifted in the specified direction. This is based on the fact that the target rotation angle changes by the correction angle with reference to the neutral angle associated with the state where the vehicle travels straight ahead and, as a result, the ideal axial force that is computed by the electronic control unit also changes as a function of the correction angle.

In the steering control apparatus, the electronic control unit may be configured to shift the ideal axial force in the specified direction by adding a correction axial force computed as the function of the cross slope to the computed ideal axial force.

With the above configuration, by adding the correction axial force that is computed as a function of the cross slope of the road to the ideal axial force that is computed by the electronic control unit, the ideal axial force is shifted in the specified direction. The final axial force obtained by adding the correction axial force to the ideal axial force that is computed by the electronic control unit is incorporated in the input torque.

In the steering control apparatus, the electronic control unit may be configured to determine that the vehicle is traveling on a first incline road that is a curve with the cross slope when a yaw rate that is a state quantity that reflects a turning motion of the vehicle and that is detected by a sensor is greater than or equal to a threshold. The electronic control unit may be configured to determine that the vehicle is traveling on a second incline road that is a straight road with the cross slope when the yaw rate is less than the threshold.

The yaw rate when the vehicle is traveling on the first incline road that is a curve with a cross slope is greater than the yaw rate when the vehicle is traveling on the second incline road that is a straight road with a cross slope. For this reason, as in the case of the above configuration, whether the vehicle is traveling on the first incline road or the vehicle is traveling on the second incline road is determined based on the yaw rate.

In the steering control apparatus, the electronic control unit may be configured to compute an axial force that acts on the steered wheel as an estimated axial force based on a state quantity that reflects a vehicle behavior or a road surface condition. The electronic control unit may be configured to compute a final axial force to be incorporated in the input torque by adding a value obtained by multiplying the ideal axial force by a first distribution ratio and a value obtained by multiplying the estimated axial force by a second distribution ratio. The first distribution ratio and the second distribution ratio may be individually set as the function of the cross slope.

The ideal axial force does not reflect an actual vehicle behavior or an actual road surface condition; whereas the estimated axial force reflects an actual vehicle behavior or an actual road surface condition. Therefore, as in the case of the above-described steering control apparatus, by changing the proportion of the ideal axial force and the estimated axial force in the final axial force to be incorporated in the input torque as a function of the cross slope of the road, a further appropriate target rotation angle, by extension, steering angle of the steering wheel, commensurate with the cross slope is achieved. Hence, a driver can further naturally perform steering.

In the steering control apparatus, the electronic control unit may be configured to recognize the cross slope based on a gravity component in a direction along the cross slope, the gravity component is computed from a lateral acceleration, a yaw rate, and a vehicle speed, and may be configured to set the first distribution ratio and the second distribution ratio such that a proportion of the estimated axial force in the final axial force increases as an absolute value of the gravity component increases.

The gravity component in the direction along the cross slope of the road reflects the degree of the cross slope of the road. With the above configuration, as the absolute value of the gravity component increases, that is, as the cross slope of the road increases, the final axial force more strongly reflects an actual road surface condition. Therefore, a further appropriate target rotation angle, by extension, a steering angle of the steering wheel, commensurate with the cross slope is achieved.

In the steering control apparatus, the electronic control unit may be configured to recognize the cross slope based on an axial force difference that is a difference between the ideal axial force and the estimated axial force, and may be configured to set the first distribution ratio and the second distribution ratio such that a proportion of the estimated axial force in the final axial force increases as an absolute value of the axial force difference increases.

The axial force difference between the ideal axial force and the estimated axial force reflects a road surface condition. The axial force difference also reflects the degree of the cross slope of the road as a road surface condition. With the above configuration, as the absolute value of the axial force difference increases, that is, as the cross slope of the road increases, the final axial force more strongly reflects an actual road surface condition. Therefore, a further appropriate target rotation angle, by extension, a steering angle of the steering wheel, commensurate with the cross slope is achieved.

In the steering control apparatus, the electronic control unit may be configured to change an amount of shift of the ideal axial force based on a distribution command. The distribution command may be generated by a host controller when the host controller intervenes in steering control and may indicate a degree to which the host controller intervenes in the steering control.

When the vehicle travels on a road with a cross slope, the vehicle may depart from the road because of the cross slope of the road without an operation of the steering wheel. With the above configuration, when the vehicle is traveling on a road with a cross slope, which is a slope in a direction that intersects at right angles with a course of the road, the ideal axial force is shifted as a function of the cross slope toward a side opposite to a side toward which the vehicle departs from the road because of the cross slope in a direction along the cross slope with reference to a neutral value of the ideal axial force, associated with the state where the vehicle travels straight ahead.

Therefore, when the vehicle is traveling on a road with a cross slope, the ideal axial force, by extension, the input torque, does not become zero even when the steering wheel is not operated, and the target rotation angle is computed based on the input torque. Through feedback control that brings the rotation angle of the rotatable element into coincidence with the target rotation angle, the rotation angle of the rotatable element, by extension, the steering angle that is the rotation angle of the steering wheel, commensurate with the cross slope of the road is achieved. The rotation angle of the rotatable element and the steering angle of the steering wheel at this time are angles shifted in a specified direction, which is a direction along the cross slope and that is heading toward a side toward which the vehicle departs from the road, with reference to the neutral value of each angle, associated with the state where the vehicle travels straight ahead. Therefore, when the vehicle travels on a road with a cross slope, the steering angle commensurate with the cross slope of the road is achieved even with no steering torque added to the steering wheel. As a result, an appropriate steering feel is obtained.

In this respect, with the above configuration, when the host controller intervenes in steering control while the vehicle is traveling on a road with a cross slope, the amount of shift of the ideal axial force is changed based on the distribution command that the host controller generates. That is, the degree (amount of shift) to which the ideal axial force that originally does not reflect a road surface condition reflects the cross slope of the road as a road surface condition is changed as a function of the degree (distribution command) to which the host controller intervenes in steering control. Thus, when the vehicle travels on a road with a cross slope, the input torque that is used in computing the target rotation angle, by extension, the target rotation angle, changes between when the host controller intervenes in steering control and when the host controller does not intervene in steering control. Therefore, when the host controller intervenes in steering control while the vehicle is traveling on a road with a cross slope, the motor generates a driving force as a function of the distribution command. As a result, the behavior of the steering wheel is also commensurate with the distribution command. Hence, intervention of the host controller in steering control is appropriately handled.

In the steering control apparatus, the electronic control unit may be configured to shift the ideal axial force in the specified direction by adding a correction angle computed as the function of the cross slope to the target rotation angle that is used in computing the ideal axial force. The electronic control unit may be configured to change the amount of shift of the ideal axial force by changing the correction angle based on the distribution command.

In the steering control apparatus, the electronic control unit may be configured to shift the ideal axial force in the specified direction by adding a correction axial force computed as the function of the cross slope to the ideal axial force. The electronic control unit may be configured to change the amount of shift of the ideal axial force by changing the correction axial force based on the distribution command.

In the steering control apparatus, the electronic control unit may be configured to compute a distribution ratio of the correction angle based on the distribution command, and the electronic control unit may be configured to compute a final value of the correction angle by multiplying the distribution ratio by the correction angle.

In the steering control apparatus, the electronic control unit may be configured to compute a distribution ratio of the correction axial force based on the distribution command; and the electronic control unit may be configured to compute a final value if the correction axial force by multiplying the distribution ratio by the correction axial force.

With the steering control apparatus according to the aspect of the invention, an appropriate steering feel is also obtained on an incline road.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a configuration diagram of a steer-by-wire steering system equipped with a first embodiment of a steering control apparatus;
FIG. 2 is a control block diagram of a controller in the first embodiment;
FIG. 3 is a control block diagram of a target steering angle computing unit in the first embodiment;
FIG. 4 is a control block diagram of a vehicle model in the first embodiment;
FIG. 5A is a schematic view showing the path of a vehicle that travels on a first incline road;

FIG. 5B is a schematic view showing the path of the vehicle that travels on a second incline road;

FIG. 6 is a schematic view of the vehicle, illustrating forces that act on the vehicle in the first embodiment;

FIG. 7 is a control block diagram of a correction processing unit in the first embodiment;

FIG. 8A is a graph showing a first map that represents the relationship between a gravity component caused by a road surface slope and a correction amount in the first embodiment;

FIG. 8B is a graph showing a second map that represents the relationship between a gravity component caused by a road surface slope and a correction amount in the first embodiment;

FIG. 9A is a graph showing the relationship between a target pinion angle and an ideal axial force in the first embodiment;

FIG. 9B is a graph showing the relationship between a steering angle and a steering torque in the first embodiment;

FIG. 10 is a control block diagram of an ideal axial force computing unit in a second embodiment of the steering control apparatus;

FIG. 11 is a control block diagram of a correction processing unit in the second embodiment;

FIG. 12 is a control block diagram of an axial force distribution computing unit in a third embodiment of the steering control apparatus;

FIG. 13 is a control block diagram of an axial force distribution computing unit in a fourth embodiment of the steering control apparatus;

FIG. 14 is a control block diagram of an axial force distribution computing unit in a fifth embodiment of the steering control apparatus;

FIG. 15 is a control block diagram of an axial force distribution computing unit in a sixth embodiment of the steering control apparatus;

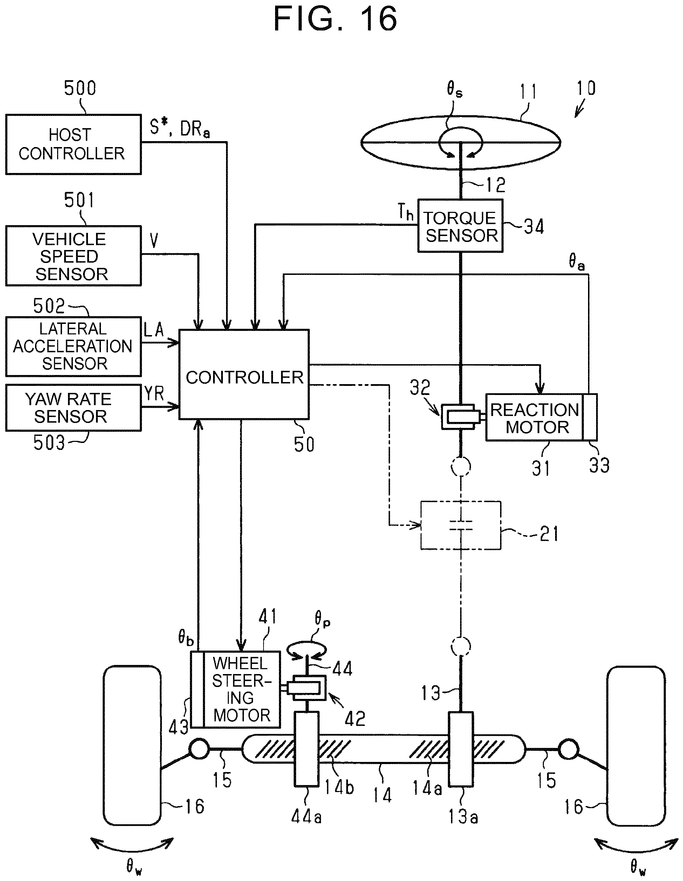

FIG. 16 is a configuration diagram of a steer-by-wire steering system equipped with a seventh embodiment of the steering control apparatus;

FIG. 17 is a control block diagram of a controller in the seventh embodiment;

FIG. 18 is a control block diagram of a target steering angle computing unit in the seventh embodiment;

FIG. 19 is a control block diagram of a vehicle model in the seventh embodiment;

FIG. 20A is a schematic view showing the path of the vehicle that travels on a third incline road;

FIG. 20B is a schematic view showing the path of the vehicle that travels on a fourth incline road;

FIG. 21 is a schematic view of the vehicle, illustrating forces that act on the vehicle in the seventh embodiment;

FIG. 22 is a control block diagram of a correction processing unit in the seventh embodiment;

FIG. 23A is a graph showing a first map that represents the relationship between a gravity component caused by a road surface slope and a correction amount in the seventh embodiment;

Fig. 23B is a graph showing a second map that represents the relationship between a gravity component caused by a road surface slope and a correction amount in the seventh embodiment;

FIG. 24A is a graph showing the relationship between a target pinion angle and an ideal axial force in the seventh embodiment;

FIG. 24B is a graph showing the relationship between a steering angle and a steering torque in the seventh embodiment;

FIG. 25 is a control block diagram of a correction processing unit in a ninth embodiment;

FIG. 26 is a control block diagram of a correction processing unit in a tenth embodiment;

FIG. 27 is a control block diagram of a vehicle model in an eleventh embodiment; and

FIG. 28 is a control block diagram of an axial force distribution computing unit in the eleventh embodiment.

## DETAILED DESCRIPTION OF EMBODIMENTS

A first embodiment in which a steering control apparatus is applied to a steer-by-wire steering system will be described.

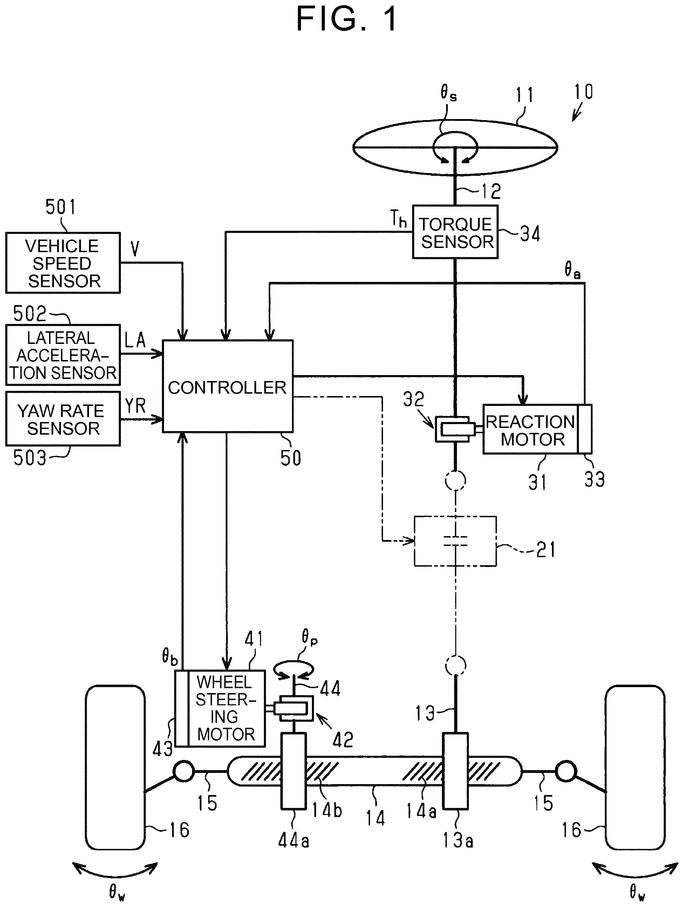

As shown in FIG. 1, a steering system 10 for a vehicle includes a steering shaft 12 coupled to a steering wheel 11. The steering shaft 12 is a component of a steering mechanism. The steering system 10 includes a wheel steering shaft 14 that extends along a vehicle width direction (right and left direction in FIG. 1). Right and left steered wheels 16 are respectively coupled to both ends of the wheel steering shaft 14 via tie rods 15. A wheel steering angle $\theta_w$ of the steered wheels 16 is changed as a result of linear motion of the wheel steering shaft 14.

The steering system 10 includes a reaction motor 31, a reduction mechanism 32, a rotation angle sensor 33, and a torque sensor 34 as components for generating a steering reaction force. A steering reaction force means a force (torque) that acts in a direction opposite to a direction in which a driver operates the steering wheel 11. Application of steering reaction force to the steering wheel 11 provides a driver with a moderate resistance.

The reaction motor 31 is a source that generates a steering reaction force. For example, a three-phase (U, V, W) brushless motor is employed as the reaction motor 31. The reaction motor 31 (accurately, its rotary shaft) is coupled to the steering shaft 12 via the reduction mechanism 32. The torque of the reaction motor 31 is applied to the steering shaft 12 as a steering reaction force.

The rotation angle sensor 33 is provided in the reaction motor 31. The rotation angle sensor 33 detects a rotation angle $\theta_a$ of the reaction motor 31. The rotation angle $\theta_a$ of the reaction motor 31 is used in computing a steering angle $\theta_s$. The reaction motor 31 and the steering shaft 12 move together via the reduction mechanism 32. For this reason, there is the correlation between the rotation angle $\theta_a$ of the reaction motor 31 and the rotation angle of the steering shaft 12, by extension, the steering angle $\theta_s$ that is the rotation angle of the steering wheel 11. Therefore, the steering angle $\theta_s$ is found based on the rotation angle $\theta_a$ of the reaction motor 31.

The torque sensor 34 detects a steering torque $T_h$ that acts on the steering shaft 12 through a turning operation of the steering wheel 11. The torque sensor 34 is provided at a portion of the steering shaft 12, which is closer to the steering wheel 11 than the reduction mechanism 32.

The steering system 10 includes a wheel steering motor 41, a reduction mechanism 42, and a rotation angle sensor 43 as components for generating a wheel steering force that is a power for steering the steered wheels 16.

The wheel steering motor 41 is a source that generates a wheel steering force. For example, a three-phase brushless motor is employed as the wheel steering motor 41. The wheel steering motor 41 (accurately, its rotary shaft) is coupled to a pinion shaft 44 via the reduction mechanism 42. Pinion teeth 44a of the pinion shaft 44 are in mesh with rack teeth 14b of the wheel steering shaft 14. The torque of the wheel steering motor 41 is applied to the wheel steering shaft 14 via the pinion shaft 44 as a wheel steering force. As the wheel steering motor 41 rotates, the wheel steering shaft 14 moves along the vehicle width direction (right and left direction in the drawing).

The rotation angle sensor 43 is provided in the wheel steering motor 41. The rotation angle sensor 43 detects a rotation angle $\theta_b$ of the wheel steering motor 41. The steering system 10 includes a pinion shaft 13. The pinion shaft 13 is provided so as to come into contact with the wheel steering shaft 14. The pinion teeth 13a of the pinion shaft 13 are in mesh with the rack teeth 14a of the wheel steering shaft 14. The reason why the pinion shaft 13 is provided is to support the wheel steering shaft 14 inside a housing (not shown) together with the pinion shaft 44. That is, a support mechanism (not shown) provided in the steering system 10 supports the wheel steering shaft 14 such that the wheel steering shaft 14 is movable along its axial direction, and pushes the wheel steering shaft 14 toward the pinion shafts 13, 44. Thus, the wheel steering shaft 14 is supported inside the housing. Alternatively, another support mechanism that supports the wheel steering shaft 14 in the housing may be provided without using the pinion shaft 13.

The steering system 10 includes a controller (electronic control unit) 50. The controller 50 controls the reaction motor 31 and the wheel steering motor 41 based on detected results of various sensors. The sensors include a vehicle speed sensor 501, a lateral acceleration sensor 502, and a yaw rate sensor 503 in addition to the rotation angle sensor 33, the torque sensor 34, and the rotation angle sensor 43. The vehicle speed sensor 501 is provided in the vehicle, and detects a vehicle speed V that is the travel speed of the vehicle. The lateral acceleration sensor 502 detects a lateral acceleration LA on the vehicle. A lateral acceleration LA means an acceleration in a direction perpendicular to the direction of travel of the vehicle when the vehicle turns. The yaw rate sensor 503 detects a yaw rate YR on the vehicle. A yaw rate YR means a rotation angular velocity around a vertical axis passing through the barycenter of the vehicle.

The controller 50 executes reaction force control for generating a steering reaction force commensurate with the steering torque $T_h$ through drive control over the reaction motor 31. The controller 50 computes a target steering reaction force based on a steering torque $T_h$ and a vehicle speed V, and computes a target steering angle of the steering wheel 11 based on the computed target steering reaction force, the steering torque Th, and the vehicle speed V. The controller 50 computes a steering angle correction amount through feedback control over the steering angle $\theta_s$, which is executed to cause an actual steering angle $\theta_s$ to follow the target steering angle, and computes a steering reaction force command value by adding the computed steering angle correction amount to the target steering reaction force. The controller 50 supplies the reaction motor 31 with a current that is required to generate the steering reaction force for the steering reaction force command value.

The controller 50 executes wheel steering control for steering the steered wheels 16 for a steering status through drive control over the wheel steering motor 41. The controller 50 computes a pinion angle $\theta_p$ that is an actual rotation angle of the pinion shaft 44 based on a rotation angle $\theta_b$ of the wheel steering motor 41, detected by the rotation angle sensor 43. The pinion angle $\theta_p$ is a value that reflects the wheel steering angle $\theta_w$ of the steered wheels 16. The controller 50 computes a target pinion angle by using the above-described target steering angle. The controller 50 finds a deviation between the target pinion angle and the actual pinion angle $\theta_p$, and controls electric power that is supplied to the wheel steering motor 41 such that the deviation is minimized.

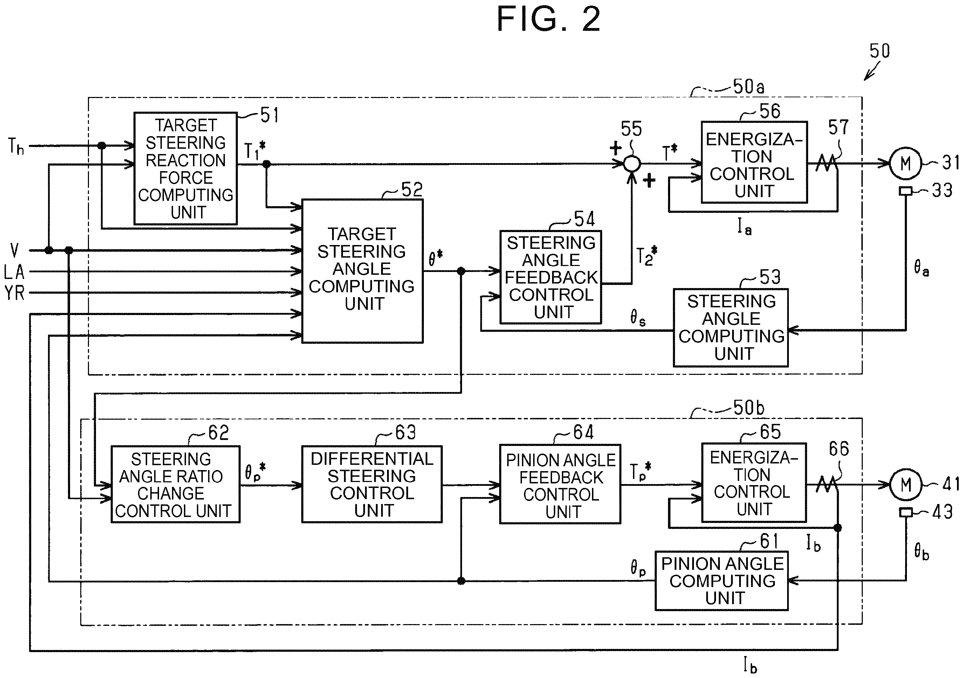

Next, the controller 50 will be described in detail. As shown in FIG. 2, the controller 50 includes a reaction force control unit 50a and a wheel steering control unit 50b. The reaction force control unit 50a executes reaction force control. The wheel steering control unit 50b executes wheel steering control.

The reaction force control unit 50a includes a target steering reaction force computing unit 51, a target steering angle computing unit 52, a steering angle computing unit 53, a steering angle feedback control unit 54, an adder 55, and an energization control unit 56.

The target steering reaction force computing unit 51 computes a target steering reaction force $T_1{}^*$ based on a steering torque $T_h$ and a vehicle speed V. The target steering angle computing unit 52 computes a target steering angle $\theta^*$ of the steering wheel 11 by using the target steering reaction force $T_1{}^*$, the steering torque

$T_h$, and the vehicle speed V. The target steering angle computing unit 52 has an ideal model that, when the sum of the target steering reaction force $T_1$* and the steering torque $T_h$ is an input torque, determines an ideal steering angle based on the input torque. The ideal model is obtained by modeling a steering angle for an ideal wheel steering angle commensurate with an input torque by experiment or other methods in advance on the assumption of the steering system in which the steering wheel 11 and the steered wheels 16 are mechanically coupled to each other. The target steering angle computing unit 52 finds an input torque by adding the target steering reaction force $T_1$* and the steering torque $T_h$, and computes a target steering angle θ* based on the ideal model by using the input torque.

The steering angle computing unit 53 computes an actual steering angle $θ_s$ of the steering wheel 11 based on a rotation angle $θ_a$ of the reaction motor 31, detected by the rotation angle sensor 33. The steering angle feedback control unit 54 computes a steering angle correction amount $T_2$* through feedback control over the steering angle $θ_s$ to cause the actual steering angle $θ_s$ to follow the target steering angle θ*. The adder 55 calculates a steering reaction force command value T* by adding the steering angle correction amount $T_2$* to the target steering reaction force $T_1$*.

The energization control unit 56 supplies the reaction motor 31 with an electric power commensurate with the steering reaction force command value T*. Specifically, the energization control unit 56 computes a current command value for the reaction motor 31 based on the steering reaction force command value T*. The energization control unit 56 detects an actual current value $I_a$ in a power supply line for the reaction motor 31 with the use of a current sensor 57 provided in the power supply line. The current value $I_a$ is the actual value of current that is supplied to the reaction motor 31. The energization control unit 56 finds a deviation between the current command value and the actual current value $I_a$, and controls an electric power that is supplied to the reaction motor 31 such that the deviation is minimized (feedback control over the current $I_a$). Thus, the reaction motor 31 generates a torque for the steering reaction force command value T*. A moderate resistance commensurate with a road surface reaction force can be provided to a driver.

As shown in FIG. 2, the wheel steering control unit 50b includes a pinion angle computing unit 61, a steering angle ratio change control unit 62, a differential steering control unit 63, a pinion angle feedback control unit 64, and an energization control unit 65.

The pinion angle computing unit 61 computes a pinion angle $θ_p$ that is an actual rotation angle of the pinion shaft 44 based on a rotation angle $θ_b$ of the wheel steering motor 41, detected by the rotation angle sensor 43. As described above, the wheel steering motor 41 and the pinion shaft 44 move together via the reduction mechanism 42. Therefore, there is the correlation between the rotation angle $θ_b$ of the wheel steering motor 41 and the pinion angle $θ_p$. The pinion angle $θ_p$ is determined based on the rotation angle $θ_b$ of the wheel steering motor 41 by using the correlation. As described above, the pinion shaft 44 is in mesh with the wheel steering shaft 14. Therefore, there is also the correlation between the pinion angle $θ_p$ and the amount of movement of the wheel steering shaft 14. That is, the pinion angle $θ_p$ is a value that reflects the wheel steering angle $θ_w$ of the steered wheels 16.

The steering angle ratio change control unit 62 sets a steering angle ratio that is the ratio of the wheel steering angle $θ_w$ to the steering angle $θ_s$ for a travel status of the vehicle (for example, vehicle speed V), and computes a target pinion angle based on the set steering angle ratio. The steering angle ratio change control unit 62 computes a target pinion angle $θ_p$* such that the wheel steering angle $θ_w$ relative to the steering angle $θ_s$ increases as the vehicle speed V decreases and the wheel steering angle $θ_w$ relative to the steering angle $θ_s$ reduces as the vehicle speed V increases. To achieve the steering angle ratio that is set for the travel status of the vehicle, the steering angle ratio change control unit 62 computes a correction angle commensurate with the target steering angle θ*, and computes a target pinion angle $θ_p$* commensurate with the steering angle ratio by adding the computed correction angle to the target steering angle θ*.

The differential steering control unit 63 computes a rate of change in target pinion angle $θ_p$* (wheel steering speed) by differentiating the target pinion angle $θ_p$*. The differential steering control unit 63 also computes a correction angle to be applied to the target pinion angle $θ_p$* by multiplying the rate of change in target pinion angle $θ_p$* by a gain. The differential steering control unit 63 computes a final target pinion angle $θ_p$* by adding the correction angle to the target pinion angle $θ_p$*. The phase of the target pinion angle $θ_p$* that is computed by the steering angle ratio change control unit 62 is advanced, so a delay of wheel steering is improved. That is, steering responsiveness is ensured as a function of a wheel steering speed.

The pinion angle feedback control unit 64 computes a pinion angle command value $T_p$* through feedback control (PID control) over the pinion angle $θ_p$ to cause an actual pinion angle $θ_p$ to follow the final target pinion angle $θ_p$* computed by the differential steering control unit 63.

The energization control unit 65 supplies the wheel steering motor 41 with an electric power commensurate with the pinion angle command value $T_p$*. Specifically, the energization control unit 65 computes a current command value for the wheel steering motor 41 based on the pinion angle command value $T_p$*. The energization control unit 65 also detects an actual current value $I_b$ in a power supply line for the wheel steering motor 41 with the use of a current sensor 66 provided in the power supply line. The current value $I_b$ is the actual value of current that is supplied to the wheel steering motor 41.

The energization control unit 65 finds a deviation between the current command value and the actual current value $I_b$, and controls an electric power that is supplied to the wheel steering motor 41 such that the deviation is minimized (feedback control over the current $I_b$). Thus, the wheel steering motor 41 rotates by an angle commensurate with the pinion angle command value $T_p^*$.

Next, the target steering angle computing unit 52 will be described in detail. As described above, the target steering angle computing unit 52 computes a target steering angle $\theta^*$ based on the ideal model by using an input torque that is the sum of the target steering reaction force $T_1^*$ and the steering torque $T_h$. The ideal model is a model that uses the fact that an input torque $T_{in}^*$ that is a torque to be applied to the steering shaft 12 is expressed by the following mathematical expression (1).

$$T_{in}^* = J\theta^{*''} + C\theta^{*'} + K\theta^* \qquad (1)$$

where J is the moment of inertia of the steering wheel 11 and steering shaft 12, C is the coefficient of viscosity (coefficient of friction) corresponding to friction, or the like, on the housing of the wheel steering shaft 14, and K is a spring modulus on the assumption that each of the steering wheel 11 and the steering shaft 12 is regarded as a spring.

As is apparent from the mathematical expression (1), the input torque $T_{in}^*$ is obtained by adding a value obtained by multiplying the second order derivative $\theta^{*''}$ of a target steering angle $\theta^*$ by the moment of inertia J, a value obtained by multiplying the first order derivative $\theta^{*'}$ of the target steering angle $\theta^*$ by the coefficient of viscosity C, and a value obtained by multiplying the target steering angle $\theta^*$ by the spring modulus K. The target steering angle computing unit 52 computes a target steering angle $\theta^*$ in accordance with the ideal model based on the mathematical expression (1).

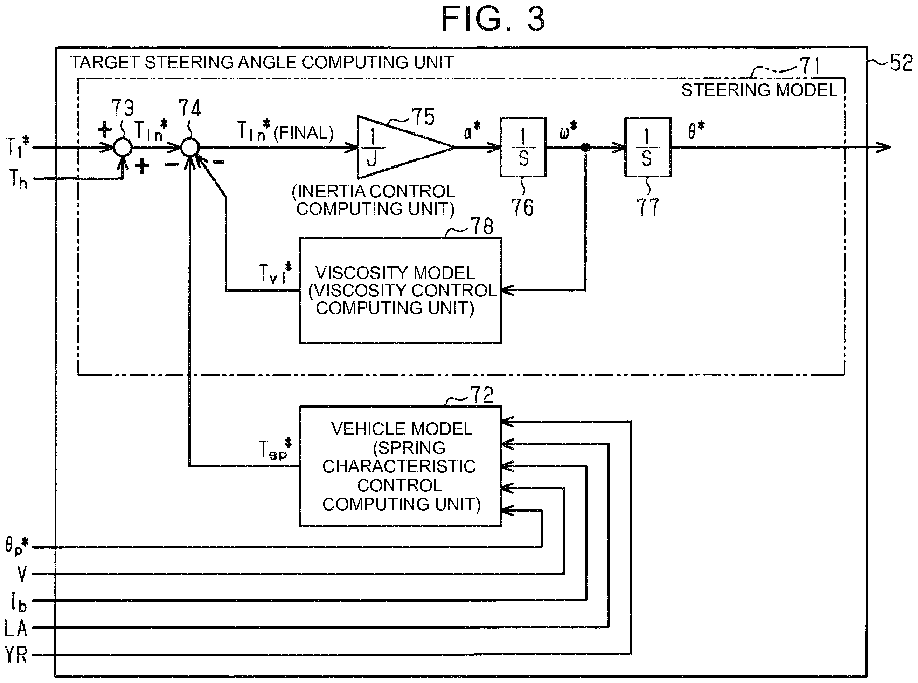

As shown in FIG. 3, the ideal model based on the mathematical expression (1) is separated into a steering model 71 and a vehicle model 72. The steering model 71 is tuned for the properties of the elements of the steering system 10, such as the steering shaft 12 and the reaction motor 31. The steering model 71 includes an adder 73, a subtracter 74, an inertia model 75, a first integrator 76, a second integrator 77, and a viscosity model 78.

The adder 73 computes an input torque $T_{in}^*$ by adding a target steering reaction force $T_1^*$ and a steering torque $T_h$. The subtracter 74 computes a final input torque $T_{in}^*$ by subtracting a viscosity component $T_{vi}^*$ and a spring component $T_{sp}^*$ (described later) from the input torque $T_{in}^*$ calculated by the adder 73.

The inertia model 75 functions as an inertia control computing unit corresponding to the inertia term of the mathematical expression (1). The inertia model 75 computes a steering angular acceleration $\alpha^*$ by multiplying the final input torque $T_{in}^*$ calculated by the subtracter 74 by the inverse of the moment of inertia J.

The first integrator 76 computes a steering angular velocity $\omega^*$ by integrating the steering angular acceleration $\alpha^*$ calculated by the inertia model 75. The second integrator 77 computes a target steering angle $\theta^*$ by further integrating the steering angular velocity $\omega^*$ calculated by the first integrator 76. The target steering angle $\theta^*$ is an ideal rotation angle of the steering wheel 11 (steering shaft 12) based on the steering model 71.

The viscosity model 78 functions as a viscosity control computing unit corresponding to the viscosity term of the mathematical expression (1). The viscosity model 78 computes a viscosity component $T_{vi}$ of the input torque $T_{in}^*$ by multiplying the steering angular velocity $\omega^*$ calculated by the first integrator 76 by the coefficient of viscosity C.

The vehicle model 72 is tuned for the properties of the vehicle equipped with the steering system 10. The vehicle-side characteristics that influence the steering characteristics are determined depending on, for example, the specifications of suspensions and wheel alignment, the grip (friction force) of the steered wheels 16, and other factors. The vehicle model 72 functions as a spring characteristic control computing unit corresponding to the spring term of the mathematical expression (1). The vehicle model 72 computes a spring component $T_{sp}^*$ (torque) of the input torque $T_{in}^*$ by multiplying the target steering angle $\theta^*$ calculated by the second integrator 77 by the spring modulus K.

With the thus configured target steering angle computing unit 52, by adjusting the moment of inertia J and coefficient of viscosity C of the steering model 71 and the spring modulus K of the vehicle model 72, the relationship between an input torque $T_{in}^*$ and a target steering angle $\theta^*$ is directly tuned, and, by extension, desired steering characteristics are achieved.

A target pinion angle $\theta_p^*$ is computed by using the target steering angle $\theta^*$ computed from the input torque $T_{in}^*$ based on the steering model 71 and the vehicle model 72. An actual pinion angle $\theta_p$ is subjected to feedback control so as to coincide with the target pinion angle $\theta_p^*$. As described above, there is the correlation between the pinion angle $\theta_p$ and the wheel steering angle $\theta_w$ of the steered wheels 16. Therefore, the wheel steering of the steered wheels 16 commensurate with the input torque $T_{in}^*$ also depends on the steering model 71 and the vehicle model 72. That is, the steering feel of the vehicle depends on the steering model 71 and the vehicle model 72. Therefore, a desired steering feel is achieved by adjusting the steering model 71 and the vehicle model 72.

However, in the thus configured controller 50, a steering reaction force (a resistance experienced through the steering wheel) is just commensurate with a target steering angle $\theta^*$. That is, a steering reaction force does not change depending on a vehicle behavior or a road surface condition (slipperiness or other conditions of a road surface). For this reason, it is difficult for a driver to get a vehicle behavior or a road surface condition through a steering reaction force. Therefore, in the present embodiment, from the viewpoint of removing such concerns, the vehicle model 72 is configured as follows.

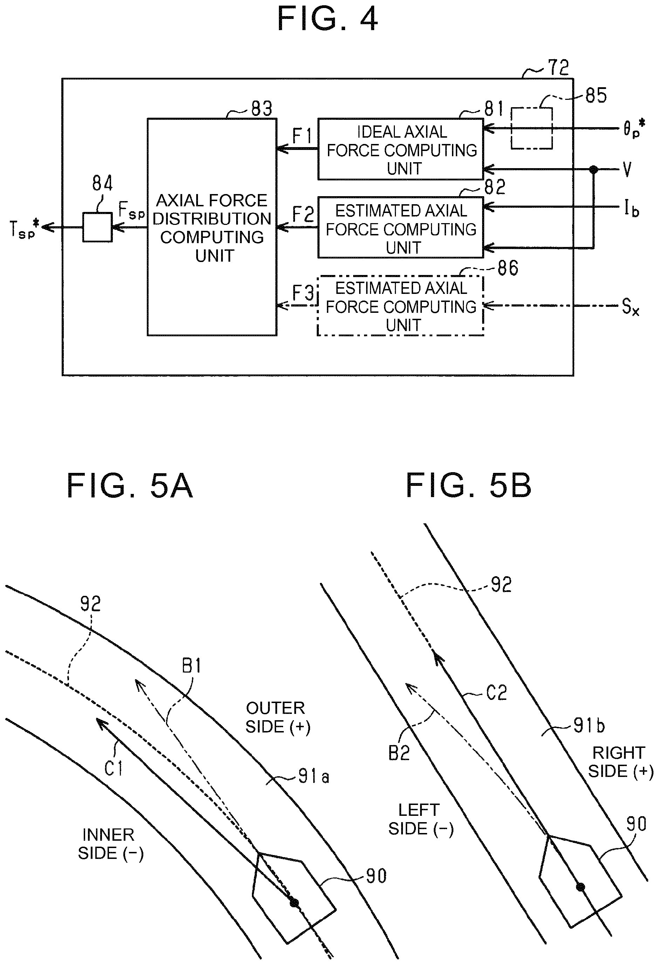

As shown in FIG. 4, the vehicle model 72 includes an ideal axial force computing unit 81, an estimated axial force computing unit 82, an axial force distribution computing unit 83, and a conversion unit 84.

The ideal axial force computing unit 81 computes an ideal axial force F1 based on a target pinion angle $\theta_p{}^*$. An ideal axial force F1 is an ideal value of axial force that acts on the wheel steering shaft 14 through the steered wheels 16. The ideal axial force computing unit 81 computes an ideal axial force F1 by using an ideal axial force map stored in a storage device (not shown) of the controller 50. An ideal axial force F1 is set such that the absolute value of the ideal axial force F1 increases as the absolute value of a target pinion angle $\theta_p{}^*$ (or a target wheel steering angle that is obtained by multiplying the target pinion angle $\theta_p{}^*$ by a predetermined conversion coefficient) increases and as a vehicle speed V decreases. A vehicle speed V does not always need to be taken into consideration.

The estimated axial force computing unit 82 computes an estimated axial force F2 (road surface reaction force) based on the current value $I_b$ of the wheel steering motor 41. The estimated axial force F2 acts on the wheel steering shaft 14. The current value $I_b$ of the wheel steering motor 41 varies with the difference between a target pinion angle $\theta_p{}^*$ and an actual pinion angle $\theta_p$ due to the fact that a disturbance caused by a road surface condition (road surface frictional resistance) acts on the steered wheels 16. That is, the current value $I_b$ of the wheel steering motor 41 reflects an actual road surface reaction force that acts on the steered wheels 16. Therefore, an axial force that reflects the influence of a road surface condition based on the current value $I_b$ of the wheel steering motor 41 can be computed. An estimated axial force F2 is found by multiplying a gain by the current value $I_b$ of the wheel steering motor 41. The gain is a coefficient commensurate with a vehicle speed V.

The axial force distribution computing unit 83 adds a value obtained by multiplying the ideal axial force F1 by an individually set distribution ratio (gain) and a value obtained by multiplying the estimated axial force F2 by an individually set distribution ratio (gain). Thus, the axial force distribution computing unit 83 computes a final axial force $F_{sp}$ that is used in computing a spring component $T_{sp}{}^*$ for the input torque $T_{in}{}^*$. The distribution ratios are set based on various state quantities that reflect a vehicle behavior, a road surface condition, or a steering status.

The conversion unit 84 computes (converts) a spring component $T_{sp}{}^*$ for the input torque $T_{in}{}^*$ based on the final axial force $F_{sp}$ computed by the axial force distribution computing unit 83. When the spring component $T_{sp}{}^*$ based on the final axial force $F_{sp}$ is incorporated into the input torque $T_{in}{}^*$, a steering reaction force commensurate with the vehicle behavior or the road surface condition can be applied to the steering wheel 11.

The case where a vehicle travels on a curved incline road with a cross slope (a slope in a direction that intersects at right angles with a course of a road) will be discussed.

First, as a comparative example, the case where a vehicle equipped with an electric power steering system as a steering system without a feedback function for a steering angle $\theta_s$ or a feedback function for a pinion angle $\theta_p$ travels on a curved incline road will be described. It is assumed that the steering wheel 11 and the steered wheels 16 are mechanically coupled to each other. In this case, even when the steering wheel 11 is not steered by a driver, the steering position of the steering wheel 11 and the wheel steering position of the steered wheels 16 vary toward the positions commensurate with the inclination of the incline road based on the equilibrium of forces (gravity and centrifugal force) that act on the vehicle. For this reason, when the vehicle is traveling on a curved incline road, a driver does not need to steer the steering wheel 11 by a large amount.

In contrast to this, when a vehicle equipped with the steering system 10 having a feedback function for a steering angle $\theta_s$ and a feedback function for a pinion angle $\theta_p$ travels on an incline road, the following travel status is assumed. Here, the case where the vehicle travels on a first incline road (so-called bank road) that extends in a curved line and a second incline road (so-called cant road) that extends in a straight line will be discussed.

First, the case where a vehicle 90 travels on a first incline road 91a as shown in FIG. 5A will be described. Here, the first incline road 91a curves leftward with respect to the direction of travel of the vehicle 90. The road surface of the first incline road 91a inclines such that the level of the road surface gradually decreases from the outer side of the curve toward the inner side of the curve in a direction along the cross slope.

In this case, unless the driver continues holding the steering wheel 11 by adding a force (steering torque $T_h$) to the steering wheel 11, the vehicle 90 is not able to keep traveling along a course 92 on the first incline road 91a, and goes straight and then goes up on the first incline road 91a toward the outer side as indicated by the alternate long and two short dashes line arrow in FIG. 5A.

This is because of the following reason. That is, an ideal axial force F1 that is computed based on a target pinion angle $\theta_p{}^*$ is an axial force without taking the equilibrium of forces that act on the vehicle into consideration. For this reason, when the vehicle travels on a curved incline road under reaction force control based on an ideal axial force F1, the steering position of the steering wheel 11 and the wheel steering position of the steered wheels 16 do not take positions commensurate with the inclination (cross slope) of the incline road and are returned to neutral positions unless a driver adds a steering torque $T_h$ to the steering wheel 11.

Next, the case where the vehicle 90 travels on a second incline road 91b as shown in FIG. 5B will be described. The road surface of the second incline road 91b inclines such that the level of the road surface gradually decreases from the right side toward the left side with respect to the direction of travel of the vehicle 90.

In this case, unless a driver continues holding the steering wheel 11 by adding a force to the steering wheel 11, the vehicle 90 is not able to travel along a course 92 on the second incline road 91b and gradually goes down toward the lower side of the second incline road 91b as the vehicle 90 travels forward as indicated by the alternate long and two short dashes line arrow B2 in FIG. 5B. This is because the vehicle 90 is placed under the influence of the inclination of the road.

In this way, in any of the case where the vehicle 90 travels on the first incline road 91a and the case where the vehicle 90 travels on the second incline road 91b, a driver needs to continue holding the steering wheel 11 by adding a force commensurate with the inclination of the road surface to drive the vehicle 90 along the course 92. For this reason, a driver may not get an appropriate steering feel.

Therefore, in the present embodiment, when the vehicle travels on an incline road, the following configuration is employed as the vehicle model 72 to set the steering position (steering angle $\theta_s$) of the steering wheel 11 and the wheel steering position (wheel steering angle $\theta_w$) of the steered wheels 16 to the positions commensurate with the inclination of the incline road.

That is, as shown in FIG. 4, the vehicle model 72 includes a correction processing unit 85. The correction processing unit 85 corrects the target pinion angle $\theta_p{}^*$ as a function of the degree of inclination of the incline road. The target pinion angle $\theta_p{}^*$ to be corrected is the value used by the ideal axial force computing unit 81 in computing an ideal axial force F1. Any one of a value that is computed by the steering angle ratio change control unit 62 and a value that is computed by the differential steering control unit 63 may be used as the target pinion angle $\theta_p{}^*$ to be corrected. In the present embodiment, the target pinion angle $\theta_p{}^*$ computed by the steering angle ratio change control unit 62 is used as the target pinion angle $\theta_p{}^*$ to be corrected.

The correction processing unit 85 recognizes the degree of inclination of the incline road based on the component, in a direction along the road surface slope (vehicle width direction), of gravity that acts on the vehicle on the incline road, and corrects the target pinion angle $\theta_p{}^*$ as a function of the recognized degree of inclination.

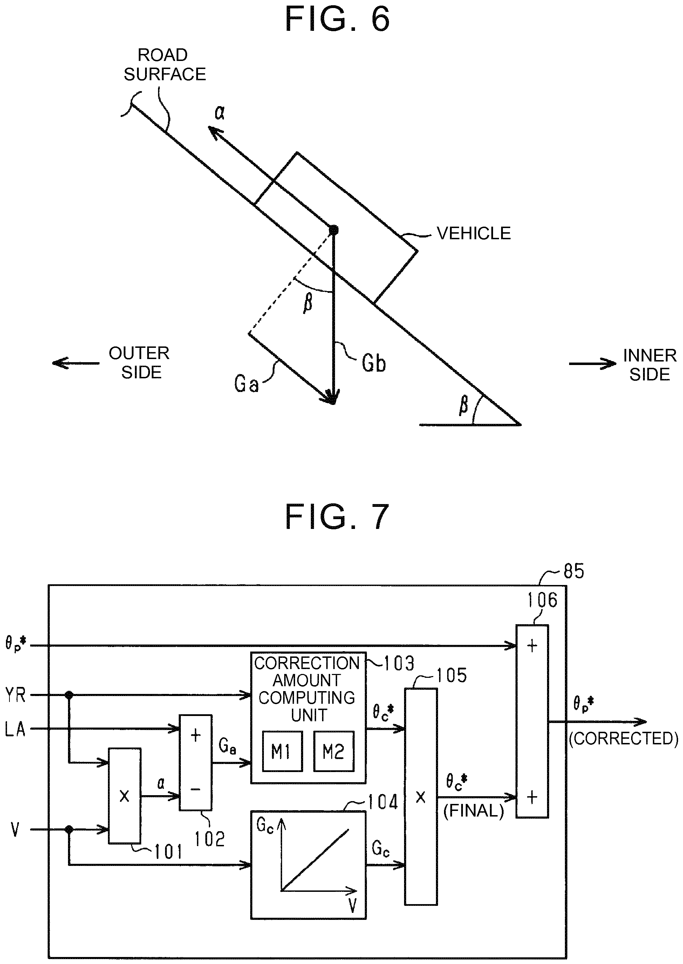

As shown in FIG. 6, a gravity component $G_a$ that is the component, in the direction along the road surface slope, of gravity that acts on the vehicle on the incline road is expressed by the following mathematical expression (2).

$$G_a = G_b \cdot \sin\beta \qquad (2)$$

where $G_b$ is a gravitational acceleration, and $\beta$ is an inclination angle to a horizontal plane of a road surface on the incline road.

According to the mathematical expression (2), it is apparent that the gravity component $G_a$ increases as the inclination angle $\beta$ of the road surface increases and the gravity component $G_a$ reduces as the inclination angle $\beta$ reduces. That is, the gravity component $G_a$ is a value that reflects the degree of inclination of the incline road.

The correction processing unit 85 actually computes a gravity component $G_a$ based on the following mathematical expression (3).

$$G_a = LA - YR \cdot V \qquad (3)$$

where LA is a lateral acceleration, V is a vehicle speed, and YR is a yaw rate.

The mathematical expression (3) is derived based on the fact that the lateral acceleration LA is expressed by the following mathematical expression (4) and the centrifugal acceleration $\alpha$ that acts on the vehicle is expressed by the following mathematical expression (5). That is, the mathematical expression (3) is derived by applying the mathematical expression (5) to the mathematical expression (4) and then solving the mathematical expression (4) with respect to the gravity component $G_a$.

$$LA = \alpha + G_a \qquad (4)$$

$$\alpha = YR \cdot V \qquad (5)$$

where $\alpha$ is a centrifugal acceleration, $G_a$ is a gravity component, in a direction along a road surface slope, acting on the vehicle, YR is a yaw rate, and V is a vehicle speed.

Next, the configuration of the correction processing unit 85 will be described in detail. As shown in FIG. 7, the correction processing unit 85 includes a multiplier 101, a subtracter 102, a correction amount computing unit 103, a gain computing unit 104, a multiplier 105, and an adder 106.

The multiplier 101 computes a centrifugal acceleration $\alpha$ by multiplying a yaw rate YR that is detected by the yaw rate sensor 503 by a vehicle speed V that is detected by the vehicle speed sensor 501. This is based on the mathematical expression (5).

The subtracter 102 computes a gravity component $G_a$ caused by the road surface slope by subtracting the centrifugal acceleration $\alpha$ computed by the multiplier 101 from a lateral acceleration LA that is detected by the lateral acceleration sensor 502. This is based on the mathematical expressions (3) and (5).

The correction amount computing unit 103 computes a correction amount $\theta_c^*$ (correction angle) to be applied to the target pinion angle $\theta_p^*$ based on the gravity component $G_a$ caused by the road surface slope and computed by the subtracter 102 and the yaw rate YR detected by the yaw rate sensor 503.

The gain computing unit 104 computes a gain $G_c$ for the correction amount $\theta_c^*$ based on the vehicle speed V detected by the vehicle speed sensor 501. The gain computing unit 104 computes a gain $G_c$ such that the gain $G_c$ increases as the vehicle speed V increases.

The multiplier 105 computes a final correction amount $\theta_c^*$ by multiplying the correction amount $\theta_c^*$ computed by the correction amount computing unit 103 by the gain $G_c$ computed by the gain computing unit 104.

The adder 106 adds the target pinion angle $\theta_p^*$ and the final correction amount $\theta_c^*$ computed by the multiplier 105 as a process of correcting the target pinion angle $\theta_p^*$ that is used in computing an ideal axial force F1. Thus, the adder 106 computes a final target pinion angle $\theta_p^*$ that is used by the ideal axial force computing unit 81 in computing an ideal axial force F1.

The correction amount computing unit 103 computes a correction amount $\theta_c^*$ by using a first map M1 and a second map M2. The first map M1 and the second map M2 are stored in the storage device (not shown) of the controller 50.

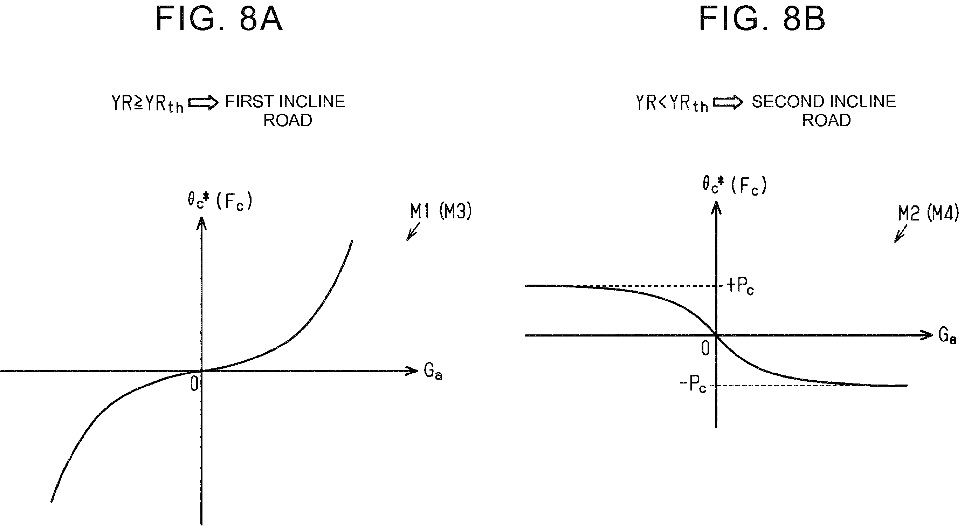

As shown in FIG. 8A, the first map M1 is a map in which the abscissa axis represents a gravity component $G_a$ caused by a road surface slope and the ordinate axis represents a correction amount $\theta_c^*$. The first map M1 defines the relationship between a gravity component $G_a$ caused by a road surface slope and a correction amount $\theta_c^*$. The first map M1 has the following characteristics. That is, when the gravity component $G_a$ is a positive value, the correction amount $\theta_c^*$ is a positive value. When the gravity component $G_a$ is a positive value, the correction amount $\theta_c^*$ makes a positive exponential increase with an increase in the absolute value of the gravity component $G_a$. When the gravity component $G_a$ is a negative value, the correction amount $\theta_c^*$ is a negative value. When the gravity component $G_a$ is a negative value, the correction amount $\theta_c^*$ makes a negative exponential increase with an increase in the absolute value of the gravity component $G_a$.

As shown in FIG. 8B, the second map M2 is also a map in which the abscissa axis represents a gravity component $G_a$ caused by a road surface slope and the ordinate axis represents a correction amount $\theta_c^*$. The second map M2 defines the relationship between a gravity component $G_a$ caused by a road surface slope and a correction amount $\theta_c^*$. The second map M2 has the following characteristics. That is, when the gravity component $G_a$ is a positive value, the correction amount $\theta_c^*$ is a negative value. When the gravity component $G_a$ is a positive value, the correction amount $\theta_c^*$ makes a neg-

ative exponential increase with an increase in the absolute value of the gravity component $G_a$ and finally converges to (tops out at) a negative value $-P_c$. When the gravity component $G_a$ is a negative value, the correction amount $\theta_c^*$ is a positive value. When the gravity component $G_a$ is a negative value, the correction amount $\theta_c^*$ makes a positive exponential increase with an increase in the absolute value of the gravity component $G_a$ and finally converges to a positive value $+P_c$.

The correction amount computing unit 103 uses the first map M1 shown in FIG. 8A when the yaw rate YR is greater than or equal to a threshold $YR_{th}$. The correction amount computing unit 103 uses the second map M2 shown in FIG. 8B when the yaw rate YR is less than the threshold $YR_{th}$. The threshold $YR_{th}$ is set to determine whether the vehicle is traveling on the curved first incline road 91a or the vehicle is traveling on the straight second incline road 91b. That is, the yaw rate YR is a rotation angular velocity around a vertical axis passing through the barycenter of the vehicle. For this reason, the yaw rate YR is basically greater when the vehicle travels on a curved road where the vehicle turns than when the vehicle travels on a straight road where the vehicle does not turn. Therefore, whether the vehicle is traveling on the curved first incline road 91a or the vehicle is traveling on the straight second incline road 91b is determined based on the yaw rate YR. The threshold $YR_{th}$ is, for example, set to a value less than the yaw rate YR when the vehicle is traveling on the curved first incline road 91a and greater than the yaw rate YR when the vehicle is traveling on the straight second incline road 91b.

Next, the operation of the correction processing unit 85 for the shape of a road will be described. Here, the case where the vehicle travels on a flat road, the case where the vehicle travels on the first incline road 91a, and the case where the vehicle travels on the second incline road 91b will be sequentially described.

When the vehicle travels on a flat road with no cross slope, the gravity component $G_a$ caused by the road surface slope is zero. Therefore, the correction amount $\theta_c^*$ that is computed by the correction amount computing unit 103 is zero. That is, the uncorrected target pinion angle $\theta_p^*$ is directly a final target pinion angle $\theta_p^*$ that is used in computing an ideal axial force F1. In this case, the relationship between a target pinion angle $\theta_p^*$ and an ideal axial force F1 is similar to the relationship when the configuration that the vehicle model 72 includes no correction processing unit 85. Specifically, the details are as follows.

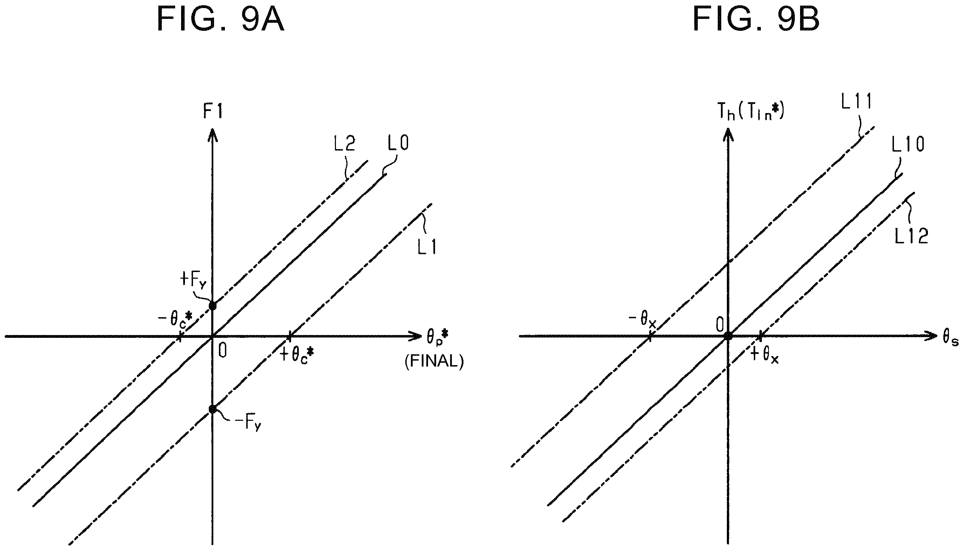

As shown by the continuous line in the graph of FIG. 9A, when the vehicle travels on a flat road, the relationship between a target pinion angle $\theta_p^*$ and an ideal axial force F1 is represented by a characteristic line L0. The characteristic line L0 is a straight line passing through the origin. That is, when the vehicle travels on a flat road, the ideal axial force F1 is also zero (neutral value corresponding to a state where the vehicle travels straight ahead) when the uncorrected target pinion angle

$\theta_p^*$ is zero degree (neutral angle) corresponding to a wheel steering neutral position at the time when the vehicle is traveling straight ahead. As the target pinion angle $\theta_p^*$ increases in a positive direction with reference to zero degrees, the ideal axial force F1 linearly increases in a positive direction. As the target pinion angle $\theta_p^*$ increases in a negative direction with reference to zero degrees, the ideal axial force F1 linearly increases in a negative direction. The positive target pinion angle $\theta_p^*$ corresponds to a rightward wheel steering direction, and the negative target pinion angle $\theta_p^*$ corresponds to a leftward wheel steering direction.

As shown by the continuous line in the graph of FIG. 9B, when the vehicle travels on a flat road, the relationship between a steering angle $\theta_s$ and a steering torque $T_h$ (input torque $T_{in}^*$) is represented by a characteristic line L10. That is, when the steering torque $T_h$ is zero, the target steering reaction force $T_1^*$, by extension, the input torque $T_{in}^*$, is zero, so the target steering angle $\theta^*$, by extension, the target pinion angle $\theta_p^*$, is also zero. Therefore, through feedback control over the steering angle $\theta_s$ to cause an actual steering angle $\theta_s$ to follow the target steering angle $\theta^*$, the steering angle $\theta_s$ becomes zero degrees corresponding to the steering neutral position at the time when the vehicle travels straight ahead. In addition, through feedback control over the pinion angle $\theta_p$ to cause an actual pinion angle $\theta_p$ to follow the target pinion angle $\theta_p^*$, the wheel steering angle $\theta_w$ of the steered wheels 16 becomes zero degrees corresponding to the wheel steering neutral position at the time when the vehicle travels straight ahead. The positive target steering angle $\theta^*$ (steering angle $\theta_s$) corresponds to a rightward steering direction, and the negative target steering angle $\theta^*$ (steering angle $\theta_s$) corresponds to a leftward steering direction.

Next, the case where the vehicle travels on the curved first incline road 91a will be described. As shown in FIG. 5A, the first incline road 91a curves leftward with respect to the direction of travel of the vehicle and inclines such that the level of the road gradually decreases from the outer side of the curve toward the inner side of the curve in a direction along the cross slope.

In this case, a positive correction amount $\theta_c^*$ commensurate with a gravity component $G_a$ is computed in accordance with the first map M1. The correction amount $\theta_c^*$ is added to the uncorrected target pinion angle $\theta_p^*$. Thus, the final target pinion angle $\theta_p^*$ that is used in computing an ideal axial force F1 is computed. Therefore, the final target pinion angle $\theta_p^*$ that is used in computing an ideal axial force F1 increases by the correction amount $\theta_c^*$ as compared to the uncorrected target pinion angle $\theta_p^*$.

As shown by the alternate long and short dash line in the graph of FIG. 9A, when the vehicle travels on the left-hand curve first incline road 91a, the relationship between a target pinion angle $\theta_p^*$ and an ideal axial force F1 is expressed by a characteristic line L1. The characteristic line L1 may be regarded as the line obtained by shifting (parallel-shifting) the characteristic line L0 in the positive direction by the correction amount $\theta_c^*$ along the abscissa axis. That is, when the vehicle travels on the left-hand curve first incline road 91a, the target pinion angle $\theta_p^*$ at which the ideal axial force F1 is zero (hereinafter, referred to as the zero point of the ideal axial force F1) is an angle "$+\theta_c^*$" shifted in the positive direction by the correction amount $\theta_c^*$ from the zero point of the ideal axial force F1 when the vehicle travels on a flat road. Therefore, when the vehicle travels on the left-hand curve first incline road 91a, the ideal axial force F1 is not zero and is an ideal axial force "$-F_y$" when the target pinion angle $\theta_p^*$ is zero.

When the vehicle travels on the left-hand curve first incline road 91a, a final target pinion angle $\theta_p^*$ that is used in computing an ideal axial force F1 is increased by the correction amount $\theta_c^*$ computed as a function of the gravity component $G_a$ in accordance with the first map M1. Therefore, a final axial force $F_{sp}$ that is computed by the axial force distribution computing unit 83, by extension, a spring component $T_{sp}^*$ that is computed by the conversion unit 84, also increases as a function of the amount of increase in target pinion angle $\theta_p^*$. Thus, a final input torque $T_{in}^*$ that is computed by the subtracter 74 (see FIG. 3) reduces as a function of the amount of increase in spring component $T_{sp}^*$, and a target steering angle $\theta^*$ reduces with the reduction in input torque $T_{in}^*$. Therefore, a steering angle $\theta_s$ that is achieved through feedback control over the steering angle $\theta_s$ to cause an actual steering angle $\theta_s$ to follow the target steering angle $\theta^*$ reduces as a function of the amount of reduction in target steering angle $\theta^*$.

As shown by the alternate long and short dash line in FIG. 9B, when the vehicle travels on the left-hand curve first incline road 91a, the relationship between a steering angle $\theta_s$ and a steering torque $T_h$ (input torque $T_{in}^*$) is represented by a characteristic line L11.

The characteristic line L11 may be regarded as a line obtained by shifting (parallel-shifting) the characteristic line L10 in the negative direction by an amount commensurate with the amount of reduction in target steering angle $\theta^*$ based on the correction amount $\theta_c^*$ along the abscissa axis. That is, when the vehicle travels on the left-hand curve first incline road 91a, the steering angle $\theta_s$ at which the steering torque $T_h$ is zero (hereinafter, the zero point of the steering torque $T_h$), is shifted in the negative direction by an amount commensurate with the amount of reduction in target steering angle $\theta^*$ from the zero point of the steering torque $T_h$ when the vehicle travels on a flat road.

Therefore, as represented by the characteristic line L11 in FIG. 9B, when the steering torque $T_h$ is zero, an actual steering angle $\theta_s$ that is achieved through feedback control over the steering angle $\theta_s$ is a negative angle "$-\theta_x$" commensurate with the amount of reduction in target steering angle $\theta^*$ with reference to the steering angle $\theta_s$ (= 0°) at a steering torque $T_h$ of zero when the vehicle travels on a flat road. The angle "$-\theta_x$" is a value commen-

surate with the ideal axial force "-$F_y$" that is the ideal axial force F1 when the target pinion angle $\theta_p$* is zero. This is based on the fact that, when the steering torque $T_h$ (input torque $T_{in}$*) is zero, a target steering angle $\theta$* commensurate with the spring component $T_{sp}$* based on the ideal axial force "-$F_y$" is computed.

The positive steering angle $\theta_s$ corresponds to the rightward steering direction, and the negative steering angle $\theta_s$ corresponds to the leftward steering direction. The angle "-$\theta_x$" varies with a gravity component $G_a$ caused by the road surface slope. This is because the correction amount $\theta_c$* varies with a gravity component $G_a$ caused by a road surface slope and, by extension, the amount of shift of the characteristic line L11 from the characteristic line L10 varies with the correction amount $\theta_c$*. The positive gravity component $G_a$ is associated with the left-hand curve first incline road 91a with a cross slope that inclines such that the level gradually increases toward the right side with respect to the direction of travel of the vehicle. The negative gravity component $G_a$ is associated with a right-hand curve first incline road 91a with a cross slope that inclines such that the level gradually increases toward the left side with respect to the direction of travel of the vehicle.

Therefore, when the vehicle is traveling on the left-hand curve first incline road 91a, the steering wheel 11 is held at a position rotated in the leftward steering direction by the steering angle $\theta_s$ (= -$\theta_x$) with reference to the steering neutral position even with no steering torque $T_h$ added to the steering wheel 11. The steered wheels 16 are held at a position steered in the leftward wheel steering direction by the wheel steering angle $\theta_w$ commensurate with the target pinion angle $\theta_p$* based on the target steering angle $\theta$* corresponding to the angle "-$\theta_x$" with reference to the wheel steering neutral position. Since the left-hand curve first incline road 91a curves leftward with respect to the direction of travel of the vehicle, the leftward steering direction of the steering wheel 11 and the leftward wheel steering direction of the steered wheels 16 correspond to the direction in which the road surface slope on the left-hand curve first incline road 91a goes down. Therefore, as indicated by the continuous line arrow C1 in FIG. 5A, when a driver does not operate the steering wheel 11, the vehicle 90 travels along the curve of the course 92 on the left-hand curve first incline road 91a.

Next, the case where the vehicle travels on the first incline road 91a of which the inclination of a road surface is opposite to that of the left-hand curve first incline road 91a shown in FIG. 5A will be described. This first incline road 91a curves rightward with respect to the direction of travel of the vehicle and inclines such that the level of the road gradually decrease from the outer side of the curve toward the inner side of the curve in a direction along the cross slope. The gravity component $G_a$ when the vehicle is traveling on the right-hand curve first incline road 91a is reverse in sign to the gravity component $G_a$ when the vehicle is traveling on the left-hand curve first incline road 91a shown in FIG. 5A.

In this case, a negative correction amount $\theta_c$* (= -|+$\theta_c$*|) commensurate with a negative gravity component $G_a$ is computed in accordance with the first map M1 shown in FIG. 8A. Therefore, when the vehicle travels on the right-hand curve first incline road 91a, a characteristic line (not shown) that represents the relationship between a target pinion angle $\theta_p$* and an ideal axial force F1 is obtained by shifting the characteristic line L0 shown in FIG. 9A in the negative direction (direction away from the characteristic line L1 shown in FIG. 9A) by the absolute value of the correction amount $\theta_c$* along the abscissa axis. Therefore, when the vehicle travels on the right-hand curve first incline road 91a, the ideal axial force F1 is not zero and is a positive value (= |-$F_y$|) when the target pinion angle $\theta_p$* is zero.

When the vehicle travels on the right-hand curve first incline road 91a, a final target pinion angle $\theta_p$* that is used in computing an ideal axial force F1 is reduced by the correction amount $\theta_c$* computed as a function of the gravity component $G_a$. Therefore, a final axial force $F_{sp}$ that is computed by the axial force distribution computing unit 83, by extension, a spring component $T_{sp}$* that is computed by the conversion unit 84, also reduces as a function of the amount of reduction in target pinion angle $\theta_p$*. Thus, a final input torque $T_{in}$* that is computed by the subtracter 74 (see FIG. 3) increases as a function of the amount of reduction in spring component $T_{sp}$*, and the target steering angle $\theta$* increases with the increase in input torque $T_{in}$*. Therefore, a steering angle $\theta_s$ that is achieved through feedback control over the steering angle $\theta_s$ to cause an actual steering angle $\theta_s$ to follow the target steering angle $\theta$* increases as a function of the amount of increase in target steering angle $\theta$*.

When the vehicle travels on the right-hand curve first incline road 91a, a characteristic line (not shown) that represents the relationship between a steering angle $\theta_s$ and a steering torque $T_h$ (input torque $T_{in}$*) is obtained by shifting the characteristic line L10 shown in FIG. 9B in the positive direction (direction away from the characteristic line L11 shown in FIG. 9B) by the amount commensurate with the amount of increase in target steering angle $\theta$* based on the correction amount $\theta_c$* along the abscissa axis. That is, when the vehicle travels on the right-hand curve first incline road 91a, the steering angle $\theta_s$ at which the steering torque $T_h$ is zero (hereinafter, referred to as the zero point of the steering torque $T_h$) is shifted in the positive direction by the amount commensurate with the amount of increase in target steering angle $\theta$* from the zero point of the steering torque $T_h$ when the vehicle travels on a flat road. Therefore, when the steering torque $T_h$ is zero, an actual steering angle $\theta_s$ that is achieved through feedback control over the steering angle $\theta_s$ is a positive angle (= |-$\theta_x$|) commensurate with the amount of increase in target steering angle $\theta$* with reference to the steering angle $\theta_s$ (= 0°) at a steering torque $T_h$ of zero when the vehicle travels on a flat road.

Therefore, when the vehicle is traveling on the right-hand curve first incline road 91a, the steering wheel 11 is held at a position rotated in the rightward steering direction by the positive steering angle $\theta_s$ (= $|-\theta_x|$) with reference to the steering neutral position even with no steering torque $T_h$ added to the steering wheel 11. The steered wheels 16 are held at a position steered in the rightward wheel steering direction by the wheel steering angle $\theta_w$ commensurate with the target pinion angle $\theta_p^*$ based on the target steering angle $\theta^*$ corresponding to the positive angle (= $|-\theta_x|$) with reference to the wheel steering neutral position. Since the vehicle is traveling on the right-hand curve first incline road 91a, the rightward steering direction of the steering wheel 11 and the rightward wheel steering direction of the steered wheels 16 correspond to a direction in which the road surface slope on the right-hand curve first incline road 91a goes down. Therefore, even when a driver does not operate the steering wheel 11, the vehicle 90 travels along the curve of the course 92 on the right-hand curve first incline road 91a.

Next, the case where the vehicle travels on the straight second incline road 91b will be described. The road surface of the second incline road 91b inclines such that the level of the road surface gradually decreases from the right side toward the left side with respect to the direction of travel of the vehicle (the road surface inclines to the left) as shown in FIG. 5B.

In this case, a negative correction amount $\theta_c^*$ commensurate with a gravity component $G_a$ is computed in accordance with the second map M2. The correction amount $\theta_c^*$ is added to the uncorrected target pinion angle $\theta_p^*$. Thus, the final target pinion angle $\theta_p^*$ that is used in computing an ideal axial force F1 is computed. Therefore, the final target pinion angle $\theta_p^*$ that is used in computing an ideal axial force F1 reduces by the correction amount $\theta_c^*$ as compared to the uncorrected target pinion angle $\theta_p^*$.

As shown by the alternate long and two short dashes line in the graph of FIG. 9A, when the vehicle travels on the leftward-inclined second incline road 91b, the relationship between a target pinion angle $\theta_p^*$ and an ideal axial force F1 is represented by a characteristic line L2. The characteristic line L2 may be regarded as the line obtained by shifting (parallel-shifting) the characteristic line L0 in the negative direction by the correction amount $\theta_c^*$ along the abscissa axis. That is, when the vehicle travels on the leftward-inclined second incline road 91b, the zero point of the ideal axial force F1 is an angle "$-\theta_c^*$" shifted in the negative direction by the absolute value of the correction amount $\theta_c^*$ from the zero point of the ideal axial force F1 ($\theta_p^* = 0$) when the vehicle travels on a flat road. Therefore, when the vehicle travels on the leftward-inclined second incline road 91b, the ideal axial force F1 is not zero and is an ideal axial force "$+F_y$" when the target pinion angle $\theta_p^*$ is zero.

When the vehicle travels on the leftward-inclined second incline road 91b, a final target pinion angle $\theta_p^*$ that is used in computing an ideal axial force F1 is reduced by the negative correction amount $\theta_c^*$ computed as a function of the gravity component $G_a$ in accordance with the second map M2. Therefore, a final axial force $F_{sp}$ that is computed by the axial force distribution computing unit 83, by extension, a spring component $T_{sp}^*$ that is computed by the conversion unit 84, also reduces as a function of the amount of reduction in target pinion angle $\theta_p^*$. Thus, a final input torque $T_{in}^*$ that is computed by the subtracter 74 (see FIG. 3) increases as a function of the amount of reduction in spring component $T_{sp}^*$, and the target steering angle $\theta^*$ increases with the increase in input torque $T_{in}^*$. Therefore, a steering angle $\theta_s$ that is achieved through feedback control over the steering angle $\theta_s$ to cause an actual steering angle $\theta_s$ to follow the target steering angle $\theta^*$ increases as a function of the amount of increase in target steering angle $\theta^*$.

As shown by the alternate long and two short dashes line in FIG. 9B, when the vehicle travels on the leftward-inclined second incline road 91b, the relationship between a steering angle $\theta_s$ and a steering torque $T_h$ (input torque $T_{in}^*$) is represented by a characteristic line L12.

The characteristic line L12 may be regarded as the line obtained by shifting (parallel-shifting) the characteristic line L10 in the positive direction by the amount commensurate with the amount of increase in target steering angle $\theta^*$ based on the correction amount $\theta_c^*$ along the abscissa axis. That is, when the vehicle travels on the leftward-inclined second incline road 91b, the steering angle $\theta_s$ at which the steering torque $T_h$ is zero (hereinafter, referred to as the zero point of the steering torque $T_h$) is shifted in the positive direction by the amount commensurate with the amount of increase in target steering angle $\theta^*$ from the zero point of the steering torque $T_h$ when the vehicle travels on a flat road.

Therefore, as represented by the characteristic line L12 in FIG. 9B, when the steering torque $T_h$ is zero, an actual steering angle $\theta_s$ that is achieved through feedback control over the steering angle $\theta_s$ is a positive angle "$+\theta_x$" commensurate with the amount of increase in target steering angle $\theta^*$ with reference to the steering angle $\theta_s$ (= 0°) at a steering torque $T_h$ of zero when the vehicle travels on a flat road. The angle "$+\theta_x$" is a value commensurate with the ideal axial force "$+F_y$" that is the ideal axial force F1 when the target pinion angle $\theta_p^*$ is zero. This is based on the fact that, when the steering torque $T_h$ (input torque $T_{in}^*$) is zero, a target steering angle $\theta^*$ commensurate with the spring component $T_{sp}^*$ based on the ideal axial force "$+F_y$" is computed.

Therefore, when the vehicle is traveling on the leftward-inclined second incline road 91b, the steering wheel 11 is held at a position rotated in the rightward steering direction by the steering angle $\theta_s$ (= $+\theta_x$) with reference to the steering neutral position even with no steering torque $T_h$ added to the steering wheel 11. The steered wheels 16 are held at a position steered in the rightward wheel steering direction by the wheel steering

angle $\theta_w$ commensurate with the target pinion angle $\theta_p^*$ based on the target steering angle $\theta^*$ corresponding to the angle "$+\theta_x$" with reference to the wheel steering neutral position. The rightward steering direction of the steering wheel 11 and the rightward wheel steering direction of the steered wheels 16 correspond to the direction in which the road surface slope goes up on the leftward-inclined second incline road 91b. Therefore, as shown by the continuous line arrow C2 in FIG. 5B, even when a driver does not operate the steering wheel 11, the vehicle 90 does not naturally turn in the direction to go down on the road surface of the leftward-inclined second incline road 91b, and travels straight ahead along the course 92.

Next, the case where the vehicle travels on the second incline road 91b of which the inclination of a road surface is opposite to that of the leftward-inclined second incline road 91b shown in FIG. 5B will be described. Here, the road surface of the second incline road 91b inclines such that the level of the road surface gradually decreases from the left side toward the right side with respect to the direction of travel of the vehicle (the road surface inclines to the right). The gravity component $G_a$ when the vehicle is traveling on the rightward-inclined second incline road 91b is reverse in sign to the gravity component $G_a$ when the vehicle is traveling on the leftward-inclined second incline road 91b as shown in FIG. 5B.

In this case, a positive correction amount $\theta_c^*$ commensurate with a gravity component $G_a$ is computed in accordance with the second map M2 shown in FIG. 8B. Therefore, when the vehicle travels on the rightward-inclined second incline road 91b, a characteristic line (not shown) that represents the relationship between a target pinion angle $\theta_p^*$ and an ideal axial force F1 is obtained by shifting the characteristic line L0 shown in FIG. 9A in the positive direction (direction away from the characteristic line L2 shown in FIG. 9A) by the absolute value of the correction amount $\theta_c^*$ along the abscissa axis. Therefore, when the vehicle travels on the rightward-inclined second incline road 91b, the ideal axial force F1 is not zero and is a negative value (= $-|+F_y|$) when the target pinion angle $\theta_p^*$ is zero.

When the vehicle travels on the rightward-inclined second incline road 91b, a final target pinion angle $\theta_p^*$ that is used in computing an ideal axial force F1 is increased by the positive correction amount $\theta_c^*$ computed as a function of the gravity component $G_a$. Therefore, a final axial force $F_{sp}$ that is computed by the axial force distribution computing unit 83, by extension, a spring component $T_{sp}^*$ that is computed by the conversion unit 84, also increases as a function of the amount of increase in target pinion angle $\theta_p^*$. Thus, a final input torque $T_{in}^*$ that is computed by the subtracter 74 (see FIG. 3) reduces as a function of the amount of increase in spring component $T_{sp}^*$, and a target steering angle $\theta^*$ reduces with the reduction in input torque $T_{in}^*$. Therefore, a steering angle $\theta_s$ that is achieved through feedback control over the steering angle $\theta_s$ to cause an actual steering angle $\theta_s$ to follow the target steering angle $\theta^*$ reduces as a function of the amount of reduction in target steering angle $\theta^*$.

When the vehicle travels on the rightward-inclined second incline road 91b, a characteristic line (not shown) that represents the relationship between a steering angle $\theta_s$ and a steering torque $T_h$ (input torque $T_{in}^*$) is obtained by shifting the characteristic line L10 shown in FIG. 9B in the negative direction (direction away from the characteristic line L12) by the amount commensurate with the target steering angle $\theta^*$ based on the correction amount $\theta_c^*$ along the abscissa axis. That is, when the vehicle travels on the rightward-inclined second incline road 91b, the steering angle $\theta_s$ at which the steering torque $T_h$ is zero (hereinafter, referred to as the zero point of the steering torque $T_h$) is shifted in the negative direction by the amount commensurate with the amount of reduction in target steering angle $\theta^*$ from the zero point of the steering torque $T_h$ in the case where the vehicle travels on a flat road. Therefore, when the steering torque $T_h$ is zero, an actual steering angle $\theta_s$ that is achieved through feedback control over the steering angle $\theta_s$ is a negative angle (= $-|+0_x|$) commensurate with the amount of reduction in target steering angle $\theta^*$ with reference to the steering angle $\theta_s$ (= 0°) at a steering torque $T_h$ of zero when the vehicle travels on a flat road.

Therefore, when the vehicle is traveling on the rightward-inclined second incline road 91b,, the steering wheel 11 is held at a position rotated in the leftward steering direction by the steering angle $\theta_s$ (= $-|+\theta_x|$) with reference to the steering neutral position even with no steering torque $T_h$ added to the steering wheel 11. The steered wheels 16 are held at a position steered in the leftward wheel steering direction by the wheel steering angle $\theta_w$ commensurate with the target pinion angle $\theta_p^*$ based on the target steering angle $\theta^*$ corresponding to the negative angle (= $-|+\theta_x|$) with reference to the wheel steering neutral position. The leftward steering direction of the steering wheel 11 and the leftward wheel steering direction of the steered wheels 16 correspond to the direction in which the road surface slope goes up on the rightward-inclined second incline road 91b. Therefore, even when a driver does not operate the steering wheel 11, the vehicle 90 does not naturally turn in the direction to go down on the road surface of the rightward-inclined second incline road 91b, and travels straight ahead along the course 92.

According to the first embodiment, the following advantageous effects are obtained.

When the vehicle is traveling on the curved first incline road 91a, the controller 50 executes first control for the first incline road 91a. That is, a final target pinion angle $\theta_p^*$ (absolute value) that is used in computing an ideal axial force F1 is increased by the correction amount $\theta_c^*$ by the correction processing unit 85. Thus, the steering angle $\theta_s$ (target steering angle $\theta^*$) at a steering torque $T_h$ of zero is shifted by the angle commensurate with the target steering angle $\theta^*$ based on the correction amount $\theta_c^*$ in the direction in which the road surface of the first incline road 91a goes down with respect to the neutral angle "zero degrees" corresponding to the steering neutral position of the steering wheel 11. In addition, the target pinion angle $\theta_p^*$ based on the target steering angle $\theta^*$ commensurate with the correction amount $\theta_c^*$ is also shifted by the angle commensurate with the target steering angle $\theta^*$ based on the correction amount $\theta_c^*$ in the direction in which the road surface of the first incline road 91a goes down with reference to the neutral angle "zero degrees" corresponding to the wheel steering neutral position of the steered wheels 16. Therefore, when the vehicle travels on the first incline road 91a, the steering angle $\theta_s$ and the wheel steering angle $\theta_w$ commensurate with the inclination of the first incline road 91a are achieved even with no steering torque $T_h$ added to the steering wheel 11, so the vehicle travels while turning along the course 92 of the first incline road 91a. Hence, when the vehicle travels on the first incline road 91a, an appropriate steering feel is achieved.

When the vehicle is traveling on the straight second incline road 91b, the controller 50 executes second control for the second incline road 91b. That is, a final target pinion angle $\theta_p^*$ (absolute value) that is used in computing an ideal axial force F1 is reduced by the correction amount $\theta_c^*$ by the correction processing unit 85. Thus, the steering angle $\theta_s$ (target steering angle $\theta^*$) at a steering torque $T_h$ of zero is shifted by the angle commensurate with the target steering angle $\theta^*$ based on the correction amount $\theta_c^*$ in the direction in which the road surface of the second incline road 91b goes up with reference to the neutral angle "zero degrees" corresponding to the steering neutral position of the steering wheel 11. In addition, the target pinion angle $\theta_p^*$ based on the target steering angle $\theta^*$ commensurate with the correction amount $\theta_c^*$ is also shifted by the angle commensurate with the target steering angle $\theta^*$ based on the correction amount $\theta_c^*$ in the direction in which the road surface of the second incline road 91b goes up with reference to the neutral angle "zero degrees" corresponding to the wheel steering neutral position of the steered wheels 16. Therefore, when the vehicle travels on the second incline road 91b, the steering angle $\theta_s$ and the wheel steering angle $\theta_w$ commensurate with the inclination of the second incline road 91b are achieved even with no steering torque $T_h$ added to the steering wheel 11, so the vehicle travels straight ahead along the course 92 of the second incline road 91b. Hence, even when the vehicle travels on the second incline road 91b, an appropriate steering feel is achieved.

The first incline road 91a is a road extending in a curved line. The second incline road 91b is a road extending in a straight line. Therefore, the yaw rate YR when the vehicle travels on the first incline road 91a is greater than the yaw rate YR when the vehicle travels on the second incline road 91b. By focusing on the difference in yaw rate YR, whether the vehicle is traveling on the first incline road 91a or the vehicle is traveling on the second incline road 91b is determined. The controller 50 executes first control for the first incline road 91a when the yaw rate YR is greater than or equal to the threshold $YR_{th}$, and executes second control for the second incline road 91b when the yaw rate YR is less than the threshold $YR_{th}$.

By adding a correction amount $\theta_c^*$ commensurate with a gravity component $G_a$ in the direction along the road surface slope to the target pinion angle $\theta_p^*$ that is used in computing an ideal axial force F1, the target steering angle $\theta^*$ at a steering torque $T_h$ of zero is changed by the angle commensurate with the correction amount $\theta_c^*$ with reference to the neutral angle (zero degrees) corresponding to the steering neutral position. Accordingly, the target pinion angle $\theta_p^*$ at a steering torque $T_h$ of zero also changes by the angle commensurate with the correction amount $\theta_c^*$ with reference to the neutral angle (zero degrees) corresponding to the wheel steering neutral position. This is because a target pinion angle $\theta_p^*$ is computed based on a target steering angle $\theta^*$. The correction amount $\theta_c^*$ and the target pinion angle $\theta_p^*$ have the same unit of measure. For this reason, a designer can easily and sensuously set a target steering angle $\theta^*$ for the first incline road 91a and the second incline road 91b by adjusting the relationship between a gravity component $G_a$ and a correction amount $\theta_c^*$ in each of the first map M1 and the second map M2. By adjusting the relationship between a gravity component $G_a$ and a correction amount $\theta_c^*$ in each of the first map M1 and the second map M2, a desired steering feel is achieved at the time when the vehicle travels on the first incline road 91a or the second incline road 91b.

Generally, a gravity component $G_a$ in the direction along a road surface slope is computed based on detected results of the vehicle speed sensor 501, lateral acceleration sensor 502, and yaw rate sensor 503 mounted on a vehicle. A gravity component $G_a$ increases as the inclination angle $\beta$ of an incline road on which the vehicle travels increases. Therefore, without adding a new component to a vehicle, whether the vehicle is traveling on an incline road or a flat road can be determined based on a gravity component $G_a$.

Next, a second embodiment of the steering control apparatus will be described. The present embodiment basically has similar components to those of the first embodiment shown in FIG. 1 to FIG. 4. The present embodiment differs from the first embodiment in that a configuration for shifting to correct the zero point of an ideal axial force F1 is not provided upstream of the ideal axial force computing unit 81 and is provided in the ideal axial force computing unit 81.

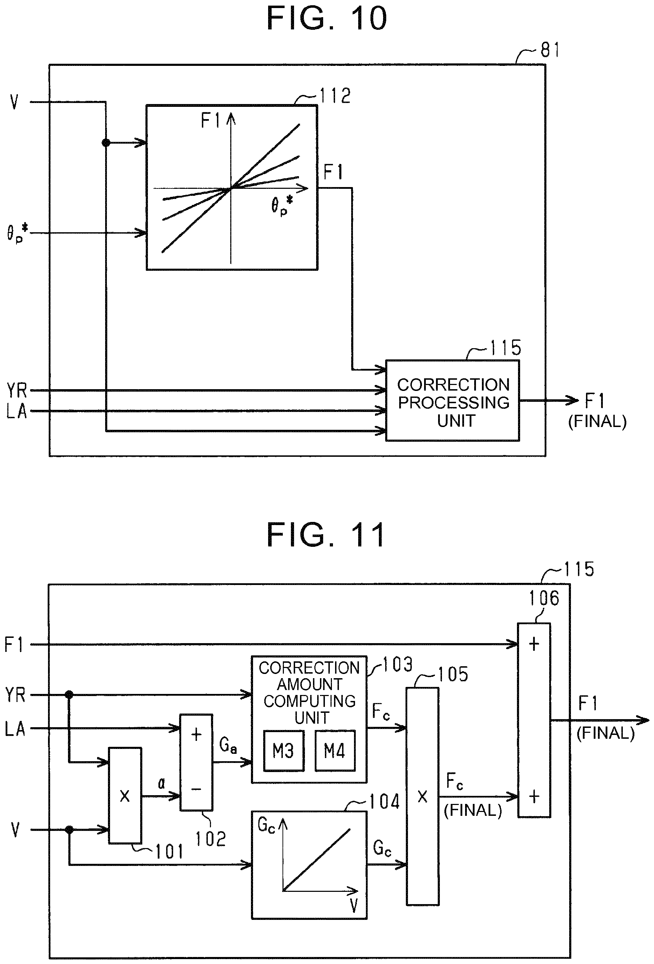

As shown in FIG. 10, the ideal axial force computing unit 81 includes an axial force computing unit 112 and a correction processing unit 115. The axial force computing unit 112 computes an ideal axial force F1 by using a map that defines the relationship between a target pinion angle $\theta_p^*$ and an ideal axial force F1 as a function of a vehicle speed V. The absolute value of the ideal axial force F1 is set so as to increase as the absolute value of the target pinion angle $\theta_p^*$ increases. When the target pinion angle $\theta_p^*$ is a positive value, the ideal axial force F1 is a positive value. When the target pinion angle $\theta_p^*$ is a negative value, the ideal axial force F1 is a negative value.

The correction processing unit 115 computes a final ideal axial force F1 by correcting the signed ideal axial force F1 computed by the axial force computing unit 112 as a function of the degree of inclination of the incline road. As shown in FIG. 11, the correction processing unit 115 basically has similar components 101, 102, 103, 104, 105, 106 to those of the correction processing unit 85 of the first embodiment shown in FIG. 7. The correction processing unit 115 differs from the correction processing unit 85 in the following point.

The correction amount computing unit 103 computes a correction amount $F_c$ (correction axial force) commensurate with a gravity component $G_a$ by using a third map M3 and a fourth map M4. The correction amount $F_c$ is intended for the signed ideal axial force F1 computed by the axial force computing unit 112. As indicated by the signs inside the parentheses in FIG. 8A and FIG. 8B, the third map M3 and the fourth map M4 each are a map in which the abscissa axis represents a gravity component $G_a$ and the ordinate axis represents a correction amount $F_c$, and each define the relationship between a gravity component $G_a$ and a correction amount $F_c$. The third map M3 has similar characteristics (the tendency of a change in correction amount $F_c$ to a gravity component $G_a$) to those of the first map M1 shown in FIG. 8A. The fourth map M4 has similar characteristic s to those of the second map M2 shown in FIG. 8B.

The multiplier 105 computes a final correction amount $F_c$ by multiplying the correction amount $F_c$ computed by the correction amount computing unit 103 by the gain $G_c$ computed by the gain computing unit 104.

The adder 106 computes a final ideal axial force F1 by adding the signed ideal axial force F1 computed by the axial force computing unit 112 to the final correction amount $F_c$ computed by the multiplier 105 as a process of correcting the signed ideal axial force F1.

Next, the operation of the correction processing unit 115 will be described. When the vehicle travels on the left-hand curve first incline road 91a shown in FIG. 5A, a final axial force $F_{sp}$ that is computed by the axial force distribution computing unit 83, by extension, a spring component $T_{sp}^*$ that is computed by the conversion unit 84, increases as a function of the correction amount $F_c$ as in the case of the first embodiment in which a target pinion angle $\theta_p^*$ that is used in computing an ideal axial force F1 is increased. Thus, a final input torque $T_{in}^*$ that is computed by the subtracter 74 (see FIG. 3) reduces as a function of the amount of increase in spring component $T_{sp}^*$, and a target steering angle $\theta^*$ reduces with the reduction in input torque $T_{in}^*$. Therefore, a steering angle $\theta_s$ that is achieved through feedback control over the steering angle $\theta_s$ to cause an actual steering angle $\theta_s$ to follow the target steering angle $\theta^*$ reduces as

a function of the amount of reduction in target steering angle $\theta^*$. Thus, when the vehicle travels on the first incline road 91a, characteristics represented by the alternate long and short dash characteristic line L11 in FIG. 9B are obtained for the relationship between a steering angle $\theta_s$ and a steering torque $T_h$ (input torque $T_{in}^*$).

When the vehicle travels on the right-hand curve first incline road 91a, a final axial force $F_{sp}$ that is computed by the axial force distribution computing unit 83, by extension, a spring component $T_{sp}^*$ that is computed by the conversion unit 84 reduces as a function of the correction amount $F_c$, as in the case of the first embodiment in which a target pinion angle $\theta_p^*$ that is used in computing an ideal axial force F1 is reduced. Thus, a final input torque $T_{in}^*$ that is computed by the subtracter 74 (see FIG. 3) increases as a function of the amount of reduction in spring component $T_{sp}^*$, and the target steering angle $\theta^*$ increases with the increase in input torque $T_{in}^*$. Therefore, a steering angle $\theta_s$ that is achieved through feedback control over the steering angle $\theta_s$ to cause an actual steering angle $\theta_s$ to follow the target steering angle $\theta^*$ increases as a function of the amount of increase in target steering angle $\theta^*$. Thus, when the vehicle travels on the right-hand curve first incline road 91a, characteristics represented by the characteristic line (not shown) obtained by shifting the characteristic line L10 shown in FIG. 9B in the positive direction (direction away from the characteristic line L11) by the amount commensurate with the amount of increase in target steering angle $\theta^*$ based on the correction amount $\theta_c^*$ along the abscissa axis are obtained for the relationship between a steering angle $\theta_s$ and a steering torque $T_h$ (input torque $T_{in}^*$).

When the vehicle travels on the leftward-inclined second incline road 91b shown in FIG. 5B, a final axial force $F_{sp}$ that is computed by the axial force distribution computing unit 83, by extension, a spring component $T_{sp}^*$ that is computed by the conversion unit 84, reduces as a function of the correction amount $F_c$, as in the case of the first embodiment in which a target pinion angle $\theta_p^*$ that is used in computing an ideal axial force F1 is reduced. Thus, a final input torque $T_{in}^*$ that is computed by the subtracter 74 (see FIG. 3) increases as a function of the amount of reduction in spring component $T_{sp}^*$, and the target steering angle $\theta^*$ increases with the increase in input torque $T_{in}^*$. Therefore, a steering angle $\theta_s$ that is achieved through feedback control over the steering angle $\theta_s$ to cause an actual steering angle $\theta_s$ to follow the target steering angle $\theta^*$ increases as a function of the amount of increase in target steering angle $\theta^*$. Thus, when the vehicle travels on the second incline road 91b, characteristics represented by the characteristic line L12 indicated by the alternate long and two short dashes line in FIG. 9B are obtained for the relationship between a steering angle $\theta_s$ and a steering torque $T_h$ (input torque $T_{in}^*$).

When the vehicle travels on the rightward-inclined second incline road 91b, a final axial force $F_{sp}$ that

is computed by the axial force distribution computing unit 83, by extension, a spring component $T_{sp}$* that is computed by the conversion unit 84, increases as a function of the correction amount $F_c$, as in the case of the first embodiment in which a target pinion angle $\theta_p$* that is used in computing an ideal axial force F1 is increased. Thus, a final input torque $T_{in}$* that is computed by the subtracter 74 (see FIG. 3) reduces as a function of the amount of increase in spring component $T_{sp}$*, and the target steering angle $\theta$* reduces with the reduction in input torque $T_{in}$*. Therefore, a steering angle $\theta_s$ that is achieved through feedback control over the steering angle $\theta_s$ to cause an actual steering angle $\theta_s$ to follow the target steering angle $\theta$* reduces as a function of the amount of reduction in target steering angle $\theta$*. Thus, when the vehicle travels on the rightward-inclined second incline road 91b, characteristics represented by the characteristic line (not shown) obtained by shifting the characteristic line L10 shown in FIG. 9B in the negative direction (direction away from the characteristic line L12) by the amount commensurate with the amount of reduction in target steering angle $\theta$* based on the correction amount $\theta_c$* along the abscissa axis are obtained for the relationship between a steering angle $\theta_s$ and a steering torque $T_h$ (input torque $T_{in}$*).

In this way, by adding a correction amount $F_c$ to the signed ideal axial force F1 computed by the axial force computing unit 112, the target steering angle $\theta$* at a steering torque $T_h$ (input torque $T_{in}$*) of zero is changed by the angle commensurate with the correction amount $F_c$ with reference to the steering neutral position (= zero degrees). Accordingly, the target pinion angle $\theta_p$* is also changed by the angle commensurate with the correction amount $F_c$ with reference to the wheel steering neutral position (= zero degrees). Therefore, the steering angle $\theta_s$ and the wheel steering angle $\theta_w$ appropriate for the inclination of the first incline road 91a or the inclination of the second incline road 91b are achieved. Hence, according to the second embodiment, similar advantageous effects to those of the first embodiment are obtained.

Next, a third embodiment of the steering control apparatus will be described. The axial force distribution computing unit 83 shown in FIG. 4 may be embodied as follows. The present embodiment is applicable to any one of the first embodiment and the second embodiment.

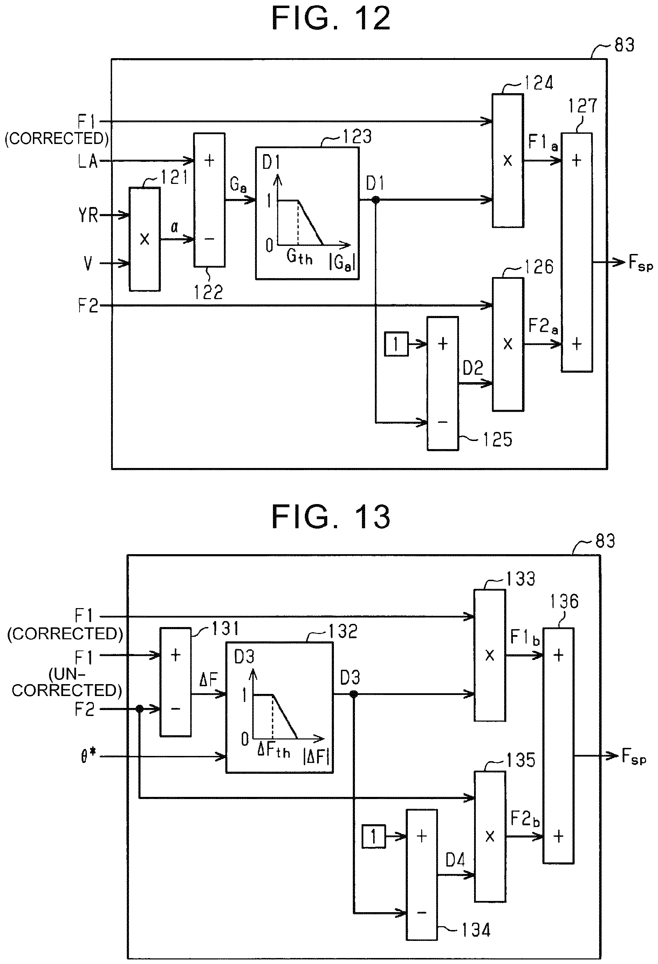

As shown in FIG. 12, the axial force distribution computing unit 83 includes a multiplier 121, a subtracter 122, a distribution ratio computing unit 123, a multiplier 124, a subtracter 125, a multiplier 126, and an adder 127.

The multiplier 121 computes a centrifugal acceleration $\alpha$ by multiplying a yaw rate YR that is detected by the yaw rate sensor 503 by a vehicle speed V that is detected by the vehicle speed sensor 501.

The subtracter 122 computes a gravity component $G_a$ in the direction along the road surface slope by subtracting the centrifugal acceleration $\alpha$ computed by the multiplier 101 from a lateral acceleration LA that is detected by the lateral acceleration sensor 502.

The distribution ratio computing unit 123 computes a distribution ratio D1 commensurately with the gravity component $G_a$ computed by the subtracter 122. The distribution ratio D1 is a value within the range of zero to one. The distribution ratio D1 is kept at a certain value (here, one) irrespective of the absolute value of the gravity component $G_a$ until the absolute value of the gravity component $G_a$ reaches a set value $G_{th}$. After the absolute value of the gravity component $G_a$ reaches the set value $G_{th}$, the distribution ratio D1 gradually reduces toward zero with an increase in the absolute value of the gravity component $G_a$.

The multiplier 124 computes a distributed ideal axial force $F1_a$ by multiplying the corrected ideal axial force F1 computed by the ideal axial force computing unit 81 by the distribution ratio D1 computed by the distribution ratio computing unit 123. The corrected ideal axial force F1 means the ideal axial force F1 that is computed based on the target pinion angle $\theta_p$* to which the correction amount $\theta_c$* is added in the first embodiment or the ideal axial force F1 to which the correction amount $F_c$ is added in the second embodiment.

The subtracter 125 computes a distribution ratio D2 by subtracting the distribution ratio D1 computed by the distribution ratio computing unit 123 from one that is a fixed value stored in the storage device of the controller 50.

The multiplier 126 computes a distributed estimated axial force $F2_a$ by multiplying the estimated axial force F2 computed by the estimated axial force computing unit 82 by the distribution ratio D2 computed by the subtracter 125.

The adder 127 computes a final axial force $F_{sp}$ that is used in computing a spring component $T_{sp}$*, by adding the distributed estimated axial force $F2_a$ computed by the multiplier 126 to the distributed ideal axial force $F1_a$ computed by the multiplier 124.

Therefore, according to the third embodiment, the following operation and advantageous effect are obtained.

As the absolute value of the gravity component $G_a$ increases, the distribution ratio D1 for the corrected ideal axial force F1 reduces, while the distribution ratio D2 for the estimated axial force F2 increases. That is, as the absolute value of the gravity component $G_a$ increases, the proportion of the estimated axial force F2 in the final axial force $F_{sp}$ increases. The estimated axial force F2 is computed based on the current value $I_b$ of the wheel steering motor 41, which reflects an actual road surface reaction force (axial force) that acts on the steered wheels 16, so the estimated axial force F2 also reflects the actual road surface reaction force. For this reason, as the absolute value of the gravity component $G_a$ increases, that is, as the road surface slope (degree of inclination) of the first incline road 91a or the second incline road 91b increases, the degree to which the final axial force $F_{sp}$, by extension, the final input torque $T_{in}$*, reflects the actual

road surface reaction force increases. Thus, a target steering angle $\theta^*$ and target pinion angle $\theta_p^*$ commensurate with the degree of inclination (actual road surface reaction force) of the first incline road 91a or the second incline road 91b are computed. Therefore, a driver can further naturally perform steering. In addition, an appropriate steering feel for the inclination of the first incline road 91a or the second incline road 91b is achieved.

Next, a fourth embodiment of the steering control apparatus will be described. The present embodiment differs from the third embodiment in the computing method of the axial force distribution computing unit 83.

As shown in FIG. 13, the axial force distribution computing unit 83 includes a subtracter 131, a distribution ratio computing unit 132, a multiplier 133, a subtracter 134, a multiplier 135, and an adder 136. The subtracter 131 computes an axial force difference $\Delta F$ by subtracting the estimated axial force F2 computed by the estimated axial force computing unit 82 from the uncorrected ideal axial force F1 computed by the ideal axial force computing unit 81. The uncorrected ideal axial force F1 means the ideal axial force F1 that is computed based on the target pinion angle $\theta_p^*$ before the correction amount $\theta_c^*$ is added in the first embodiment or the ideal axial force F1 before the correction amount $F_c$ is added in the second embodiment.

The distribution ratio computing unit 132 computes a distribution ratio D3 as a function of the absolute value of the axial force difference $\Delta F$ computed by the subtracter 131. The distribution ratio D3 is a value within the range of zero to one. The distribution ratio D3 is kept at a certain value (here, one) irrespective of the absolute value of the axial force difference $\Delta F$ until the absolute value of the axial force difference $\Delta F$ reaches a set value $\Delta F_{th}$. After the absolute value of the axial force difference $\Delta F$ reaches the set value $\Delta F_{th}$, the distribution ratio D3 gradually reduces toward zero with an increase in the absolute value of the axial force difference $\Delta F$.

The distribution ratio computing unit 132 may, after the absolute value of the axial force difference $\Delta F$ reaches the set value $\Delta F_{th}$, gradually reduce the distribution ratio D3 toward zero with an increase in the absolute value of the axial force difference $\Delta F$ on the condition that the target steering angle $\theta^*$ is less than a steering angle threshold. This is because, when the absolute value of the axial force difference $\Delta F$ reaches the set value $\Delta F_{th}$ and the target steering angle $\theta^*$ is less than the steering angle threshold, the vehicle can be traveling on an incline road.

The multiplier 133 computes a distributed ideal axial force $F1_b$ by multiplying the corrected ideal axial force F1 computed by the ideal axial force computing unit 81 by the distribution ratio D3 computed by the distribution ratio computing unit 132.

The subtracter 134 computes a distribution ratio D4 by subtracting the distribution ratio D3 computed by the distribution ratio computing unit 132 from one that is a fixed value stored in the storage device of the controller 50.

The multiplier 135 computes a distributed estimated axial force $F2_b$ by multiplying the estimated axial force F2 computed by the estimated axial force computing unit 82 by the distribution ratio D4 computed by the subtracter 134.

The adder 136 computes a final axial force $F_{sp}$ that is used in computing a spring component $T_{sp}^*$ by adding the distributed ideal axial force $F1_b$ computed by the multiplier 133 and the distributed estimated axial force $F2_b$ computed by the multiplier 135.

Therefore, according to the fourth embodiment, the following operation and advantageous effect are obtained.

An ideal axial force F1 that is computed based on a target pinion angle $\theta_p^*$ is an axial force without taking the equilibrium of forces that act on the vehicle into consideration. In contrast to this, an estimated axial force F2 that is computed based on the current value $I_b$ of the wheel steering motor 41 is an axial force that reflects the equilibrium of forces that act on the vehicle. For this reason, as the inclination angle $\beta$ of the first incline road 91a or second incline road 91b increases, the absolute value of the axial force difference $\Delta F$ that is the difference between the ideal axial force F1 and the estimated axial force F2 increases. That is, the absolute value of the axial force difference $\Delta F$ is a value that reflects the degree of inclination of the first incline road 91a or second incline road 91b.

On the assumption of this, as the absolute value of the axial force difference $\Delta F$ increases, the distribution ratio D3 for the uncorrected ideal axial force F1 reduces, while the distribution ratio D4 for the estimated axial force F2 increases. That is, as the absolute value of the axial force difference $\Delta F$ increases, the proportion of the estimated axial force F2 in the final axial force $F_{sp}$ increases. For this reason, as the absolute value of the axial force difference $\Delta F$ increases, that is, as the road surface slope (degree of inclination) of the first incline road 91a or second incline road 91b increases, the degree to which the final axial force $F_{sp}$, by extension, the final input torque $T_{in}^*$, reflects an actual road surface reaction force (axial force) increases. Thus, a target steering angle $\theta^*$ and target pinion angle $\theta_p^*$ commensurate with the degree of inclination (actual road surface reaction force) of the first incline road 91a or second incline road 91b are computed. Therefore, a driver can further naturally perform steering. In addition, an appropriate steering feel for the inclination of the first incline road 91a or second incline road 91b is achieved.

Next, a fifth embodiment of the steering control apparatus will be described. The present embodiment combines the computing function of the axial force distribution computing unit 83 of the third embodiment with the computing function of the axial force distribution computing unit 83 of the fourth embodiment.

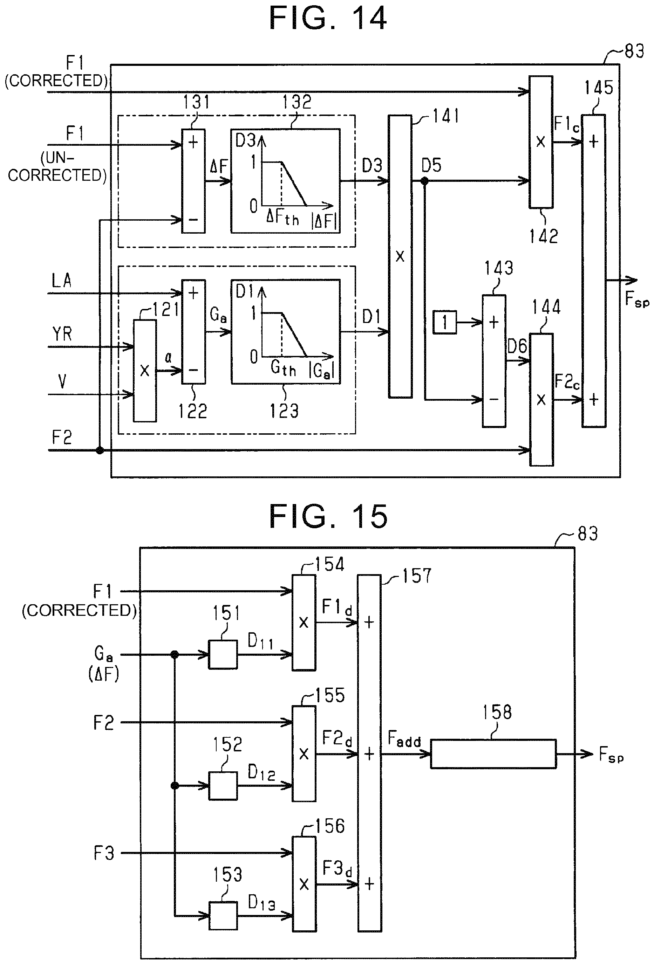

As shown in FIG. 14, the axial force distribution computing unit 83 includes the multiplier 121, the subtracter 122, and the distribution ratio computing unit 123 in the third embodiment, and the subtracter 131 and the distribution ratio computing unit 132 in the fourth embodiment. In addition, the axial force distribution computing unit 83 includes a multiplier 141, a multiplier 142, a subtracter 143, a multiplier 144, and an adder 145.

The multiplier 141 computes a distribution ratio D5 for the corrected ideal axial force F1 by multiplying the distribution ratio D1, commensurate with the absolute value of the gravity component $G_a$ and computed by the distribution ratio computing unit 123, by the distribution ratio D3 commensurate with the absolute value of the axial force difference $\Delta$F and computed by the distribution ratio computing unit 132.

The multiplier 142 computes a distributed ideal axial force $F1_c$ by multiplying the corrected ideal axial force F1 computed by the ideal axial force computing unit 81 by the distribution ratio D5 computed by the multiplier 141.

The subtracter 143 computes a distribution ratio D6 for the estimated axial force F2 by subtracting the distribution ratio D5 computed by the multiplier 141 from one that is a fixed value stored in the storage device of the controller 50.

The multiplier 144 computes a distributed estimated axial force $F2_c$ by multiplying the estimated axial force F2 computed by the estimated axial force computing unit 82 by the distribution ratio D6 computed by the subtracter 143.

The adder 145 computes a final axial force $F_{sp}$ that is used in computing a spring component $T_{sp}^*$ by adding the distributed ideal axial force $F1_c$ computed by the multiplier 142 and the distributed estimated axial force $F2_c$ computed by the multiplier 144.

Therefore, according to the fifth embodiment, the following operation and advantageous effect are obtained.

Based on both the absolute value of the gravity component $G_a$ in the direction along the road surface slope and the absolute value of the axial force difference $\Delta$F, the distribution ratio D5 for the corrected ideal axial force F1 and the distribution ratio D6 for the estimated axial force F2 are computed. The absolute value of the gravity component $G_a$ and the absolute value of the axial force difference $\Delta$F each reflect an actual road surface reaction force (axial force). For this reason, a final axial force $F_{sp}$, by extension, a final input torque $T_{in}^*$, further appropriately reflects an actual road surface reaction force commensurately with the degree of inclination of the first incline road 91a or second incline road 91b. Thus, a further appropriate target steering angle $\theta^*$ and target pinion angle $\theta_p^*$ commensurate with the degree of inclination of the first incline road 91 a or second incline road 91b are computed. Therefore, a driver can further naturally perform steering. In addition, an appropriate steering feel for the inclination of the first incline road 91a or second incline road 91b is achieved.

Next, a sixth embodiment of the steering control apparatus will be described. The present embodiment differs from the third embodiment in the computing method of the axial force distribution computing unit 83.

As shown in FIG. 15, the axial force distribution computing unit 83 computes a final axial force $F_{sp}$ that is used in computing a spring component $T_{sp}^*$ by using an estimated axial force F3 in addition to an ideal axial force F1 based on a target pinion angle $\theta_p^*$, and an estimated axial force F2 based on the current value $I_b$ of the wheel steering motor 41.

In this case, as shown by the alternate long and two short dashes line in FIG. 4, the vehicle model 72 includes an estimated axial force computing unit 86 that computes an estimated axial force F3. The estimated axial force computing unit 86 computes an estimated axial force F3 based on a state quantity $S_x$ that reflects a vehicle behavior or a road surface condition (road surface reaction force). The state quantity $S_x$ is a state quantity other than the current value $I_b$ of the wheel steering motor 41. Examples of the state quantity $S_x$ include a lateral acceleration LA and a yaw rate YR.

The estimated axial force computing unit 86 computes an estimated axial force based on a lateral acceleration LA or an estimated axial force based on a yaw rate YR as the estimated axial force F3. An estimated axial force based on a lateral acceleration LA is found by multiplying a lateral acceleration LA that is detected by the lateral acceleration sensor 502 by a gain that is a coefficient commensurate with a vehicle speed V. A lateral acceleration LA reflects a road surface condition, such as a road surface frictional resistance. For this reason, an estimated axial force that is computed based on a lateral acceleration LA reflects an actual road surface condition.

An estimated axial force based on a yaw rate YR is found by multiplying a yaw rate derivative value by a vehicle speed gain that is a coefficient commensurate with a vehicle speed V. The yaw rate derivative value is a value obtained by differentiating a yaw rate YR that is detected by the yaw rate sensor 503. The vehicle speed gain is set so as to increase as the vehicle speed V increases. A yaw rate YR also reflects a road surface condition, such as a road surface frictional resistance. For this reason, an estimated axial force that is computed based on a yaw rate YR reflects an actual road surface condition.

The configuration of the axial force distribution computing unit 83 will be specifically described as follows. As shown in FIG. 15, the axial force distribution computing unit 83 includes distribution ratio computing units 151, 152, 153, multipliers 154, 155, 156, an adder 157, and a computing unit 158.

The distribution ratio computing unit 151 computes a distribution ratio $D_{11}$ for the corrected ideal axial force F1 commensurately with the absolute value of the gravity component $G_a$ in the direction along the road surface slope. The distribution ratio computing unit 152 computes a distribution ratio $D_{12}$ for the estimated axial force F2 commensurately with the absolute value of the gravity component $G_a$. The distribution ratio computing unit 153 computes a distribution ratio $D_{13}$ for the estimated axial force F3 commensurately with the absolute value of the gravity component $G_a$.

The multiplier 154 computes a distributed ideal axial force $F1_d$ by multiplying the corrected ideal axial force F1 by the distribution ratio $D_{11}$. The multiplier 155 computes a distributed estimated axial force $F2_d$ by multiplying the estimated axial force F2 by the distribution ratio $D_{12}$. The multiplier 156 computes a distributed estimated axial force $F3_d$ by multiplying the estimated axial force F3 by the distribution ratio $D_{13}$.

The adder 157 computes a total axial force $F_{add}$ by adding the distributed ideal axial force $F1_d$, the distributed estimated axial force $F2_d$, and the distributed estimated axial force $F3_d$. The computing unit 158 computes a total distribution ratio $D_{add}$ by adding the distribution ratio $D_{11}$, the distribution ratio $D_{12}$, and the distribution ratio $D_{13}$, as expressed by the following mathematical expression (6). Then, the computing unit 158 computes a final axial force $F_{sp}$ that is used in computing a spring component $T_{sp}^*$ by dividing the total axial force $F_{add}$ computed by the adder 157 by the total distribution ratio $D_{add}$, as expressed by the following mathematical expression (7). A final axial force $F_{sp}$ may be computed by using multiple kinds of estimated axial forces F3 (for example, an estimated axial force based on a lateral acceleration LA and an estimated axial force based on a yaw rate YR). In this case, the vehicle model 72 includes a plurality of estimated axial force computing units that individually compute multiple kinds of estimated axial forces F3 in addition to the ideal axial force computing unit 81 and the estimated axial force computing unit 82. In addition, the axial force distribution computing unit 83 includes a distribution ratio computing unit and a multiplier for each of the multiple kinds of estimated axial forces F3. The computing unit 158 computes a final axial force $F_{sp}$ by dividing the total axial force $F_{add}$ obtained by adding all the distributed axial forces by the total distribution ratio $D_{add}$ obtained by adding all the distribution ratios.

$$D_{add} = D_{11} + D_{12} + D_{13} \qquad (6)$$

$$F_{sp} = F_{add} / D_{add} \qquad (7)$$

The distribution ratio computing units 151, 152, 153 may respectively compute distribution ratios $D_{11}$, $D_{12}$, $D_{13}$ as a function of the absolute value of an axial force difference $\Delta F$, instead of the absolute value of a gravity component $G_a$. The absolute value of an axial force difference $\Delta F$ also reflects an actual road surface reaction force (axial force).

Therefore, according to the sixth embodiment, the following operation and advantageous effect are obtained.

Based on the absolute value of a gravity component $G_a$ in the direction along the road surface slope or the absolute value of an axial force difference $\Delta F$, a distribution ratio $D_{11}$ for the corrected ideal axial force F1, a distribution ratio $D_{12}$ for the estimated axial force F2, and a distribution ratio $D_{13}$ for the estimated axial force F3 are computed. The estimated axial forces F2, F3 each reflect an actual road surface reaction force (axial force). In addition, the estimated axial force F3 (the estimated axial force based on a lateral acceleration LA or the estimated axial force based on a yaw rate YR) also reflects a vehicle behavior. For this reason, a final axial force $F_{sp}$, by extension, a final input torque $T_{in}^*$, appropriately reflect an actual road surface reaction force and a vehicle behavior as a function of the degree of inclination of the first incline road 91a or second incline road 91b. Thus, a further appropriate target steering angle $\theta^*$ and target pinion angle $\theta_p^*$ that reflect an actual road surface reaction force and a vehicle behavior are computed as a function of the degree of inclination of the first incline road 91a or second incline road 91b. Therefore, a driver can further naturally perform steering. In addition, an appropriate steering feel for the inclination of the first incline road 91a or second incline road 91b is achieved.

Next, a seventh embodiment of the steering control apparatus will be described. The present embodiment differs from the first embodiment in that the vehicle is equipped with a host controller 500 that generally controls controllers of an onboard system.

A drive assist system or an automatic drive system can be mounted on a vehicle. The drive assist system assists a driver with driving operation to achieve safe and better driving. The automatic drive system implements an automatic driving function with which the system drives the vehicle in place of a driver. In this case, in the vehicle, cooperative control between the controller 50 and a controller of another onboard system is executed. Cooperative control means a technique for controlling the motion of a vehicle by cooperation among controllers of multiple types of onboard systems. The vehicle is equipped with, for example, the host controller 500 that generally controls the controllers of various onboard systems. The host controller 500 determines an optimal control method based on the status of the vehicle at any given time, and individually instructs various onboard controllers to execute control in accordance with the determined control method.

The host controller 500 intervenes in steering control that is executed by the controller 50. The host controller 500 switches between an on state (enabled) and off state (disabled) of its own drive assist control function or automatic drive control function in response to an operation of a switch (not shown) provided at a driver seat, or the like.

The host controller 500, for example, computes an additional angle command value as a command value

$S^*$ for causing the vehicle to travel on a target lane. The additional angle command value is a target value of steering angle (an angle to be added to the current steering angle) that is required to cause the vehicle to travel along a lane for a travel status of the vehicle at any given time. The controller 50 controls the reaction motor 31 and the wheel steering motor 41 by using the command value $S^*$ computed by the host controller 500.

The host controller 500 also generates a flag as a distribution command $DR_a$ for the controller 50. The flag is information that indicates that the drive assist control function or the automatic drive control function is on or off. The host controller 500 sets the value of the flag to one when the drive assist control function or the automatic drive control function is on , and sets the value of the flag to zero when the drive assist control function or the automatic drive control function is off. The flag is also information that indicates the degree to which the system is involved in driving of the vehicle (here, the degree to which the host controller 500 intervenes in steering control). When the value of the flag is one, the degree to which the system is involved in driving of the vehicle is 100%. When the value of the flag is zero, the degree to which the system is involved in driving of the vehicle is 0%.

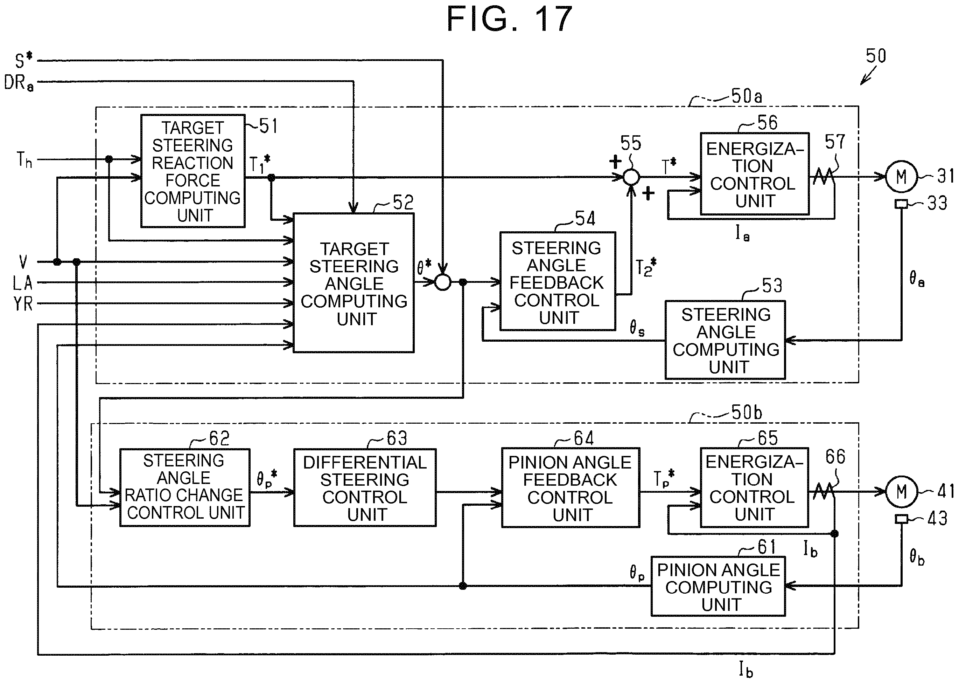

Next, the controller 50 will be described in detail. As shown in FIG. 17, the controller 50 includes a reaction force control unit 50a and a wheel steering control unit 50b. The reaction force control unit 50a executes reaction force control. The wheel steering control unit 50b executes wheel steering control.

The reaction force control unit 50a includes a target steering reaction force computing unit 51, a target steering angle computing unit 52, a steering angle computing unit 53, a steering angle feedback control unit 54, an adder 55, and an energization control unit 56.

The target steering reaction force computing unit 51 computes a target steering reaction force $T_1^*$ based on a steering torque $T_h$ and a vehicle speed V. The target steering angle computing unit 52 computes a target steering angle $\theta^*$ of the steering wheel 11 by using the target steering reaction force $T_1^*$, the steering torque Th, and the vehicle speed V. The target steering angle computing unit 52 has an ideal model that, when the sum of the target steering reaction force $T_1^*$ and the steering torque $T_h$ is an input torque, determines an ideal steering angle based on the input torque. The ideal model is obtained by modeling a steering angle for an ideal wheel steering angle commensurate with an input torque by experiment or other methods in advance on the assumption of the steering system in which the steering wheel 11 and the steered wheels 16 are mechanically coupled to each other. The target steering angle computing unit 52 finds an input torque by adding the target steering reaction force $T_1^*$ and the steering torque $T_h$, and computes a target steering angle $\theta^*$ based on the ideal model by using the input torque.

The steering angle computing unit 53 computes an actual steering angle $\theta_s$ of the steering wheel 11 based on a rotation angle $\theta_a$ of the reaction motor 31, detected by the rotation angle sensor 33. The steering angle feedback control unit 54 computes a steering angle correction amount $T_2^*$ through feedback control over the steering angle $\theta_s$ to cause the actual steering angle $\theta_s$ to follow the target steering angle $\theta^*$. The adder 55 calculates a steering reaction force command value $T^*$ by adding the steering angle correction amount $T_2^*$ to the target steering reaction force $T_1^*$.

The energization control unit 56 supplies the reaction motor 31 with an electric power commensurate with the steering reaction force command value $T^*$. Specifically, the energization control unit 56 computes a current command value for the reaction motor 31 based on the steering reaction force command value $T^*$. The energization control unit 56 detects an actual current value $I_a$ in a power supply line for the reaction motor 31 with the use of a current sensor 57 provided in the power supply line. The current value $I_a$ is the actual value of current that is supplied to the reaction motor 31. The energization control unit 56 finds a deviation between the current command value and the actual current value $I_a$, and controls an electric power that is supplied to the reaction motor 31 such that the deviation is minimized (feedback control over the current $I_a$). Thus, the reaction motor 31 generates a torque for the steering reaction force command value $T^*$. A moderate resistance commensurate with a road surface reaction force can be provided to a driver.

When an additional angle command value is computed as the command value $S^*$ through execution of drive assist control or automatic drive control by the host controller 500, the command value $S^*$ is added to the target steering angle $\theta^*$ that is computed by the target steering angle computing unit 52.

As shown in FIG. 17, the wheel steering control unit 50b includes a pinion angle computing unit 61, a steering angle ratio change control unit 62, a differential steering control unit 63, a pinion angle feedback control unit 64, and an energization control unit 65.

The pinion angle computing unit 61 computes a pinion angle $\theta_p$ that is an actual rotation angle of the pinion shaft 44 based on a rotation angle $\theta_b$ of the wheel steering motor 41, detected by the rotation angle sensor 43. As described above, the wheel steering motor 41 and the pinion shaft 44 move together via the reduction mechanism 42. Therefore, there is the correlation between the rotation angle $\theta_b$ of the wheel steering motor 41 and the pinion angle $\theta_p$. The pinion angle $\theta_p$ is determined based on the rotation angle $\theta_b$ of the wheel steering motor 41 by using the correlation. As described above, the pinion shaft 44 is in mesh with the wheel steering shaft 14. Therefore, there is also the correlation between the pinion angle $\theta_p$ and the amount of movement of the wheel steering shaft 14. That is, the pinion angle $\theta_p$ is a value that reflects the wheel steering angle $\theta_w$ of the steered wheels 16.

The steering angle ratio change control unit 62 sets a steering angle ratio that is the ratio of the wheel steering angle $\theta_w$ to the steering angle $\theta_s$ for a travel status of the vehicle (for example, vehicle speed V), and computes a target pinion angle based on the set steering angle ratio. The steering angle ratio change control unit 62 computes a target pinion angle $\theta_p^*$ such that the wheel steering angle $\theta_w$ relative to the steering angle $\theta_s$ increases as the vehicle speed V decreases and the wheel steering angle $\theta_w$ relative to the steering angle $\theta_s$ reduces as the vehicle speed V increases. To achieve the steering angle ratio that is set for the travel status of the vehicle, the steering angle ratio change control unit 62 computes a correction angle commensurate with the target steering angle $\theta^*$, and computes a target pinion angle $\theta_p^*$ commensurate with the steering angle ratio by adding the computed correction angle to the target steering angle $\theta^*$.

The differential steering control unit 63 computes a rate of change in target pinion angle $\theta_p^*$ (wheel steering speed) by differentiating the target pinion angle $\theta_p^*$. The differential steering control unit 63 also computes a correction angle to be applied to the target pinion angle $\theta_p^*$ by multiplying the rate of change in target pinion angle $\theta_p^*$ by a gain. The differential steering control unit 63 computes a final target pinion angle $\theta_p^*$ by adding the correction angle to the target pinion angle $\theta_p^*$. The phase of the target pinion angle $\theta_p^*$ that is computed by the steering angle ratio change control unit 62 is advanced, so a delay of wheel steering is improved. That is, steering responsiveness is ensured as a function of a wheel steering speed.

The pinion angle feedback control unit 64 computes a pinion angle command value $T_p^*$ through feedback control (PID control) over the pinion angle $\theta_p$ to cause an actual pinion angle $\theta_p$ to follow the final target pinion angle $\theta_p^*$ computed by the differential steering control unit 63.

The energization control unit 65 supplies the wheel steering motor 41 with an electric power commensurate with the pinion angle command value $T_p^*$. Specifically, the energization control unit 65 computes a current command value for the wheel steering motor 41 based on the pinion angle command value $T_p^*$. The energization control unit 65 also detects an actual current value $I_b$ in a power supply line for the wheel steering motor 41 with the use of a current sensor 66 provided in the power supply line. The current value $I_b$ is the actual value of current that is supplied to the wheel steering motor 41. The energization control unit 65 finds a deviation between the current command value and the actual current value $I_b$, and controls an electric power that is supplied to the wheel steering motor 41 such that the deviation is minimized (feedback control over the current $I_b$). Thus, the wheel steering motor 41 rotates by an angle commensurate with the pinion angle command value $T_p^*$.

Next, the target steering angle computing unit 52 will be described in detail. As described above, the target steering angle computing unit 52 computes a tar-

get steering angle $\theta^*$ based on the ideal model by using an input torque that is the sum of the target steering reaction force $T_1^*$ and the steering torque $T_h$. The ideal model is a model that uses the fact that an input torque $T_{in}^*$ that is a torque to be applied to the steering shaft 12 is expressed by the following mathematical expression (8).

$$T_{in}^* = J\theta^{*''} + C\theta^{*'} + K\theta^* \qquad (8)$$

where J is the moment of inertia of the steering wheel 11 and steering shaft 12, C is the coefficient of viscosity (coefficient of friction) corresponding to friction, or the like, on the housing of the wheel steering shaft 14, and K is a spring modulus on the assumption that each of the steering wheel 11 and the steering shaft 12 is regarded as a spring.

As is apparent from the mathematical expression (8), the input torque $T_{in}^*$ is obtained by adding a value obtained by multiplying the second order derivative $\theta^{*''}$ of a target steering angle $\theta^*$ by the moment of inertia J, a value obtained by multiplying the first order derivative $\theta^{*'}$ of the target steering angle $\theta^*$ by the coefficient of viscosity C, and a value obtained by multiplying the target steering angle $\theta^*$ by the spring modulus K. The target steering angle computing unit 52 computes a target steering angle $\theta^*$ in accordance with the ideal model based on the mathematical expression (8).

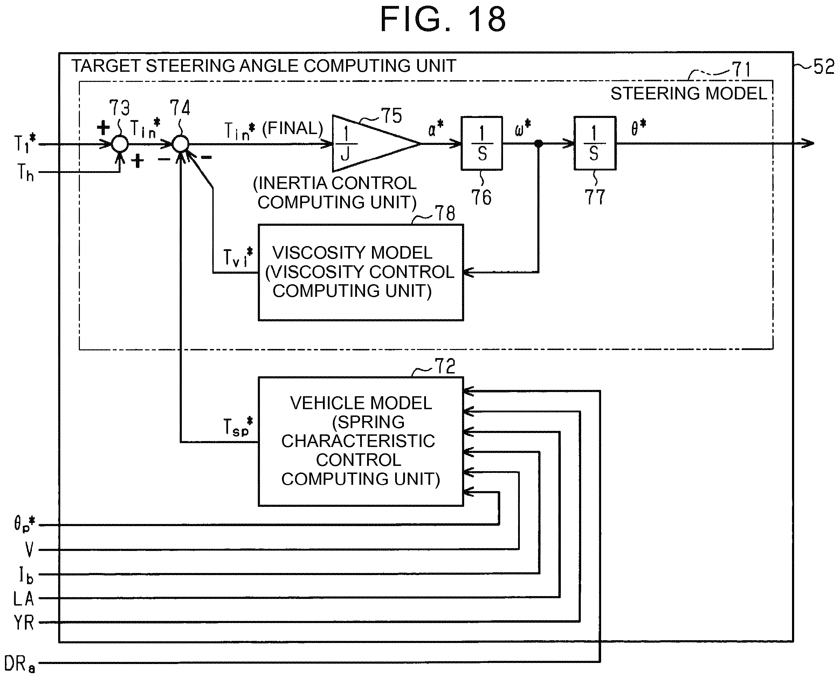

As shown in FIG. 18, the ideal model based on the mathematical expression (8) is separated into a steering model 71 and a vehicle model 72. The steering model 71 is tuned for the properties of the elements of the steering system 10, such as the steering shaft 12 and the reaction motor 31. The steering model 71 includes an adder 73, a subtracter 74, an inertia model 75, a first integrator 76, a second integrator 77, and a viscosity model 78.

The adder 73 computes an input torque $T_{in}^*$ by adding a target steering reaction force $T_1^*$ and a steering torque $T_h$. The subtracter 74 computes a final input torque $T_{in}^*$ by subtracting a viscosity component $T_{vi}^*$ and a spring component $T_{sp}^*$ (described later) from the input torque $T_{in}^*$ calculated by the adder 73.

The inertia model 75 functions as an inertia control computing unit corresponding to the inertia term of the mathematical expression (8). The inertia model 75 computes a steering angular acceleration $\alpha^*$ by multiplying the final input torque $T_{in}^*$ calculated by the subtracter 74 by the inverse of the moment of inertia J.

The first integrator 76 computes a steering angular velocity $\omega^*$ by integrating the steering angular acceleration $\alpha^*$ calculated by the inertia model 75. The second integrator 77 computes a target steering angle $\theta^*$ by further integrating the steering angular velocity $\omega^*$ calculated by the first integrator 76. The target steering angle $\theta^*$ is an ideal rotation angle of the steering wheel 11 (steering shaft 12) based on the steering model 71.

The viscosity model 78 functions as a viscosity control computing unit corresponding to the viscosity term of the mathematical expression (8). The viscosity model 78 computes a viscosity component $T_{vi}$ of the input torque $T_{in}^*$ by multiplying the steering angular velocity $\omega^*$ calculated by the first integrator 76 by the coefficient of viscosity C.

The vehicle model 72 is tuned for the properties of the vehicle equipped with the steering system 10. The vehicle-side characteristics that influence the steering characteristics are determined depending on, for example, the specifications of suspensions and wheel alignment, the grip (friction force) of the steered wheels 16, and other factors. The vehicle model 72 functions as a spring characteristic control computing unit corresponding to the spring term of the mathematical expression (8). The vehicle model 72 computes a spring component $T_{sp}^*$ (torque) of the input torque $T_{in}^*$ by multiplying the target steering angle $\theta^*$ calculated by the second integrator 77 by the spring modulus K.

With the thus configured target steering angle computing unit 52, by adjusting the moment of inertia J and coefficient of viscosity C of the steering model 71 and the spring modulus K of the vehicle model 72, the relationship between an input torque $T_{in}^*$ and a target steering angle $\theta^*$ is directly tuned, and, by extension, desired steering characteristics are achieved.

A target pinion angle $\theta_p^*$ is computed by using the target steering angle $\theta^*$ computed from the input torque $T_{in}^*$ based on the steering model 71 and the vehicle model 72. An actual pinion angle $\theta_p$ is subjected to feedback control so as to coincide with the target pinion angle $\theta_p^*$. As described above, there is the correlation between the pinion angle $\theta_p$ and the wheel steering angle $\theta_w$ of the steered wheels 16. Therefore, the wheel steering of the steered wheels 16 commensurate with the input torque $T_{in}^*$ also depends on the steering model 71 and the vehicle model 72. That is, the steering feel of the vehicle depends on the steering model 71 and the vehicle model 72. Therefore, a desired steering feel is achieved by adjusting the steering model 71 and the vehicle model 72.

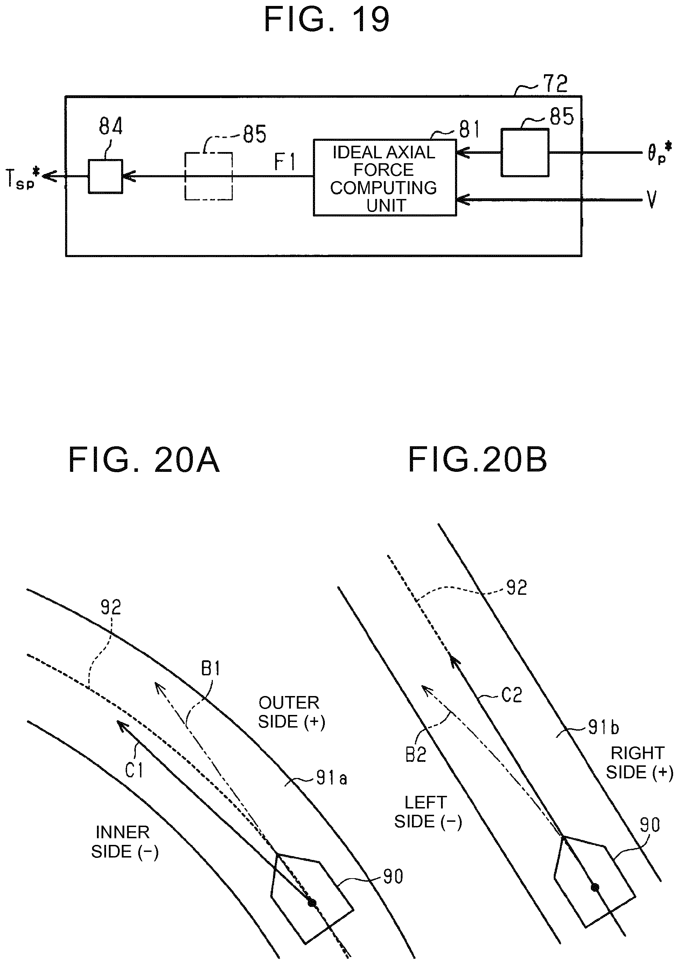

As shown in FIG. 19, the vehicle model 72 includes an ideal axial force computing unit 81, an estimated axial force computing unit 82, an axial force distribution computing unit 83, and a conversion unit 84.

The ideal axial force computing unit 81 computes an ideal axial force F1 based on a target pinion angle $\theta_p^*$. An ideal axial force F1 is an ideal value of axial force that acts on the wheel steering shaft 14 through the steered wheels 16. The ideal axial force computing unit 81 computes an ideal axial force F1 by using an ideal axial force map stored in a storage device (not shown) of the controller 50. An ideal axial force F1 is set such that the absolute value of the ideal axial force F1 increases as the absolute value of a target pinion angle $\theta_p^*$ (or a target wheel steering angle that is obtained by multiplying the target pinion angle $\theta_p^*$ by a predetermined conversion coefficient) increases and as a vehicle speed V decreases. A vehicle speed V does not always need to be taken into consideration.

The conversion unit 84 computes (converts) a spring component $T_{sp}^*$ for the input torque $T_{in}^*$ based on the ideal axial force F1 computed by the ideal axial force computing unit 81. When the spring component $T_{sp}^*$ based on the ideal axial force F1 is incorporated into the input torque $T_{in}^*$, a steering reaction force commensurate with the target pinion angle $\theta_p^*$ can be applied to the steering wheel 11.

The case where a vehicle travels on a curved incline road with a cross slope (a slope in a direction that intersects at right angles with a course of a road) will be discussed.

First, as a comparative example, the case where a vehicle equipped with an electric power steering system as a steering system without a feedback function for a steering angle $\theta_s$ or a feedback function for a pinion angle $\theta_p$ travels on a curved incline road will be described. It is assumed that the steering wheel 11 and the steered wheels 16 are mechanically coupled to each other. In this case, even when the steering wheel 11 is not steered by a driver, the steering position of the steering wheel 11 and the wheel steering position of the steered wheels 16 vary toward the positions commensurate with the inclination of the incline road based on the equilibrium of forces (gravity and centrifugal force) that act on the vehicle. For this reason, when the vehicle is traveling on a curved incline road, a driver does not need to steer the steering wheel 11 by a large amount.

In contrast to this, when a vehicle equipped with the steering system 10 having a feedback function for a steering angle $\theta_s$ and a feedback function for a pinion angle $\theta_p$ travels on an incline road, the following travel status is assumed. Here, the case where the vehicle travels on a first incline road (so-called bank road) that extends in a curved line and a second incline road (so-called cant road) that extends in a straight line will be discussed.

First, the case where a vehicle 90 travels on a first incline road 91a as shown in FIG. 20A will be described. Here, the first incline road 91a curves leftward with respect to the direction of travel of the vehicle 90. The road surface of the first incline road 91a inclines such that the level of the road surface gradually decreases from the outer side of the curve toward the inner side of the curve in a direction along the cross slope.

In this case, unless the driver continues holding the steering wheel 11 by adding a force (steering torque $T_h$) to the steering wheel 11, the vehicle 90 is not able to keep traveling along a course 92 on the first incline road 91a, and goes straight and then goes up on the first incline road 91a toward the outer side as indicated by the alternate long and two short dashes line arrow in FIG. 20A.

This is because of the following reason. That is, an ideal axial force F1 that is computed based on a target pinion angle $\theta_p^*$ is an axial force without taking the equilibrium of forces that act on the vehicle into consideration. For this reason, when the vehicle travels on a curved incline road under reaction force control based on an ideal axial force F1, the steering position of the steering wheel 11 and the wheel steering position of the steered wheels 16 do not take positions commensurate with the inclination (cross slope) of the incline road and are returned to neutral positions unless a driver adds a steering torque $T_h$ to the steering wheel 11.

Next, the case where the vehicle 90 travels on a second incline road 91b as shown in FIG. 20B will be described. The road surface of the second incline road 91b inclines such that the level of the road surface gradually decreases from the right side toward the left side with respect to the direction of travel of the vehicle 90.

In this case, unless a driver continues holding the steering wheel 11 by adding a force to the steering wheel 11, the vehicle 90 is not able to travel along a course 92 on the second incline road 91b and gradually goes down toward the lower side of the second incline road 91b as the vehicle 90 travels forward as indicated by the alternate long and two short dashes line arrow B2 in FIG. 20B. This is because the vehicle 90 is placed under the influence of the inclination of the road.

In this way, in any of the case where the vehicle 90 travels on the first incline road 91a and the case where the vehicle 90 travels on the second incline road 91b, a driver needs to continue holding the steering wheel 11 by adding a force commensurate with the inclination of the road surface to drive the vehicle 90 along the course 92. For this reason, a driver may not get an appropriate steering feel.

Therefore, in the present embodiment, when the vehicle travels on an incline road, the following configuration is employed as the vehicle model 72 to set the steering position (steering angle $\theta_s$) of the steering wheel 11 and the wheel steering position (wheel steering angle $\theta_w$) of the steered wheels 16 to the positions commensurate with the inclination of the incline road.

That is, as shown in FIG. 19, the vehicle model 72 includes a correction processing unit 85. The correction processing unit 85 corrects the target pinion angle $\theta_p{}^*$ as a function of the degree of inclination of the incline road. The target pinion angle $\theta_p{}^*$ to be corrected is the value used by the ideal axial force computing unit 81 in computing an ideal axial force F1. Any one of a value that is computed by the steering angle ratio change control unit 62 and a value that is computed by the differential steering control unit 63 may be used as the target pinion angle $\theta_p{}^*$ to be corrected. In the present embodiment, the target pinion angle $\theta_p{}^*$ computed by the steering angle ratio change control unit 62 is used as the target pinion angle $\theta_p{}^*$ to be corrected.

The correction processing unit 85 recognizes the degree of inclination of the incline road based on the component, in a direction along the road surface slope (vehicle width direction), of gravity that acts on the vehicle on the incline road, and corrects the target pinion angle

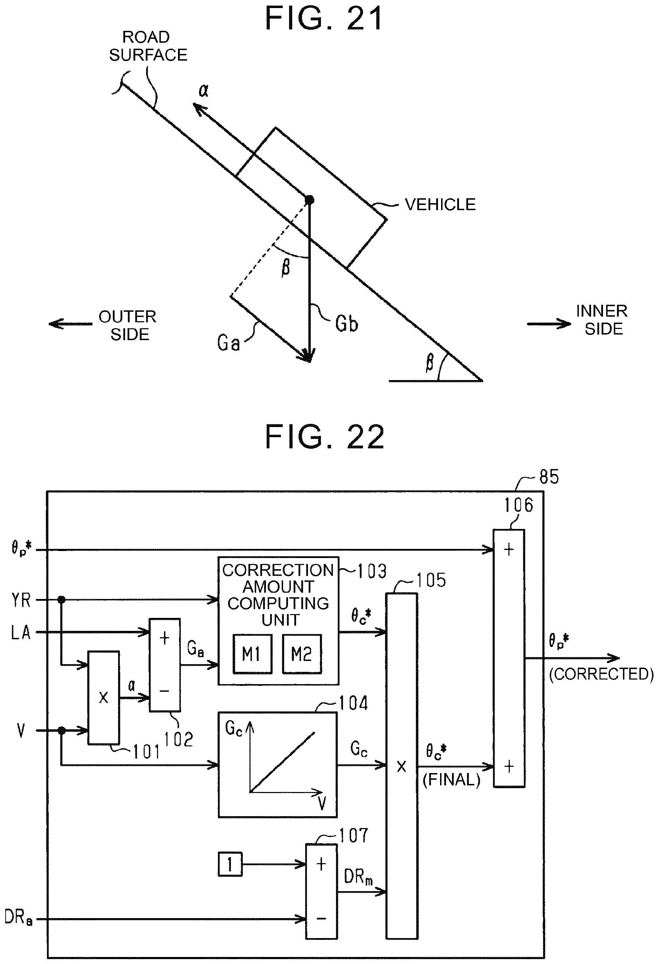

$\theta_p{}^*$ as a function of the recognized degree of inclination.
As shown in FIG. 21, a gravity component $G_a$ that is the component, in the direction along the road surface slope, of gravity that acts on the vehicle on the incline road is expressed by the following mathematical expression (9).

$$G_a = G_b \cdot \sin\beta \qquad (9)$$

where $G_b$ is a gravitational acceleration, and $\beta$ is an inclination angle to a horizontal plane of a road surface on the incline road.
According to the mathematical expression (9), it is apparent that the gravity component $G_a$ increases as the inclination angle $\beta$ of the road surface increases and the gravity component $G_a$ reduces as the inclination angle $\beta$ reduces. That is, the gravity component $G_a$ is a value that reflects the degree of inclination of the incline road.
The correction processing unit 85 actually computes a gravity component $G_a$ based on the following mathematical expression (10).

$$G_a = LA - YR \cdot V \qquad (10)$$

where LA is a lateral acceleration, V is a vehicle speed, and YR is a yaw rate.
The mathematical expression (10) is derived based on the fact that the lateral acceleration LA is expressed by the following mathematical expression (11) and the centrifugal acceleration $\alpha$ that acts on the vehicle is expressed by the following mathematical expression (12). That is, the mathematical expression (10) is derived by applying the mathematical expression (5) to the mathematical expression (11) and then solving the mathematical expression (11) with respect to the gravity component $G_a$.

$$LA = \alpha + G_a \qquad (11)$$

$$\alpha = YR \cdot V \qquad (12)$$

where $\alpha$ is a centrifugal acceleration, $G_a$ is a gravity component, in a direction along a road surface slope, acting on the vehicle, YR is a yaw rate, and V is a vehicle speed.
Next, the configuration of the correction processing unit 85 will be described in detail. As shown in FIG. 22, the correction processing unit 85 includes a multiplier 101, a subtracter 102, a correction amount computing unit 103, a gain computing unit 104, a multiplier 105, and an adder 106.
The multiplier 101 computes a centrifugal acceleration $\alpha$ by multiplying a yaw rate YR that is detected by the yaw rate sensor 503 by a vehicle speed V that is detected by the vehicle speed sensor 501. This is based on the mathematical expression (12).

The subtracter 102 computes a gravity component $G_a$ caused by the road surface slope by subtracting the centrifugal acceleration $\alpha$ computed by the multiplier 101 from a lateral acceleration LA that is detected by the lateral acceleration sensor 502. This is based on the mathematical expressions (10) and (12).

The correction amount computing unit 103 computes a correction amount $\theta_c^*$ (correction angle) to be applied to the target pinion angle $\theta_p^*$ based on the gravity component $G_a$ caused by the road surface slope and computed by the subtracter 102 and the yaw rate YR detected by the yaw rate sensor 503.

The gain computing unit 104 computes a gain $G_c$ for the correction amount $\theta_c^*$ based on the vehicle speed V detected by the vehicle speed sensor 501. The gain computing unit 104 computes a gain $G_c$ such that the gain $G_c$ increases as the vehicle speed V increases.

The multiplier 105 computes a final correction amount $\theta_c^*$ by multiplying the correction amount $\theta_c^*$ computed by the correction amount computing unit 103 by the gain $G_c$ computed by the gain computing unit 104.

The adder 106 adds the target pinion angle $\theta_p^*$ and the final correction amount $\theta_c^*$ computed by the multiplier 105 as a process of correcting the target pinion angle $\theta_p^*$ that is used in computing an ideal axial force F1. Thus, the adder 106 computes a final target pinion angle $\theta_p^*$ that is used by the ideal axial force computing unit 81 in computing an ideal axial force F1.

The correction amount computing unit 103 computes a correction amount $\theta_c^*$ by using a first map M1 and a second map M2. The first map M1 and the second map M2 are stored in the storage device (not shown) of the controller 50.

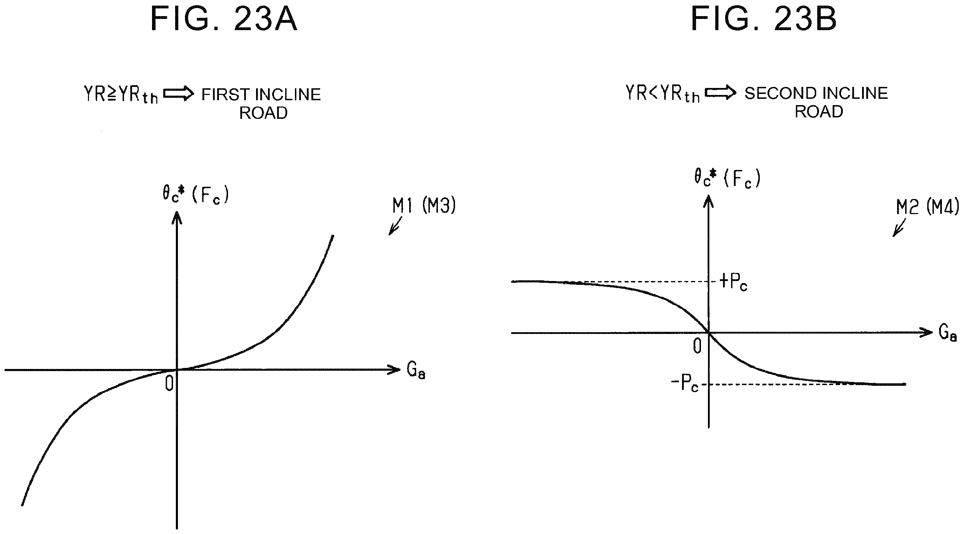

As shown in FIG. 23A, the first map M1 is a map in which the abscissa axis represents a gravity component $G_a$ caused by a road surface slope and the ordinate axis represents a correction amount $\theta_c^*$. The first map M1 defines the relationship between a gravity component $G_a$ caused by a road surface slope and a correction amount $\theta_c^*$. The first map M1 has the following characteristics. That is, when the gravity component $G_a$ is a positive value, the correction amount $\theta_c^*$ is a positive value. When the gravity component $G_a$ is a positive value, the correction amount $\theta_c^*$ makes a positive exponential increase with an increase in the absolute value of the gravity component $G_a$. When the gravity component $G_a$ is a negative value, the correction amount $\theta_c^*$ is a negative value. When the gravity component $G_a$ is a negative value, the correction amount $\theta_c^*$ makes a negative exponential increase with an increase in the absolute value of the gravity component $G_a$.

As shown in FIG. 23B, the second map M2 is also a map in which the abscissa axis represents a gravity component $G_a$ caused by a road surface slope and the ordinate axis represents a correction amount $\theta_c^*$. The second map M2 defines the relationship between a gravity component $G_a$ caused by a road surface slope and a correction amount $\theta_c^*$. The second map M2 has the following characteristics. That is, when the gravity component $G_a$ is a positive value, the correction amount $\theta_c^*$ is a negative value. When the gravity component $G_a$ is a positive value, the correction amount $\theta_c^*$ makes a negative exponential increase with an increase in the absolute value of the gravity component $G_a$ and finally converges to (tops out at) a negative value $-P_c$. When the gravity component $G_a$ is a negative value, the correction amount $\theta_c^*$ is a positive value. When the gravity component $G_a$ is a negative value, the correction amount $\theta_c^*$ makes a positive exponential increase with an increase in the absolute value of the gravity component $G_a$ and finally converges to a positive value $+P_c$.

The correction amount computing unit 103 uses the first map M1 shown in FIG. 23A when the yaw rate YR is greater than or equal to a threshold $YR_{th}$. The correction amount computing unit 103 uses the second map M2 shown in FIG. 23B when the yaw rate YR is less than the threshold $YR_{th}$. The threshold $YR_{th}$ is set to determine whether the vehicle is traveling on the curved first incline road 91a or the vehicle is traveling on the straight second incline road 91b. That is, the yaw rate YR is a rotation angular velocity around a vertical axis passing through the barycenter of the vehicle. For this reason, the yaw rate YR is basically greater when the vehicle travels on a curved road where the vehicle turns than when the vehicle travels on a straight road where the vehicle does not turn. Therefore, whether the vehicle is traveling on the curved first incline road 91a or the vehicle is traveling on the straight second incline road 91b is determined based on the yaw rate YR. The threshold $YR_{th}$ is, for example, set to a value less than the yaw rate YR when the vehicle is traveling on the curved first incline road 91a and greater than the yaw rate YR when the vehicle is traveling on the straight second incline road 91b.

Next, the operation of the correction processing unit 85 for the shape of a road will be described. Here, the case where the vehicle travels on a flat road, the case where the vehicle travels on the first incline road 91a, and the case where the vehicle travels on the second incline road 91b will be sequentially described.

When the vehicle travels on a flat road with no cross slope, the gravity component $G_a$ caused by the road surface slope is zero. Therefore, the correction amount $\theta_c^*$ that is computed by the correction amount computing unit 103 is zero. That is, the uncorrected target pinion angle $\theta_p^*$ is directly a final target pinion angle $\theta_p^*$ that is used in computing an ideal axial force F1. In this case, the relationship between a target pinion angle $\theta_p^*$ and an ideal axial force F1 is similar to the relationship when the configuration that the vehicle model 72 includes no correction processing unit 85. Specifically, the details are as follows.

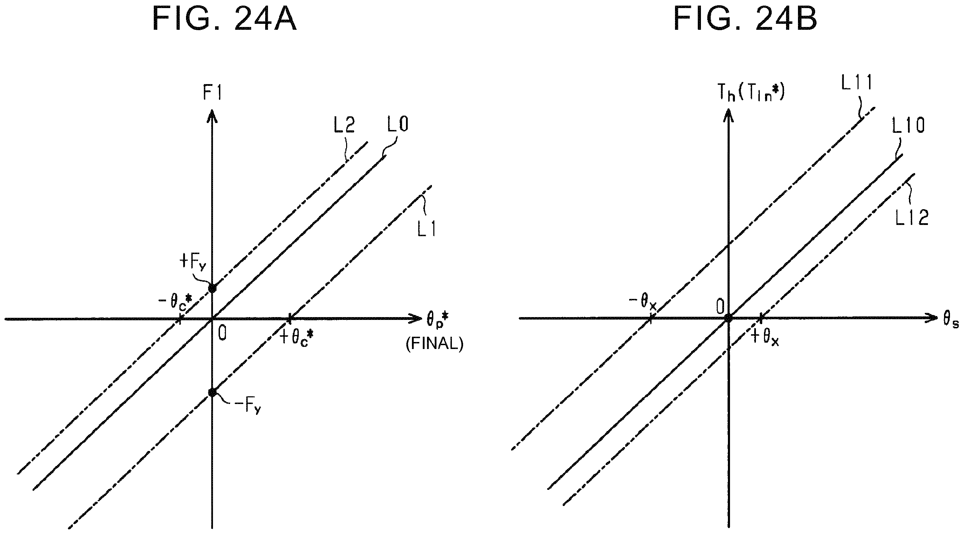

As shown by the continuous line in the graph of FIG. 24A, when the vehicle travels on a flat road, the relationship between a target pinion angle $\theta_p{}^*$ and an ideal axial force F1 is represented by a characteristic line L0. The characteristic line L0 is a straight line passing through the origin. That is, when the vehicle travels on a flat road, the ideal axial force F1 is also zero (neutral value corresponding to a state where the vehicle travels straight ahead) when the uncorrected target pinion angle $\theta_p{}^*$ is zero degree (neutral angle) corresponding to a wheel steering neutral position at the time when the vehicle is traveling straight ahead. As the target pinion angle $\theta_p{}^*$ increases in a positive direction with reference to zero degrees, the ideal axial force F1 linearly increases in a positive direction. As the target pinion angle $\theta_p{}^*$ increases in a negative direction with reference to zero degrees, the ideal axial force F1 linearly increases in a negative direction. The positive target pinion angle $\theta_p{}^*$ corresponds to a rightward wheel steering direction, and the negative target pinion angle $\theta_p{}^*$ corresponds to a leftward wheel steering direction.

As shown by the continuous line in the graph of FIG. 24B, when the vehicle travels on a flat road, the relationship between a steering angle $\theta_s$ and a steering torque $T_h$ (input torque $T_{in}{}^*$) is represented by a characteristic line L10. That is, when the steering torque $T_h$ is zero, the target steering reaction force $T_1{}^*$, by extension, the input torque $T_{in}{}^*$, is zero, so the target steering angle $\theta^*$, by extension, the target pinion angle $\theta_p{}^*$, is also zero. Therefore, through feedback control over the steering angle $\theta_s$ to cause an actual steering angle $\theta_s$ to follow the target steering angle $\theta^*$, the steering angle $\theta_s$ becomes zero degrees corresponding to the steering neutral position at the time when the vehicle travels straight ahead. In addition, through feedback control over the pinion angle $\theta_p$ to cause an actual pinion angle $\theta_p$ to follow the target pinion angle $\theta_p{}^*$, the wheel steering angle $\theta_w$ of the steered wheels 16 becomes zero degrees corresponding to the wheel steering neutral position at the time when the vehicle travels straight ahead. The positive target steering angle $\theta^*$ (steering angle $\theta_s$) corresponds to a rightward steering direction, and the negative target steering angle $\theta^*$ (steering angle $\theta_s$) corresponds to a leftward steering direction.

Next, the case where the vehicle travels on the curved first incline road 91a will be described. As shown in FIG. 20A, the first incline road 91a curves leftward with respect to the direction of travel of the vehicle and inclines such that the level of the road gradually decreases from the outer side of the curve toward the inner side of the curve in a direction along the cross slope.

In this case, a positive correction amount $\theta_c{}^*$ commensurate with a gravity component $G_a$ is computed in accordance with the first map M1. The correction amount $\theta_c{}^*$ is added to the uncorrected target pinion angle $\theta_p{}^*$. Thus, the final target pinion angle $\theta_p{}^*$ that is used in computing an ideal axial force F1 is computed. Therefore, the final target pinion angle $\theta_p{}^*$ that is used in computing an ideal axial force F1 increases by the correction amount $\theta_c{}^*$ as compared to the uncorrected target pinion angle $\theta_p{}^*$.

As shown by the alternate long and short dash line in the graph of FIG. 24A, when the vehicle travels on the left-hand curve first incline road 91a, the relationship between a target pinion angle $\theta_p{}^*$ and an ideal axial force F1 is expressed by a characteristic line L1. The characteristic line L1 may be regarded as the line obtained by shifting (parallel-shifting) the characteristic line L0 in the positive direction by the correction amount $\theta_c{}^*$ along the abscissa axis. That is, when the vehicle travels on the left-hand curve first incline road 91a, the target pinion angle $\theta_p{}^*$ at which the ideal axial force F1 is zero (hereinafter, referred to as the zero point of the ideal axial force F1) is an angle "$+\theta_c{}^*$" shifted in the positive direction by the correction amount $\theta_c{}^*$ from the zero point of the ideal axial force F1 when the vehicle travels on a flat road. Therefore, when the vehicle travels on the left-hand curve first incline road 91a, the ideal axial force F1 is not zero and is an ideal axial force "$-F_y$" when the target pinion angle $\theta_p{}^*$ is zero.

When the vehicle travels on the left-hand curve first incline road 91a, a final target pinion angle $\theta_p{}^*$ that is used in computing an ideal axial force F1 is increased by the correction amount $\theta_c{}^*$ computed as a function of the gravity component $G_a$ in accordance with the first map M1. Therefore, a final axial force $F_{sp}$ that is computed by the axial force distribution computing unit 83, by extension, a spring component $T_{sp}{}^*$ that is computed by the conversion unit 84, also increases as a function of the amount of increase in target pinion angle $\theta_p{}^*$. Thus, a final input torque $T_{in}{}^*$ that is computed by the subtracter 74 (see FIG. 3) reduces as a function of the amount of increase in spring component $T_{sp}{}^*$, and a target steering angle $\theta^*$ reduces with the reduction in input torque $T_{in}{}^*$. Therefore, a steering angle $\theta_s$ that is achieved through feedback control over the steering angle $\theta_s$ to cause an actual steering angle $\theta_s$ to follow the target steering angle $\theta^*$ reduces as a function of the amount of reduction in target steering angle $\theta^*$.

As shown by the alternate long and short dash line in FIG. 24B, when the vehicle travels on the left-hand curve first incline road 91a, the relationship between a steering angle $\theta_s$ and a steering torque $T_h$ (input torque $T_{in}{}^*$) is represented by a characteristic line L11.

The characteristic line L11 may be regarded as a line obtained by shifting (parallel-shifting) the characteristic line L10 in the negative direction by an amount commensurate with the amount of reduction in target steering angle $\theta^*$ based on the correction amount $\theta_c{}^*$ along the abscissa axis. That is, when the vehicle travels on the left-hand curve first incline road 91a, the steering angle $\theta_s$ at which the steering torque $T_h$ is zero (hereinafter, the zero point of the steering torque $T_h$), is shifted in the negative direction by an amount commensurate with the amount of reduction in target steering angle $\theta^*$ from the zero point of the steering torque $T_h$ when the vehicle travels on a flat road.

Therefore, as represented by the characteristic line L11 in FIG. 24B, when the steering torque $T_h$ is zero, an actual steering angle $\theta_s$ that is achieved through feedback control over the steering angle $\theta_s$ is a negative angle "$-\theta_x$" commensurate with the amount of reduction in target steering angle $\theta^*$ with reference to the steering angle $\theta_s$ (= 0°) at a steering torque $T_h$ of zero when the vehicle travels on a flat road. The angle "$-\theta_x$" is a value commensurate with the ideal axial force "$-F_y$" that is the ideal axial force F1 when the target pinion angle $\theta_p^*$ is zero. This is based on the fact that, when the steering torque $T_h$ (input torque $T_{in}^*$) is zero, a target steering angle $\theta^*$ commensurate with the spring component $T_{sp}^*$ based on the ideal axial force "$-F_y$" is computed.

The positive steering angle $\theta_s$ corresponds to the rightward steering direction, and the negative steering angle $\theta_s$ corresponds to the leftward steering direction. The angle "$-\theta_x$" varies with a gravity component $G_a$ caused by the road surface slope. This is because the correction amount $\theta_c^*$ varies with a gravity component $G_a$ caused by a road surface slope and, by extension, the amount of shift of the characteristic line L11 from the characteristic line L10 varies with the correction amount $\theta_c^*$. The positive gravity component $G_a$ is associated with the left-hand curve first incline road 91a with a cross slope that inclines such that the level gradually increases toward the right side with respect to the direction of travel of the vehicle. The negative gravity component $G_a$ is associated with a right-hand curve first incline road 91a with a cross slope that inclines such that the level gradually increases toward the left side with respect to the direction of travel of the vehicle.

Therefore, when the vehicle is traveling on the left-hand curve first incline road 91a, the steering wheel 11 is held at a position rotated in the leftward steering direction by the steering angle $\theta_s$ (= $-\theta_x$) with reference to the steering neutral position even with no steering torque $T_h$ added to the steering wheel 11. The steered wheels 16 are held at a position steered in the leftward wheel steering direction by the wheel steering angle $\theta_w$ commensurate with the target pinion angle $\theta_p^*$ based on the target steering angle $\theta^*$ corresponding to the angle "$-\theta_x$" with reference to the wheel steering neutral position. Since the left-hand curve first incline road 91a curves leftward with respect to the direction of travel of the vehicle, the leftward steering direction of the steering wheel 11 and the leftward wheel steering direction of the steered wheels 16 correspond to the direction in which the road surface slope on the left-hand curve first incline road 91a goes down. Therefore, as indicated by the continuous line arrow C1 in FIG. 20A, when a driver does not operate the steering wheel 11, the vehicle 90 travels along the curve of the course 92 on the left-hand curve first incline road 91a.

Next, the case where the vehicle travels on the first incline road 91a of which the inclination of a road surface is opposite to that of the left-hand curve first incline road 91 a shown in FIG. 20A will be described. This first incline road 91 a curves rightward with respect to the direction of travel of the vehicle and inclines such that the level of the road gradually decrease from the outer side of the curve toward the inner side of the curve in a direction along the cross slope. The gravity component $G_a$ when the vehicle is traveling on the right-hand curve first incline road 91a is reverse in sign to the gravity component $G_a$ when the vehicle is traveling on the left-hand curve first incline road 91a shown in FIG. 20A.

In this case, a negative correction amount $\theta_c^*$ (= $-|+\theta_c^*|$) commensurate with a negative gravity component $G_a$ is computed in accordance with the first map M1 shown in FIG. 23A. Therefore, when the vehicle travels on the right-hand curve first incline road 91a, a characteristic line (not shown) that represents the relationship between a target pinion angle $\theta_p^*$ and an ideal axial force F1 is obtained by shifting the characteristic line L0 shown in FIG. 24A in the negative direction (direction away from the characteristic line L1 shown in FIG. 24A) by the absolute value of the correction amount $\theta_c^*$ along the abscissa axis. Therefore, when the vehicle travels on the right-hand curve first incline road 91a, the ideal axial force F1 is not zero and is a positive value (= $|-F_y|$) when the target pinion angle $\theta_p^*$ is zero.

When the vehicle travels on the right-hand curve first incline road 91a, a final target pinion angle $\theta_p^*$ that is used in computing an ideal axial force F1 is reduced by the correction amount $\theta_c^*$ computed as a function of the gravity component $G_a$. Therefore, a final axial force $F_{sp}$ that is computed by the axial force distribution computing unit 83, by extension, a spring component $T_{sp}^*$ that is computed by the conversion unit 84, also reduces as a function of the amount of reduction in target pinion angle $\theta_p^*$. Thus, a final input torque $T_{in}^*$ that is computed by the subtracter 74 (see FIG. 18) increases as a function of the amount of reduction in spring component $T_{sp}^*$, and the target steering angle $\theta^*$ increases with the increase in input torque $T_{in}^*$. Therefore, a steering angle $\theta_s$ that is achieved through feedback control over the steering angle $\theta_s$ to cause an actual steering angle $\theta_s$ to follow the target steering angle $\theta^*$ increases as a function of the amount of increase in target steering angle $\theta^*$.

When the vehicle travels on the right-hand curve first incline road 91a, a characteristic line (not shown) that represents the relationship between a steering angle $\theta_s$ and a steering torque $T_h$ (input torque $T_{in}^*$) is obtained by shifting the characteristic line L10 shown in FIG. 24B in the positive direction (direction away from the characteristic line L11 shown in FIG. 24B) by the amount commensurate with the amount of increase in target steering angle $\theta^*$ based on the correction amount $\theta_c^*$ along the abscissa axis. That is, when the vehicle travels on the right-hand curve first incline road 91a, the steering angle $\theta_s$ at which the steering torque $T_h$ is zero (hereinafter, referred to as the zero point of the steering torque $T_h$) is shifted in the positive direction by the amount commensurate with the amount of increase in target steering angle $\theta^*$ from the zero point of the steering torque $T_h$ when the vehicle travels on a flat road. Therefore, when the steering torque $T_h$ is zero, an actual steering angle $\theta_s$ that is achieved through feedback control over the steering angle $\theta_s$ is a positive angle (= $|-\theta_x|$) commensurate with the amount of increase in target steering angle $\theta^*$ with reference to the steering angle $\theta_s$ (= $0°$) at a steering torque $T_h$ of zero when the vehicle travels on a flat road.

Therefore, when the vehicle is traveling on the right-hand curve first incline road 91a, the steering wheel 11 is held at a position rotated in the rightward steering direction by the positive steering angle $\theta_s$ (= $|-\theta_x|$) with reference to the steering neutral position even with no steering torque $T_h$ added to the steering wheel 11. The steered wheels 16 are held at a position steered in the rightward wheel steering direction by the wheel steering angle $\theta_w$ commensurate with the target pinion angle $\theta_p^*$ based on the target steering angle $\theta^*$ corresponding to the positive angle (= $|-\theta_x|$) with reference to the wheel steering neutral position. Since the vehicle is traveling on the right-hand curve first incline road 91a, the rightward steering direction of the steering wheel 11 and the rightward wheel steering direction of the steered wheels 16 correspond to a direction in which the road surface slope on the right-hand curve first incline road 91a goes down. Therefore, even when a driver does not operate the steering wheel 11, the vehicle 90 travels along the curve of the course 92 on the right-hand curve first incline road 91a.

Next, the case where the vehicle travels on the straight second incline road 91b will be described. The road surface of the second incline road 91b inclines such that the level of the road surface gradually decreases from the right side toward the left side with respect to the direction of travel of the vehicle (the road surface inclines to the left) as shown in FIG. 20B.

In this case, a negative correction amount $\theta_c^*$ commensurate with a gravity component $G_a$ is computed in accordance with the second map M2. The correction amount $\theta_c^*$ is added to the uncorrected target pinion angle $\theta_p^*$. Thus, the final target pinion angle $\theta_p^*$ that is used in computing an ideal axial force F1 is computed. Therefore, the final target pinion angle $\theta_p^*$ that is used in computing an ideal axial force F1 reduces by the correction amount $\theta_c^*$ as compared to the uncorrected target pinion angle $\theta_p^*$.

As shown by the alternate long and two short dashes line in the graph of FIG. 24A, when the vehicle travels on the leftward-inclined second incline road 91b, the relationship between a target pinion angle $\theta_p^*$ and an ideal axial force F1 is represented by a characteristic line L2. The characteristic line L2 may be regarded as the line obtained by shifting (parallel-shifting) the characteristic line L0 in the negative direction by the correction amount $\theta_c^*$ along the abscissa axis. That is, when the vehicle travels on the leftward-inclined second incline road 91b, the zero point of the ideal axial force F1 is an angle "$-\theta_c^*$" shifted in the negative direction by the absolute value of the correction amount $\theta_c^*$ from the zero point of the ideal axial force F1 ($\theta_p^* = 0$) when the vehicle travels on a flat road. Therefore, when the vehicle travels on the leftward-inclined second incline road 91b, the ideal axial force F1 is not zero and is an ideal axial force "$+F_y$" when the target pinion angle $\theta_p^*$ is zero.

When the vehicle travels on the leftward-inclined second incline road 91b, a final target pinion angle $\theta_p^*$ that is used in computing an ideal axial force F1 is reduced by the negative correction amount $\theta_c^*$ computed as a function of the gravity component $G_a$ in accordance with the second map M2. Therefore, a final axial force $F_{sp}$ that is computed by the axial force distribution computing unit 83, by extension, a spring component $T_{sp}^*$ that is computed by the conversion unit 84, also reduces as a function of the amount of reduction in target pinion angle $\theta_p^*$. Thus, a final input torque $T_{in}^*$ that is computed by the subtracter 74 (see FIG. 18) increases as a function of the amount of reduction in spring component $T_{sp}^*$, and the target steering angle $\theta^*$ increases with the increase in input torque $T_{in}^*$. Therefore, a steering angle $\theta_s$ that is achieved through feedback control over the steering angle $\theta_s$ to cause an actual steering angle $\theta_s$ to follow the target steering angle $\theta^*$ increases as a function of the amount of increase in target steering angle $\theta^*$.

As shown by the alternate long and two short dashes line in FIG. 24B, when the vehicle travels on the leftward-inclined second incline road 91b, the relationship between a steering angle $\theta_s$ and a steering torque $T_h$ (input torque $T_{in}^*$) is represented by a characteristic line L12.

The characteristic line L12 may be regarded as the line obtained by shifting (parallel-shifting) the characteristic line L10 in the positive direction by the amount commensurate with the amount of increase in target steering angle $\theta^*$ based on the correction amount $\theta_c^*$ along the abscissa axis. That is, when the vehicle travels on the leftward-inclined second incline road 91b, the steering angle $\theta_s$ at which the steering torque $T_h$ is zero (hereinafter, referred to as the zero point of the steering torque $T_h$) is shifted in the positive direction by the amount commensurate with the amount of increase in target steering angle $\theta^*$ from the zero point of the steering torque $T_h$ when the vehicle travels on a flat road.

Therefore, as represented by the characteristic line L12 in FIG. 24B, when the steering torque $T_h$ is zero, an actual steering angle $\theta_s$ that is achieved through feedback control over the steering angle $\theta_s$ is a positive angle "$+\theta_x$" commensurate with the amount of increase in target steering angle $\theta^*$ with reference to the steering angle $\theta_s$ (= $0°$) at a steering torque $T_h$ of zero when the vehicle travels on a flat road. The angle "$+\theta_x$" is a value commensurate with the ideal axial force "$+F_y$" that is the ideal axial force F1 when the target pinion angle $\theta_p^*$ is zero. This is based on the fact that, when the steering torque $T_h$ (input torque $T_{in}^*$) is zero, a target steering angle $\theta^*$ commensurate with the spring component $T_{sp}^*$ based on the ideal axial force "$+F_y$" is computed.

Therefore, when the vehicle is traveling on the leftward-inclined second incline road 91b, the steering wheel 11 is held at a position rotated in the rightward steering direction by the steering angle $\theta_s$ (= $+\theta_x$) with reference to the steering neutral position even with no steering torque $T_h$ added to the steering wheel 11. The steered wheels 16 are held at a position steered in the rightward wheel steering direction by the wheel steering angle $\theta_w$ commensurate with the target pinion angle $\theta_p^*$ based on the target steering angle $\theta^*$ corresponding to the angle "$+\theta_x$" with reference to the wheel steering neutral position. The rightward steering direction of the steering wheel 11 and the rightward wheel steering direction of the steered wheels 16 correspond to the direction in which the road surface slope goes up on the leftward-inclined second incline road 91b. Therefore, as shown by the continuous line arrow C2 in FIG. 20B, even when a driver does not operate the steering wheel 11, the vehicle 90 does not naturally turn in the direction to go down on the road surface of the leftward-inclined second incline road 91b, and travels straight ahead along the course 92.

Next, the case where the vehicle travels on the second incline road 91b of which the inclination of a road surface is opposite to that of the leftward-inclined second incline road 91b shown in FIG. 20B will be described. Here, the road surface of the second incline road 91b inclines such that the level of the road surface gradually decreases from the left side toward the right side with respect to the direction of travel of the vehicle (the road surface inclines to the right). The gravity component $G_a$ when the vehicle is traveling on the rightward-inclined second incline road 91b is reverse in sign to the gravity component $G_a$ when the vehicle is traveling on the leftward-inclined second incline road 91b as shown in FIG. 20B.

In this case, a positive correction amount $\theta_c^*$ commensurate with a gravity component $G_a$ is computed in accordance with the second map M2 shown in FIG. 23B. Therefore, when the vehicle travels on the rightward-inclined second incline road 91b, a characteristic line (not shown) that represents the relationship between a target pinion angle $\theta_p^*$ and an ideal axial force F1 is obtained by shifting the characteristic line L0 shown in FIG. 24A in the positive direction (direction away from the characteristic line L2 shown in FIG. 24A) by the absolute value of the correction amount $\theta_c^*$ along the abscissa axis. Therefore, when the vehicle travels on the rightward-inclined second incline road 91b, the ideal axial force F1 is not zero and is a negative value (= $-|+F_y|$) when the target pinion angle $\theta_p^*$ is zero.

When the vehicle travels on the rightward-inclined second incline road 91b, a final target pinion angle $\theta_p^*$ that is used in computing an ideal axial force F1 is increased by the positive correction amount $\theta_c^*$ computed as a function of the gravity component $G_a$. Therefore, a final axial force $F_{sp}$ that is computed by the axial force distribution computing unit 83, by extension, a spring component $T_{sp}^*$ that is computed by the conversion unit 84, also increases as a function of the amount of increase in target pinion angle $\theta_p^*$. Thus, a final input torque $T_{in}^*$ that is computed by the subtracter 74 (see FIG. 18) reduces as a function of the amount of increase in spring component $T_{sp}^*$, and a target steering angle $\theta^*$ reduces with the reduction in input torque $T_{in}^*$. Therefore, a steering angle $\theta_s$ that is achieved through feedback control over the steering angle $\theta_s$ to cause an actual steering angle $\theta_s$ to follow the target steering angle $\theta^*$ reduces as a function of the amount of reduction in target steering angle $\theta^*$.

When the vehicle travels on the rightward-inclined second incline road 91b, a characteristic line (not shown) that represents the relationship between a steering angle $\theta_s$ and a steering torque $T_h$ (input torque $T_{in}^*$) is obtained by shifting the characteristic line L10 shown in FIG. 24B in the negative direction (direction away from the characteristic line L12) by the amount commensurate with the target steering angle $\theta^*$ based on the correction amount $\theta_c^*$ along the abscissa axis. That is, when the vehicle travels on the rightward-inclined second incline road 91b, the steering angle $\theta_s$ at which the steering torque $T_h$ is zero (hereinafter, referred to as the zero point of the steering torque $T_h$) is shifted in the negative direction by the amount commensurate with the amount of reduction in target steering angle $\theta^*$ from the zero point of the steering torque $T_h$ in the case where the vehicle travels on a flat road. Therefore, when the steering torque $T_h$ is zero, an actual steering angle $\theta_s$ that is achieved through feedback control over the steering angle $\theta_s$ is a negative angle (= $-|+\theta_x|$) commensurate with the amount of reduction in target steering angle $\theta^*$ with reference to the steering angle $\theta_s$ (= 0°) at a steering torque $T_h$ of zero when the vehicle travels on a flat road.

Therefore, when the vehicle is traveling on the rightward-inclined second incline road 91b, the steering wheel 11 is held at a position rotated in the leftward steering direction by the steering angle $\theta_s$ (= $-|+\theta_x|$) with reference to the steering neutral position even with no steering torque $T_h$ added to the steering wheel 11. The steered wheels 16 are held at a position steered in the leftward wheel steering direction by the wheel steering angle $\theta_w$ commensurate with the target pinion angle $\theta_p^*$ based on the target steering angle $\theta^*$ corresponding to the negative angle (= $-|+\theta_x|$) with reference to the wheel steering neutral position. The leftward steering direction of the steering wheel 11 and the leftward wheel steering direction of the steered wheels 16 correspond to the direction in which the road surface slope goes up on the rightward-inclined second incline road 91b. Therefore, even when a driver does not operate the steering wheel 11, the vehicle 90 does not naturally turn in the direction to go down on the road surface of the rightward-inclined second incline road 91b, and travels straight ahead along the course 92.

In this way, when the vehicle model 72 includes the correction processing unit 85, an appropriate steering feel is certainly achieved when the vehicle travels on the first incline road 91a or the second incline road 91b.

However, when the drive assist system or the automatic drive system is mounted on the vehicle, there are the following concerns. For example, a steering reaction force that the reaction motor 31 generates also influences the behavior of the steering wheel 11. For this reason, a request for reaction force control that the controller 50 executes or a request for a steering reaction force (driving force) that the reaction motor 31 generates can vary between when a driver manually drives (when the host controller 500 does not intervene in steering control) and when drive assist or automatic drive is performed (when the host controller 500 intervenes in steering control).

For example, when manual drive is performed, it is desirable that, as described above, a steering reaction force that is generated by the reaction motor 31 reflect a road surface condition (here, the cross slope of the incline road) when the vehicle travels on the first incline road 91a or the second incline road 91b. This is because a driver can get an appropriate steering feel for the cross slope of the first incline road 91a or second incline road 91b.

In contrast to this, when drive assist or automatic drive is being performed, that is, when a subject that operates the steering wheel 11 is not a driver and is the host controller 500 of the drive assist system or automatic drive system, a request not to make a steering reaction force that the reaction motor 31 generates reflect a road surface condition can be issued. This is based on the viewpoint that, when the subject that operates the steering wheel 11 is the host controller 500, a steering reaction force that the reaction motor 31 generates does not always need to reflect a road surface condition.

While drive assist or automatic drive is being performed, the steering wheel 11 may turn depending on a road surface condition when a road surface condition (here, the cross slope of an incline road) is incorporated in a steering reaction force, for example, while the vehicle is traveling on the first incline road 91a or second incline road 91b. Depending on product specifications, an unnecessary operation of the steering wheel 11 needs to be reduced when drive assist or automatic drive is being performed.

For this reason, in the present embodiment, the following components are employed as the correction processing unit 85 of the vehicle model 72. As shown in FIG. 22, the correction processing unit 85 includes a subtracter 107. The subtracter 107 acquires a flag as a distribution command $DR_a$ that is generated by the host controller 500. The subtracter 107 computes a distribution ratio $DR_m$ by subtracting the value of the flag as the distribution command $DR_a$ from one that is a fixed value stored in the storage device of the controller 50. Therefore, when the value of the flag as the distribution command $DR_a$ is one (100%), the distribution ratio $DR_m$ is zero. When the value of the flag as the distribution command $DR_a$ is zero (0%), the distribution ratio $DR_m$ is one.

The multiplier 105 computes a final correction amount $\theta_c^*$ commensurate with the distribution ratio $DR_m$ by multiplying the correction amount $\theta_c^*$ (correction angle) computed by the correction amount computing unit 103, the gain $G_c$ computed by the gain computing unit 104, and the distribution ratio $DR_m$ computed by the subtracter 107. When the distribution ratio $DR_m$ is zero, the final correction amount $\theta_c^*$ computed by the multiplier 105 is zero. When the distribution ratio $DR_m$ is one, a value obtained by multiplying the correction amount $\theta_c^*$ computed by the correction amount computing unit 103 and the gain $G_c$ computed by the gain computing unit 104 is a final correction amount $\theta_c^*$.

Therefore, according to the seventh embodiment, the following operation and advantageous effect are obtained.

When the host controller 500 intervenes in steering control, the controller 50 of the steering system 10 does not correct the target pinion angle $\theta_p^*$ for the cross slope of the first incline road 91a or second incline road 91b even when the vehicle is traveling on the first incline road 91a or the second incline road 91b. That is, when the drive assist control function or the automatic drive control function is on, the value of the flag, which serves as the distribution command $DR_a$, is set to one. When the value of the flag is one, a correction amount $\theta_c^*$ for the target pinion angle $\theta_p^*$ that is used by the ideal axial force computing unit 81 in computing an ideal axial force F1 is zero. Since the target pinion angle $\theta_p^*$ is not corrected by using the correction amount $\theta_c^*$ commensurate with a gravity component $G_a$ that reflects a road surface condition (here, the cross slope of the incline road), an ideal axial force F1 based on the target pinion angle $\theta_p^*$ and a spring component $T_{sp}^*$ based on the ideal axial force F1 do not reflect a road surface condition. Therefore, when drive assist or automatic drive is being performed, an input torque $T_{in}^*$, by extension, a steering reaction force that the reaction motor 31 generates, does not reflect a road surface condition. Thus, the steering wheel 11 does not unnecessarily turn for a road surface condition. Hence, steering intervention by the host controller 500 is appropriately handled. As a result, appropriate reaction force control is executed when manual drive is performed or when drive assist or automatic drive is performed.

Next, an eighth embodiment of the steering control apparatus will be described. The present embodiment basically has similar components to those of the seventh embodiment.

In the present embodiment, the host controller 500 does not supply a flag (zero or one) to the controller 50 as the distribution command $DR_a$, and the host controller 500 supplies an automatic drive ratio to the controller 50 as the distribution command $DR_a$. The automatic drive ratio means a value indicating the degree to which the system is involved in driving of the vehicle (here, the degree to which the host controller 500 intervenes in steering control). With complexity or advancement of the drive assist system based on advancement of technological level, the degree to which the system is involved in driving increases. For example, when the automatic drive ratio is 100%, the system entirely replaces driving. On the other hand, when the automatic drive ratio is 0%, a driver performs all, that is, recognition of a traveling environment, judgement of danger, and driving operation (such as steering, accelerating, and decelerating) of the vehicle. Here, the host controller 500 sets a value within the range of zero (0%) to one (100%) as the automatic drive ratio.

As shown in FIG. 22, in this case as well, the subtracter 107 of the correction processing unit 85 computes a distribution ratio $DR_m$ by subtracting the automatic drive ratio that serves as the distribution command $DR_a$ from one (100%) that is a fixed value stored in the storage device of the controller 50.

For example, when the automatic drive ratio is one (100%), the distribution ratio $DR_m$ for the correction amount $\theta_c^*$ is set to zero. When the automatic drive ratio is 0.3 (30%), the distribution ratio $DR_m$ for the correction amount $\theta_c^*$ is 0.7 (70%). When the automatic drive ratio is 0.7 (70%), the distribution ratio $DR_m$ for the correction amount $\theta_c^*$ is set to 0.3 (30%). In the case the drive assist control function or the automatic drive control function is off, the automatic drive ratio is zero (0%). At this time, the distribution ratio $DR_m$ for the correction amount $\theta_c^*$ is set to 1.0 (100%).

Therefore, according to the eighth embodiment, the following operation and advantageous effect are obtained.

When the host controller 500 intervenes in steering control, a distribution ratio $DR_m$ for the correction amount $\theta_c^*$ is set based on the automatic drive ratio that serves as the distribution command $DR_a$. For this reason, the degree to which an input torque $T_{in}^*$, by extension, a steering reaction force command value $T^*$, reflects a road surface condition (the cross slope of the incline road) is suitably set as a function of the automatic drive ratio. Therefore, intervention of the host controller 500 in steering control is appropriately handled.

Next, a ninth embodiment of the steering control apparatus will be described. The present embodiment differs from the seventh embodiment in the configuration of the correction processing unit 85 in the vehicle model 72.

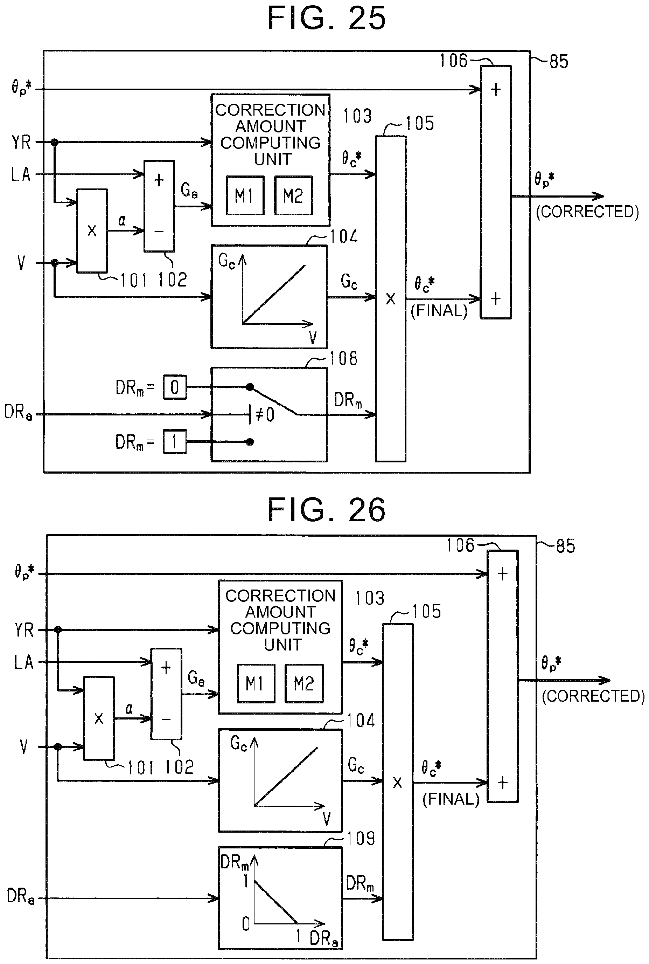

As shown in FIG. 25, the correction processing unit 85 includes a switch 108 in addition to the multiplier 101, the subtracter 102, the correction amount computing unit 103, the gain computing unit 104, the multiplier 105, and the adder 106.

The switch 108 acquires zero that is a fixed value stored in the storage device (not shown) and one that is a fixed value similarly stored in the storage device, as data input. Each of the fixed values is a distribution ratio $DR_m$ for the correction amount $\theta_c^*$ computed by the correction amount computing unit 103. The switch 108 acquires a flag that serves as a distribution command $DR_a$ that is generated by the host controller 500 as control input. The switch 108 switches the value to be supplied to the multiplier 105 between zero (fixed value) and one (fixed value) based on the value of the flag. When the value of the flag that serves as the distribution command $DR_a$ is zero, the switch 108 supplies one (fixed value) to the multiplier 105 as the distribution ratio $DR_m$ for the correction amount $\theta_c^*$. When the value of the flag that serves as the distribution command $DR_a$ is one (more accurately, when the value of the flag is not zero), the switch 108 supplies zero (fixed value) to the multiplier 105 as the distribution ratio $DR_m$ for the correction amount $\theta_c^*$.

The host controller 500 sets the value of the flag that serves as the distribution command $DR_a$ to one when the drive assist control function or the automatic drive control function is on. The host controller 500 sets the value of the flag that serves as the distribution command $DR_a$ to zero when the drive assist control function or the automatic drive control function is off.

The multiplier 105 computes a final correction amount $\theta_c^*$ commensurate with the distribution ratio $DR_m$ by multiplying the correction amount $\theta_c^*$ (correction angle) computed by the correction amount computing unit 103, the gain $G_c$ computed by the gain computing unit 104, and the distribution ratio $DR_m$ supplied from the switch 108. When the distribution ratio $DR_m$ is zero, a final correction amount $\theta_c^*$ that is computed by the multiplier 105 is zero. When the distribution ratio $DR_m$ is one, a value obtained by multiplying the correction amount $\theta_c^*$ computed by the correction amount computing unit 103 and the gain $G_c$ computed by the gain computing unit 104 is a final correction amount $\theta_c^*$.

Therefore, according to the ninth embodiment, in addition to the advantageous effect of the seventh embodiment, the following advantageous effect is obtained.

The switch 108 just needs to switch the distribution ratio $DR_m$ to be supplied to the multiplier 105 between zero (fixed value) and one (fixed value) stored in the storage device in response to the distribution command $DR_a$ (flag) that is generated by the host controller 500. Since the distribution ratio $DR_m$ does not need to be computed based on the distribution command $DR_a$ (flag), the computation load of the correction processing unit 85 is reduced.

Next, a tenth embodiment of the steering control apparatus will be described. The present embodiment differs from the eighth embodiment in the configuration of the correction processing unit 85 in the vehicle model 72.

As shown in FIG. 26, the correction processing unit 85 includes a distribution ratio computing unit 109 in addition to the multiplier 101, the subtracter 102, the correction amount computing unit 103, the gain computing unit 104, the multiplier 105, and the adder 106.

The distribution ratio computing unit 109 acquires an automatic drive ratio as a distribution command $DR_a$, and computes a distribution ratio $DR_m$ commensurate with the automatic drive ratio. The automatic drive ratio is set to a value within the range of zero (0%) to one (100%). The distribution ratio computing unit 109, for example, computes a distribution ratio $DR_m$ by using a map that defines the relationship between a distribution command $DR_a$ (automatic drive ratio) and a distribution ratio $DR_m$. The map has the following characteristics. That is, as the automatic drive ratio that serves as the distribution command $DR_a$ increases, the distribution ratio $DR_m$ linearly reduces. The distribution ratio $DR_m$ is a value greater than or equal to zero (0%) and less than or equal to one (100%).

Therefore, according to the tenth embodiment, a similar advantageous effect to that of the eighth embodiment is obtained.

Next, an eleventh embodiment of the steering control apparatus will be described. The present embodiment differs from the seventh embodiment in the configuration of the vehicle model 72. The present embodiment is also applicable to any one of the eighth to tenth embodiments.

The controller 50 of the seventh embodiment is able to achieve a desired steering feel when manual driving is performed through adjustment of the steering model 71 and vehicle model 72 (when the host controller 500 does not intervene in steering control that is executed by the controller 50).

A steering reaction force that is applied to the steering wheel 11 (a resistance experienced through the steering wheel) through reaction force control by the controller 50 is nothing but a force commensurate with a target steering angle $\theta^*$. That is, a steering reaction force does not change depending on a vehicle behavior or a road surface condition (such as the slipperiness of a road surface). For this reason, it is difficult for a driver to get a vehicle behavior or a road surface condition through a steering reaction force. Therefore, in the present embodiment, the vehicle model 72 is configured as follows.

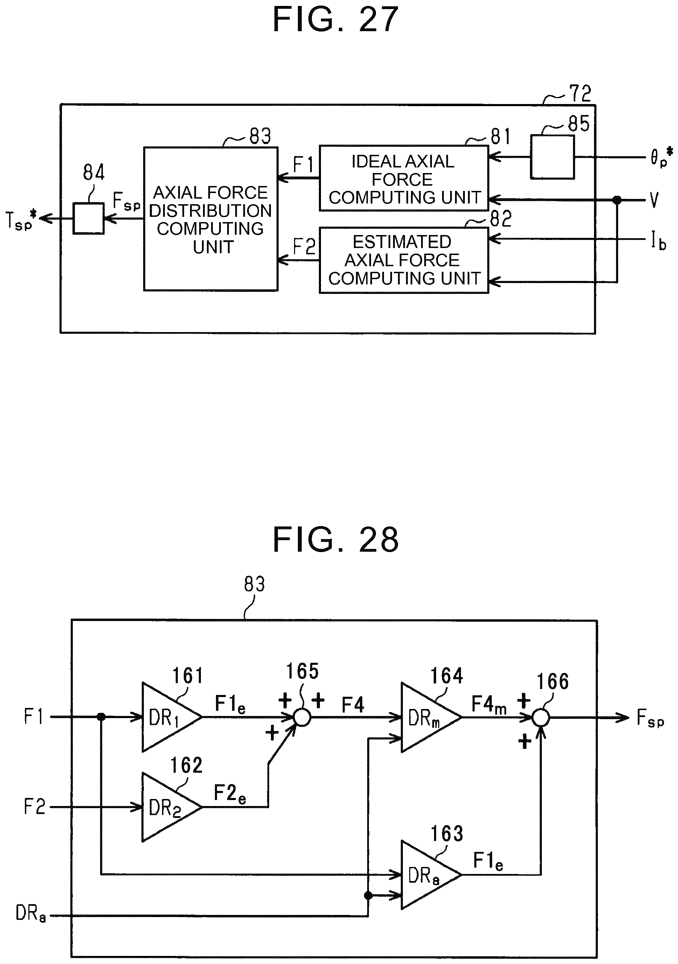

As shown in FIG. 27, the vehicle model 72 includes the estimated axial force computing unit 82 and the axial force distribution computing unit 83 in addition to the ideal axial force computing unit 81 and the conversion unit 84. The estimated axial force computing unit 82 computes an estimated axial force F2 (road surface reaction force) that acts on the wheel steering shaft 14 based on the current value $I_b$ of the wheel steering motor 41. The current value $I_b$ of the wheel steering motor 41 varies with the difference between a target pinion angle $\theta_p^*$ and an actual pinion angle $\theta_p$ due to the fact that a disturbance caused by a road surface condition (road surface frictional resistance) acts on the steered wheels 16. That is, the current value $I_b$ of the wheel steering motor 41 reflects an actual road surface reaction force that acts on the steered wheels 16. Therefore, an axial force that reflects the influence of a road surface condition can be computed based on the current value $I_b$ of the wheel steering motor 41. An estimated axial force F2 is found by multiplying a gain by the current value $I_b$ of the wheel steering motor 41. The gain is a coefficient commensurate with a vehicle speed V.

The axial force distribution computing unit 83 adds a value obtained by multiplying the ideal axial force F1 by a set distribution ratio (gain) and a value obtained by multiplying the estimated axial force F2 by a set distribution ratio (gain). Thus, the axial force distribution computing unit 83 computes a final axial force $F_{sp}$ that is used in computing a spring component $T_{sp}^*$ for the input torque $T_{in}^*$. The distribution ratios are set based on multiple state quantities that reflect a vehicle behavior, a road surface condition, or a steering status. Examples of the state quantity include a yaw rate YR, a lateral acceleration LA, a steering angle $\theta_s$, a pinion angle $\theta_p$, a vehicle speed V, a steering speed, and a pinion angular velocity. A steering speed is obtained by differentiating a steering angle $\theta_s$. A pinion angular velocity is obtained by differentiating a pinion angle $\theta_p$.

The conversion unit 84 computes (converts) a spring component $T_{sp}^*$ for the input torque $T_{in}^*$ based on the final axial force $F_{sp}$ computed by the axial force distribution computing unit 83. With the thus configured vehicle model 72, since an ideal axial force F1 and an estimated axial force F2 are added at distribution ratios that are set as a function of multiple types of state quantities that reflect a vehicle behavior or a road surface condition, a final axial force $F_{sp}$ that further appropriately reflects a road surface condition is computed. When the axial force $F_{sp}$ is incorporated in the input torque $T_{in}^*$, a further appropriate steering reaction force for a vehicle behavior or a road surface condition is applied to the steering wheel 11.

With the controller 50 of the seventh embodiment, when drive assist or automatic drive is performed (when the host controller 500 intervenes in steering control), the correction processing unit 85 does not correct a target pinion angle $\theta_p^*$ (does not add a correction amount $\theta_c^*$). Therefore, an ideal axial force F1, by extension, an input torque $T_{in}^*$, does not reflect the cross slope of the first incline road 91a or second incline road 91b as a road surface condition. However, an estimated axial force F2 is incorporated in the input torque $T_{in}^*$ even when drive assist or automatic drive is performed, so a steering reaction force that the reaction motor 31 generates reflects a vehicle behavior or a road surface condition commensurate with the estimated axial force F2.

Therefore, in the present embodiment, when drive assist or automatic drive is performed, the axial force distribution computing unit 83 is configured as follows on the assumption that a request not to make a steering reaction force reflect a vehicle behavior or a road surface condition has been issued.

As shown in FIG. 28, the axial force distribution computing unit 83 includes four computing units 161, 162, 163, 164, and two adders 165, 166. The computing unit 161 computes an ideal axial force $F1_e$ commensurate with a distribution ratio DRi by multiplying the distribution ratio $DR_1$ by the ideal axial force F1 computed by the ideal axial force computing unit 81. The computing unit 162 computes an estimated axial force $F2_e$ commensurate with a distribution ratio $DR_2$ by multiplying the distribution ratio $DR_2$ by the estimated axial force F2 computed by the estimated axial force computing unit 82. The distribution ratios $DR_1$, $DR_2$ are set as needed as a function of a state quantity that reflects a vehicle behavior, a road surface condition, or a steering status.

The adder 165 computes a combined axial force F4 obtained by adding the ideal axial force $F1_e$ computed by the computing unit 161 and the estimated axial force $F2_e$ computed by the computing unit 162. The computing unit 163 acquires the ideal axial force F1 computed by the ideal axial force computing unit 81 and the distribution command $DR_a$ (here, flag) computed by the host controller 500. The computing unit 163 computes an ideal axial force $F1_e$ commensurate with the distribution command $DR_a$ by multiplying the distribution command $DR_a$ by the ideal axial force F1. When drive assist or automatic drive is performed, the ideal axial force F1 computed by the ideal axial force computing unit 81 is directly a final ideal axial force $F1_e$ when the distribution command $DR_a$ is one (100%). When drive assist or automatic drive is not performed, the final ideal axial force $F1_e$ computed by the computing unit 163 is zero when the distribution command $DR_a$ is zero (0%).

The computing unit 164 acquires the combined axial force F4 computed by the adder 165 and the distribution command $DR_a$ computed by the host controller 500. The computing unit 164 computes a distribution ratio $DR_m$ for the combined axial force F4 by applying the distribution command $DR_a$ to the following mathematical expression (13). When the distribution command $DR_a$ is one, the distribution ratio $DR_m$ is zero. When the distribution command $DR_a$ is zero, the distribution ratio $DR_m$ is one. The computing unit 164 computes a combined axial force $F4_m$ commensurate with the distribution ratio $DR_m$ by multiplying the distribution ratio $DR_m$ by the combined axial force F4. When drive assist or automatic drive is performed, the combined axial force $F4_m$ is zero when the distribution command $DR_a$ is one (100%). When drive assist or automatic drive is not performed, the combined axial force F4 computed by the adder 165 is directly a final combined axial force $F4_m$ when the distribution command $DR_a$ is zero (0%).

$$DR_m = 1 - DR_a \qquad (13)$$

The adder 166 computes a final axial force $F_{sp}$ that is used in computing a spring component $T_{sp}^*$ by adding the ideal axial force $F1_e$ computed by the computing unit 163 and the combined axial force $F4_m$ computed by the computing unit 164.

Therefore, according to the eleventh embodiment, the following advantageous effects are obtained.

When the host controller 500 intervenes in steering control that is executed by the controller 50, a final axial force $F_{sp}$ that is incorporated in an input torque $T_{in}^*$, by extension, a steering reaction force command value $T^*$, is changed from the combined axial force $F4_m$ including the estimated axial force $F2_e$ to the ideal axial force $F1_e$ based on the distribution command $DR_a$. When the host controller 500 intervenes in steering control, the correction processing unit 85 does not correct a target pinion angle $\theta_p^*$ (does not add a correction amount $\theta_c^*$). That is, since the ideal axial force $F1_e$ does not reflect the cross slope of the first incline road 91a or second incline road 91b as a road surface condition, an input torque $T_{in}^*$, by extension, a steering reaction force that the reaction motor 31 generates, does not reflect a road surface condition. Therefore, the behavior of the steering wheel 11 is not influenced by a road surface condition. In addition, when the host controller 500 intervenes in steering control, a request not to make a steering reaction force reflect a road surface condition can be fulfilled. Hence, steering intervention by the host controller 500 is appropriately handled.

When the host controller 500 does not intervene in steering control that is executed by the controller 50, the combined axial force $F4_m$ obtained by combining the ideal axial force $F1_e$ with the estimated axial force $F2_e$ is used as a final axial force $F_{sp}$ to be incorporated in the input torque $T_{in}^*$, by extension, the steering reaction force command value $T^*$, based on the distribution command $DR_a$. When the host controller 500 does not intervene in steering control, the correction processing unit 85 corrects a target pinion angle $\theta_p^*$ (adds a correction amount $\theta_c^*$). Therefore, the ideal axial force $F1_e$ based on the corrected target pinion angle $\theta_p^*$ reflects the cross slope of the first incline road 91 a or second incline road 91b as a road surface condition. In addition, the estimated axial force $F2_e$ based on the current value $I_b$ of the wheel steering motor 41 reflects a road surface condition, such as a road surface frictional resistance. For this reason, the input torque $T_{in}^*$ based on the final axial force $F_{sp}$, by extension, the steering reaction force that the reaction motor 31 generates, reflects road surface conditions, such as the cross slope of the incline road and the road surface frictional resistance. Therefore, when the host controller 500 does not intervene in steering control, the vehicle travels along the course even with no driver's active operation of the steering wheel 11 when the vehicle travels on the first incline road 91a or the second incline road 91b. In addition, since a driver experiences a road surface condition, such as a road surface frictional resistance, as a steering reaction force, the driver can more quickly and accurately perform steering.

Next, a twelfth embodiment of the steering control apparatus will be described. The present embodiment differs from the seventh embodiment in the arrangement of the correction processing unit 85 in the vehicle model 72. The present embodiment is applicable to the eighth to eleventh embodiments.

In the present embodiment, correction is not made by adding a correction amount $\theta_c^*$ commensurate with

with the cross slope of the first incline road 91a or second incline road 91b to the target pinion angle $\theta_p^*$ that is used in computing an ideal axial force F1, and an ideal axial force F1 that is computed by the ideal axial force computing unit 81 is corrected.

As shown by the alternate long and two short dashes line in FIG. 19, the correction processing unit 85 is provided downstream of the ideal axial force computing unit 81 in the vehicle model 72. In this case, the correction processing unit 85 may be provided as the internal component of the ideal axial force computing unit 81.

The correction amount computing unit 103 shown in FIG. 22 computes a correction amount $F_c$ (correction axial force) commensurate with a gravity component $G_a$ by using the third map M3 and the fourth map M4 that are indicated by the signs inside the parentheses in FIG. 23A and FIG. 23B. The correction amount $F_c$ is intended for an ideal axial force F1 that is computed by the ideal axial force computing unit 81. The characteristics (the tendency of a change in correction amount $F_c$ to a gravity component $G_a$) of the third map M3 and fourth map M4 are similar to the characteristics (the tendency of a change in correction amount $\theta_c^*$ to a gravity component $G_a$) of the first map M1 and second map M2.

The multiplier 105 shown in FIG. 22 computes a final correction amount $F_c$ by multiplying the correction amount $F_c$ computed by the correction amount computing unit 103, the gain $G_c$ computed by the gain computing unit 104, and the distribution ratio $DR_m$ computed by the subtracter 107. The adder 106 computes a final ideal axial force F1 by adding the ideal axial force F1 computed by the ideal axial force computing unit 81 and the final correction amount $F_c$ computed by the multiplier 105 as a process of correcting the ideal axial force F1.

With this configuration as well, when the host controller 500 does not intervene in steering control, the relationship between a steering angle $\theta_s$ and a steering torque $T_h$ at the time when the vehicle travels on the first incline road 91a is the relationship as represented by the alternate long and short dash characteristic line L11 in FIG. 24B. In addition, when the host controller 500 does not intervene in steering control, the relationship between a steering angle $\theta_s$ and a steering torque $T_h$ at the time when the vehicle travels on the second incline road 91b is the relationship as represented by the alternate long and two short dashes characteristic line L12 in FIG. 24B. For this reason, when the host controller 500 does not intervene in steering control, the steering angle $\theta_s$ and the wheel steering angle $\theta_w$ appropriate for the inclination of the first incline road 91a or second incline road 91b are achieved.

Hence, according to the twelfth embodiment, a similar advantageous effect to that of the seventh embodiment is obtained.

The above-described embodiments may be modified as follows. In the first to twelfth embodiments, the target steering reaction force computing unit 51 finds a target steering reaction force $T_1^*$ based on a steering torque $T_h$ and a vehicle speed V. Alternatively, the target steering reaction force computing unit 51 may find a target steering reaction force $T_1^*$ based on only a steering torque $T_h$.

In the first to twelfth embodiments, the target steering angle computing unit 52 computes a target steering angle $\theta^*$ of the steering wheel 11 by using an input torque $T_{in}^*$ that is the sum of a target steering reaction force $T_1^*$ and a steering torque $T_h$. Alternatively, the target steering angle computing unit 52 may compute a target steering angle $\theta^*$ of the steering wheel 11 by using only a steering torque $T_h$ as an input torque $T_{in}^*$ or by using only a target steering reaction force $T_1^*$ as an input torque $T_{in}^*$.

In the first to twelfth embodiments, the controller 50 may be configured without the differential steering control unit 63. In this case, the pinion angle feedback control unit 64 acquires a target pinion angle $\theta_p^*$ that is computed by the steering angle ratio change control unit 62, and executes feedback control over the pinion angle $\theta_p$ to cause an actual pinion angle $\theta_p$ to follow the acquired target pinion angle $\theta_p^*$.

In the first to sixth embodiments, the controller 50 may be configured without both the differential steering control unit 63 and the steering angle ratio change control unit 62. In this case, a target steering angle $\theta^*$ that is computed by the target steering angle computing unit 52 is directly used as a target pinion angle $\theta_p^*$. That is, the steered wheels 16 are steered by the amount by which the steering wheel 11 is operated.

In the first to sixth embodiments, the vehicle model 72 (see FIG. 4) may be configured without the estimated axial force computing units 82, 86 and the axial force distribution computing unit 83. In this case, an ideal axial force F1 that is computed by the ideal axial force computing unit 81 is directly a final axial force $F_{sp}$.

In the seventh to twelfth embodiments, the correction processing unit 85 of the controller 50 does not need to use a gain $G_c$ that is computed by the gain computing unit 104 at the time of computing a final correction amount $\theta_c^*$. In this case, the correction processing unit 85 may be configured without the gain computing unit 104.

In the seventh to twelfth embodiments, the correction processing unit 85 of the controller 50 may include a low-pass filter or other filters that perform a process of gradually changing the distribution command $DR_a$ over time. With this configuration, when the host controller 500 intervenes in steering control that is executed by the controller 50, a steep change in final axial force F1 or final axial force $F_{sp}$ that is used in computing a spring component $T_{sp}^*$ is reduced.

In the first to twelfth embodiments, the controller 50 may be configured to execute only any one of first control for, for example, the first incline road 91a and second control for, for example, the second incline road 91b. With this configuration as well, an appropriate steering feel is obtained when the vehicle travels on a curve with a cross slope or travels on a straight road with a cross slope.

In the first to twelfth embodiments, the steering system 10 may include a clutch. In this case, as shown by the alternate long and two short dashes line in FIG. 1, the steering shaft 12 and the pinion shaft 13 are coupled to each other via a clutch 21. An electromagnetic clutch is employed as the clutch 21. The electromagnetic clutch supplies or stops power by supplying or stopping electric current to an exciting coil. The controller 50 executes clutch control to switch between an engaged state and disengaged state of the clutch 21. When the clutch 21 is disengaged, the power transmission path between the steering wheel 11 and each of the steered wheels 16 is mechanically interrupted. When the clutch 21 is engaged, the power transmission path between the steering wheel 11 and each of the steered wheels 16 is mechanically established.

The first to twelfth embodiments may be applied to a controller for an electric power steering system that applies the torque of a motor to a steering mechanism for a vehicle as assist force. The EPS may be of a type that applies assist force to a steering shaft having a pinion shaft (rotatable element) that is in mesh with a wheel steering shaft or may be of a type that applies assist force to a wheel steering shaft via a pinion shaft (rotatable element) provided separately from a steering shaft. The controller for EPS controls the motor based on a command value that is computed for a steering status. The command value indicates a torque to be generated by the motor. There is a controller for EPS, which computes a torque component (the axial force of the wheel steering shaft) to be incorporated in the command value through execution of feedback control that causes the pinion angle (wheel steering angle) to follow a target pinion angle (target wheel steering angle) as a target rotation angle. The target pinion angle is found as in the case of the target steering angle $\theta^*$ in the first to sixth embodiments. Such a controller also has inconvenience that, when the vehicle is traveling on an incline road, a driver needs to continue applying a force to a steering wheel. In addition, when the vehicle is equipped with a drive assist system or an automatic drive system, it is conceivable that a host controller intervenes in steering control that is executed by the controller for EPS.

Next, a technical idea that can be obtained from the first to sixth embodiments will be described below.

A steering control apparatus controls a motor based on a command value. The motor is a source that generates a driving force that is applied to a steering mechanism of a vehicle. The command value is computed for a steering status. The steering control apparatus includes a target driving force computing unit, a target rotation angle computing unit, a feedback computing unit, an ideal axial force computing unit, an estimated axial force computing unit, and a final axial force computing unit. The target driving force computing unit is configured to compute a target driving force as a function of a steering torque that is applied to a steering wheel. The target driving force is a first component of the command value. The target rotation angle computing unit is configured to compute a target rotation angle of a rotatable element based on an input torque. The rotatable element is configured to rotate with an operation of the steering wheel. The input torque includes at least one of the steering torque and the target driving force. The feedback computing unit is configured to compute a driving force correction amount through feedback control that brings an actual rotation angle of the rotatable element into coincidence with the target rotation angle. The driving force correction amount is a second component of the command value. The ideal axial force computing unit is configured to compute an ideal axial force based on the target rotation angle. The ideal axial force is an axial force that acts on a steered wheel. The ideal axial force is an axial force to be incorporated in the input torque. The estimated axial force computing unit is configured to compute an axial force that acts on the steering wheel as an estimated axial force based on a state quantity that reflects a vehicle behavior or a road surface condition. The final axial force computing unit is configured to compute a final axial force to be incorporated in the input torque by adding a value obtained by multiplying the ideal axial force by a distribution ratio and a value obtained by multiplying the estimated axial force by a distribution ratio. The distribution ratios are set individually for the ideal axial force and the estimated axial force for a cross slope.

Next, technical ideals that can be obtained from the seventh to twelfth embodiments will be described below. In the above-described steering control apparatus, a fifth computing unit is configured to, when it is determined that a vehicle is traveling on a first incline road that is a curve with a cross slope, which is a slope in a direction that intersects at right angles with a course of the road, based on a state quantity that reflects a turning motion of the vehicle, shift the ideal axial force as a function of the cross slope toward a side, toward which the cross slope of the first incline road goes down and toward which the specified direction is heading, with reference to a neutral value of the ideal axial force, associated with a state where the vehicle travels straight ahead.

The ideal axial force that is computed based on the target rotation angle is an axial force without taking the equilibrium of forces that act on the vehicle into consideration. For this reason, when the vehicle travels on the first incline road that is a curve, the steering angle of the steering wheel does not become an angle commensurate with the cross slope of the first incline road unless a driver continues holding the steering wheel by adding a steering torque to the steering wheel, and is kept at the neutral angle associated with the state where the vehicle travels straight ahead. Therefore, when the vehicle is traveling on the first incline road, the vehicle is not able to keep traveling along the first incline road and travels straight ahead unless the driver continues holding the steering wheel by adding a steering torque to the steering wheel. As a result, the vehicle may go up on the first incline road toward the outer side of the curve.

In this respect, with the above-described steering control apparatus, through feedback control that brings the rotation angle of the rotatable element into coincidence with the target rotation angle, the rotation angle of the rotatable element and the steering angle of the steering wheel become angles shifted toward a side opposite to a side toward which the vehicle departs from the road because of the cross slope, that is, a side toward which the cross slope of the first incline road goes down, with reference to the neutral value of each angle, associated with the state where the vehicle travels straight ahead. Therefore, when the vehicle travels on the first incline road, a steering angle appropriate for the cross slope of the first incline road is achieved even with no steering torque added to the steering wheel. As a result, an appropriate steering feel is obtained.

In the above-described steering control apparatus, the fifth computing unit is configured to, when it is determined that the vehicle is traveling on a second incline road that is a straight road with a cross slope, which is a slope in a direction that intersects at right angles with a course of the road, based on a state quantity that reflects a turning motion of the vehicle, shift the ideal axial force as a function of the cross slope toward a side, toward which the cross slope of the second incline road goes up and toward which the specified direction is heading, with reference to the neutral value of the ideal axial force, associated with the state where the vehicle travels straight ahead.

When the vehicle travels on the second incline road that is a straight road, the vehicle is not able to keep traveling along the second incline road unless a driver continues holding the steering wheel by adding a steering torque to the steering wheel, and gradually goes down toward a side where the level of the second incline road is low as the vehicle travels forward. This is because the vehicle is influenced by the cross slope of the second incline road.

In this respect, with the above-described steering control apparatus, through feedback control that brings the rotation angle of the rotatable element into coincidence with the target rotation angle, the rotation angle of the rotatable element and the steering angle of the steering wheel are angles shifted toward a side toward which the vehicle departs from the road because of the cross slope, that is, a side the cross slope of the second incline road goes up, with reference to the neutral value of each angle, associated with the state where the vehicle travels straight ahead. Therefore, when the vehicle travels on the second incline road, a steering angle appropriate for the cross slope of the second incline road is achieved even with no steering torque added to the steering wheel. As a result, an appropriate steering feel is obtained.

In the above-described steering control apparatus, the fifth computing unit is configured to, when a yaw rate that is the state quantity that reflects a turning motion of the vehicle and that is detected by a sensor is greater than or equal to a threshold, determine that the vehicle is traveling on a first incline road that is a curve with a cross slope, and, when the yaw rate is less than the threshold, determine that the vehicle is traveling on a second incline road that is a straight road with a cross slope.

The yaw rate when the vehicle is traveling on the first incline road that is a curve with a cross slope is greater than the yaw rate when the vehicle is traveling on the second incline road that is a straight road with a cross slope. For this reason, as in the case of the above-described steering control apparatus, whether the vehicle is traveling on the first incline road or the vehicle is traveling on the second incline road is determined based on the yaw rate.

In the above-described steering control apparatus, the distribution command is a flag indicating that a drive assist function or an automatic drive function is on or off, and a sixth computing unit is configured to, when the flag indicates that the drive assist function or the automatic drive function is on, not execute a process of changing an amount of shift of the ideal axial force.

In the above-described steering control apparatus, the distribution command is an automatic drive ratio indicating a degree to which a host controller intervenes in steering control.

In the above-described steering control apparatus, the rotatable element is a steering shaft or a pinion shaft.

## Claims

1. A steering control apparatus that controls a motor based on a command value, the motor being a source that generates a driving force that is applied to a steering mechanism of a vehicle, the command value being computed for a steering status,

   the steering control apparatus comprising an electronic control unit (50) configured to compute a first component of the command value as a function of a steering torque that is applied to a steering wheel (11), wherein

   the electronic control unit (50) is configured to compute a target rotation angle of a rotatable element based on an input torque, the rotatable element being configured to rotate with an operation of the steering wheel (11), the input torque including at least one of the steering torque and the first component,

   the electronic control unit (50) being configured to compute a second component of the command value through feedback control that brings an actual rotation angle of the rotatable element into coincidence with the target rotation angle,

   **characterized in that**

   the electronic control unit (50) is configured to compute an ideal axial force based on the target rotation angle, the ideal axial force being an axial force that acts on a steered wheel and that is an axial force to be incorporated in the input torque, and

the electronic control unit (50) is configured to shift the ideal axial force in a specified direction as a function of a cross slope, which is a slope in a direction that intersects at right angles with a course of a road, with reference to a neutral value of the ideal axial force, associated with a state where the vehicle travels straight ahead, the specified direction being a direction along the cross slope and heading toward a side opposite to a side toward which the vehicle departs from the road because of the cross slope.

2. The steering control apparatus according to claim 1, wherein

the electronic control unit (50) is configured to, when the electronic control unit (50) determines, based on a state quantity that reflects a turning motion of the vehicle, that the vehicle is traveling on a first incline road that is a curve with the cross slope, which is a slope

in a direction that intersects at right angles with a course of the road, shift the ideal axial force as the function of the cross slope toward a side, toward which the cross slope of the first incline road goes down and toward which the specified direction is heading, with reference to the neutral value of the ideal axial force, associated with the state where the vehicle travels straight ahead.

3. The steering control apparatus according to claim 1 or 2, wherein

the electronic control unit (50) is configured to, when the electronic control unit (50) determines, based on a state quantity that reflects a turning motion of the vehicle, that the vehicle is traveling on a second incline road that is a straight road with the cross slope, which is a slope in a direction that intersects at right angles with a course of the road, shift the ideal axial force as the function of the cross slope toward a side, toward which the cross slope of the second incline road goes up and toward which the specified direction is heading, with reference to the neutral value of the ideal axial force, associated with the state where the vehicle travels straight ahead.

4. The steering control apparatus according to claim 1, wherein

the electronic control unit (50) is configured to shift the ideal axial force in the specified direction by adding a correction angle computed as the function of the cross slope to the target rotation angle that is used in computing the ideal axial force.

5. The steering control apparatus according to claim 1, wherein

the electronic control unit (50) is configured to shift the ideal axial force in the specified direction by adding a correction axial force computed as the function of the cross slope to the ideal axial force.

6. The steering control apparatus according to claim 1, wherein:

the electronic control unit (50) is configured to determine that the vehicle is traveling on a first incline road that is a curve with the cross slope when a yaw rate that is a state quantity that reflects a turning motion of the vehicle and that is detected by a sensor (503) is greater than or equal to a threshold; and
the electronic control unit (50) is configured to determine that the vehicle is traveling on a second incline road that is a straight road with the cross slope when the yaw rate is less than the threshold.

7. The steering control apparatus according to claim 1, wherein:

the electronic control unit (50) is configured to compute an axial force that acts on the steered wheel as an estimated axial force based on a state quantity that reflects a vehicle behavior or a road surface condition; and
the electronic control unit (50) is configured to compute a final axial force to be incorporated in the input torque by adding a value obtained by multiplying the ideal axial force by a first distribution ratio and a value obtained by multiplying the estimated axial force by a second distribution ratio, the first distribution ratio and the second distribution ratio being individually set as the function of the cross slope.

8. The steering control apparatus according to claim 7, wherein:

the electronic control unit (50) is configured to recognize the cross slope based on a gravity component in a direction along the cross slope, the gravity component is computed from a lateral acceleration, a yaw rate, and a vehicle speed; and
the electronic control unit (50) is configured to set the first distribution ratio and the second distribution ratio such that a proportion of the estimated axial force in the final axial force increases as an absolute value of the gravity component increases.

9. The steering control apparatus according to claim 7, wherein:

the electronic control unit (50) is configured to recognize the cross slope based on an axial force difference that is a difference between the ideal axial force and the estimated axial force; and

the electronic control unit (50) is configured to set the first distribution ratio and the second distribution ratio such that a proportion of the estimated axial force in the final axial force increases as an absolute value of the axial force difference increases.

10. The steering control apparatus according to claim 1, wherein:

the electronic control unit (50) is configured to change an amount of shift of the ideal axial force based on a distribution command; and the distribution command is generated by a host controller when the host controller intervenes in steering control and indicates a degree to which the host controller intervenes in the steering control.

11. The steering control apparatus according to claim 10, wherein:

the electronic control unit (50) is configured to shift the ideal axial force in the specified direction by adding a correction angle computed as the function of the cross slope to the target rotation angle that is used in computing the ideal axial force; and the electronic control unit (50) is configured to change the amount of shift of the ideal axial force by changing the correction angle based on the distribution command.

12. The steering control apparatus according to claim 10, wherein:

the electronic control unit (50) is configured to shift the ideal axial force in the specified direction by adding a correction axial force computed as the function of the cross slope to the ideal axial force; and the electronic control unit (50) is configured to change the amount of shift of the ideal axial force by changing the correction axial force based on the distribution command.

13. The steering control apparatus according to claim 11, wherein:

the electronic control unit (50) is configured to compute a distribution ratio of the correction angle based on the distribution command; and the electronic control unit (50) is configured to compute a final value of the correction angle by multiplying the distribution ratio by the correction angle.

14. The steering control apparatus according to claim 12, wherein:

the electronic control unit (50) is configured to compute a distribution ratio of the correction axial force based on the distribution command; and the electronic control unit (50) is configured to compute a final value of the correction axial force by multiplying the distribution ratio by the correction axial force.

**Patentansprüche**

1. Lenksteuervorrichtung, die einen Motor basierend auf einem Befehlswert steuert, wobei der Motor eine Quelle darstellt, die eine Antriebskraft erzeugt, die auf einen Lenkmechanismus eines Fahrzeugs aufgebracht ist, wobei der Befehlswert für einen Lenkzustand berechnet ist,

wobei die Lenksteuervorrichtung eine elektronische Steuereinheit (50), die so konfiguriert ist, dass sie eine erste Komponente des Befehlswerts als eine Funktion eines Lenkmoments berechnet, das auf ein Lenkrad (11) aufgebracht ist, wobei

die elektronische Steuereinheit (50) so konfiguriert ist, dass sie einen Zieldrehwinkel eines drehbaren Elements basierend auf einem Eingangsmoment berechnet, wobei das drehbare Element so konfiguriert ist, dass es sich mit einer Betätigung des Lenkrads (11) dreht, wobei das Eingangsmoment das Lenkmoment und/oder die erste Komponente umfasst,

die elektronische Steuereinheit (50) so konfiguriert ist, dass sie eine zweite Komponente des Befehlswerts durch Rückkopplungssteuerung berechnet, die einen tatsächlichen Drehwinkel des drehbaren Elements mit dem Zieldrehwinkel in Übereinstimmung bringt,

**dadurch gekennzeichnet, dass** die elektronische Steuereinheit (50) so konfiguriert ist, dass sie eine ideale Axialkraft basierend auf einem Zieldrehwinkel berechnet, wobei die ideale Axialkraft eine Axialkraft darstellt, die auf ein gelenktes Rad wirkt und eine Axialkraft darstellt, die in das Eingangsmoment aufzunehmen ist, und

die elektronische Steuereinheit (50) so konfiguriert ist, dass sie die ideale Axialkraft in einer spezifizierten Richtung als eine Funktion einer Querneigung verschiebt, die eine Neigung in einer Richtung darstellt, die sich rechtwinklig mit einem Straßenverlauf schneidet, in Bezug auf einen neutralen Wert der idealen Axialkraft, verknüpft mit einem Zustand, in dem das Fahrzeug geradeaus fährt, wobei die spezifizierte Richtung eine Richtung entlang der Querneigung darstellt und zu einer Seite entgegengesetzt zu einer Seite hinzu verläuft, zu der hinzu das Fahrzeug aufgrund der Querneigung von der Straße abweicht.

2. Lenksteuervorrichtung nach Anspruch 1, wobei die elektronische Steuereinheit (50) so konfiguriert ist, dass, wenn die elektronische Steuereinheit (50) basierend auf einer Zustandsgröße, die eine Drehbewegung des Fahrzeugs widerspiegelt, feststellt, dass das Fahrzeug auf einer ersten geneigten Straße fährt, die eine Kurve mit der Querneigung darstellt, die eine Neigung in einer Richtung darstellt, die sich rechtwinklig mit einem Straßenverlauf schneidet, die ideale Axialkraft als die Funktion der Querneigung zu einer Seite hinzu verschiebt, zu der hinzu die Querneigung der ersten geneigten Straße hinuntergeht und zu der hinzu die spezifizierte Richtung zuläuft, in Bezug auf den neutralen Wert der idealen Axialkraft, verknüpft mit dem Zustand, in dem das Fahrzeug geradeaus fährt.

3. Lenksteuervorrichtung nach Anspruch 1 oder 2, wobei
die elektronische Steuereinheit (50) so konfiguriert ist, dass, wenn die elektronische Steuereinheit (50) basierend auf einer Zustandsgröße, die eine Drehbewegung des Fahrzeugs widerspiegelt, feststellt, dass das Fahrzeug auf einer zweiten geneigten Straße fährt, die eine gerade Straße mit der Querneigung darstellt, die eine Neigung in einer Richtung darstellt, die sich rechtwinklig mit einem Straßenverlauf schneidet, die ideale Axialkraft als Funktion der Querneigung zu einer Seite hinzu verschiebt, zu der hinzu die Querneigung der zweiten geneigten Straße ansteigt und zu der hinzu die spezifizierte Richtung zuläuft, in Bezug auf den neutralen Wert der idealen Axialkraft, verknüpft mit dem Zustand, in dem das Fahrzeug geradeaus fährt.

4. Lenksteuervorrichtung nach Anspruch 1, wobei die elektronische Steuereinheit (50) so konfiguriert ist, dass sie die ideale Axialkraft in der spezifizierten Richtung verschiebt, indem sie einen Korrekturwinkel, der als Funktion der Querneigung berechnet ist, zu dem Zieldrehwinkel hinzufügt, der bei der Berechnung der idealen Axialkraft verwendet ist.

5. Lenksteuervorrichtung nach Anspruch 1, wobei die elektronische Steuereinheit (50) so konfiguriert ist, dass sie die ideale Axialkraft in der spezifizierten Richtung verschiebt, indem sie eine Korrekturaxialkraft, die als Funktion der Querneigung berechnet ist, zu der idealen Axialkraft hinzufügt.

6. Lenksteuervorrichtung nach Anspruch 1, wobei:

die elektronische Steuereinheit (50) so konfiguriert ist, dass sie feststellt, dass das Fahrzeug auf einer ersten geneigten Straße fährt, die eine Kurve mit der Querneigung darstellt, wenn eine Gierrate, die eine Zustandsgröße darstellt, die eine Drehbewegung des Fahrzeugs widerspiegelt und die von einem Sensor (503) erfasst wird, größer als ein Schwellenwert oder gleich diesem ist; und
die elektronische Steuereinheit (50) so konfiguriert ist, dass sie feststellt, dass das Fahrzeug auf einer zweiten geneigten Straße fährt, die eine gerade Straße mit der Querneigung darstellt, wenn die Gierrate unter dem Schwellenwert liegt.

7. Lenksteuervorrichtung nach Anspruch 1, wobei:

die elektronische Steuereinheit (50) so konfiguriert ist, dass sie eine Axialkraft berechnet, die auf das gelenkte Rad als eine geschätzte Axialkraft wirkt, basierend auf einer Zustandsgröße, die ein Fahrzeugverhalten oder einen Straßenoberflächenzustand widerspiegelt; und
die elektronische Steuereinheit (50) so konfiguriert ist, dass sie eine endgültige Axialkraft berechnet, die in das Eingangsmoment aufzunehmen ist, indem ein Wert, der durch Multiplizieren der idealen Axialkraft mit einem ersten Verteilungsverhältnis erhalten wird, und ein Wert, der durch Multiplizieren der geschätzten Axialkraft mit einem zweiten Verteilungsverhältnis erhalten wird, addiert werden, wobei das erste Verteilungsverhältnis und das zweite Verteilungsverhältnis individuell als Funktion der Querneigung eingestellt werden.

8. Lenksteuervorrichtung nach Anspruch 7, wobei:

die elektronische Steuereinheit (50) so konfiguriert ist, dass sie die Querneigung basierend auf einer Gravitationskomponente in einer Richtung entlang der Querneigung erkennt, wobei die Gravitationskomponente aus einer Querbeschleunigung, einer Gierrate und einer Fahrzeuggeschwindigkeit berechnet wird; und
die elektronische Steuereinheit (50) so konfiguriert ist, dass sie das erste Verteilungsverhältnis und das zweite Verteilungsverhältnis derart einstellt, dass ein Anteil der geschätzten Axialkraft an der endgültigen Axialkraft mit zunehmendem Absolutwert der Gravitationskomponente zunimmt.

9. Lenksteuervorrichtung nach Anspruch 7, wobei:

die elektronische Steuereinheit (50) so konfiguriert ist, dass sie die Querneigung basierend auf einer Axialkraftdifferenz erkennt, die eine Differenz zwischen der idealen Axialkraft und der geschätzten Axialkraft ist; und

die elektronische Steuereinheit (50) so konfiguriert ist, dass sie das erste Verteilungsverhältnis und das zweite Verteilungsverhältnis derart einstellt, dass ein Anteil der geschätzten Axialkraft an der endgültigen Axialkraft mit zunehmendem Absolutwert der Axialkraftdifferenz zunimmt.

10. Lenksteuervorrichtung nach Anspruch 1, wobei die elektronische Steuereinheit (50) so konfiguriert ist, dass sie einen Verschiebungsbetrag der idealen Axialkraft basierend auf einem Verteilungsbefehl ändert; und

der Verteilungsbefehl von einem Host-Controller erzeugt wird, wenn der Host-Controller in die Lenksteuerung eingreift und angibt, inwieweit der Host-Controller in die Lenksteuerung eingreift.

11. Lenksteuerungsvorrichtung nach Anspruch 10, wobei:

die elektronische Steuereinheit (50) so konfiguriert ist, dass sie die ideale Axialkraft in die spezifizierte Richtung verschiebt, indem sie einen Korrekturwinkel, der als Funktion der Querneigung berechnet wird, zu dem Zieldrehwinkel hinzufügt, der bei der Berechnung der idealen Axialkraft verwendet wird; und

die elektronische Steuereinheit (50) so konfiguriert ist, dass sie den Verschiebungsbetrag der idealen Axialkraft durch Änderung des Korrekturwinkels basierend auf dem Verteilungsbefehl ändert.

12. Lenksteuervorrichtung nach Anspruch 10, wobei:

die elektronische Steuereinheit (50) so konfiguriert ist, dass sie die ideale Axialkraft in der spezifizierten Richtung verschiebt, indem sie eine Korrektur-Axialkraft, die als Funktion der Querneigung berechnet wird, zu der idealen Axialkraft hinzufügt; und

die elektronische Steuereinheit (50) so konfiguriert ist, dass sie den Verschiebungsbetrag der idealen Axialkraft durch Änderung der Korrektur-Axialkraft basierend auf dem Verteilungsbefehl ändert.

13. Lenksteuervorrichtung nach Anspruch 11, wobei:

die elektronische Steuereinheit (50) so konfiguriert ist, dass sie ein Verteilungsverhältnis des Korrekturwinkels basierend auf dem Verteilungsbefehl berechnet; und

die elektronische Steuereinheit (50) so konfiguriert ist, dass sie einen endgültigen Wert des Korrekturwinkels berechnet, indem sie das Verteilungsverhältnis mit dem Korrekturwinkel multipliziert.

14. Lenksteuervorrichtung nach Anspruch 12, wobei:

die elektronische Steuereinheit (50) so konfiguriert ist, dass sie ein Verteilungsverhältnis der Korrektur-Axialkraft basierend auf dem Verteilungsbefehl berechnet; und

die elektronische Steuereinheit (50) so konfiguriert ist, dass sie einen endgültigen Wert der Korrektur-Axialkraft durch Multiplizieren des Verteilungsverhältnisses mit der Korrektur-Axialkraft berechnet.

**Revendications**

1. Appareil de commande de direction qui commande un moteur sur la base d'une valeur de commande, le moteur étant une source qui génère une force d'entraînement qui est appliquée sur un mécanisme de direction d'un véhicule, la valeur de commande étant calculée pour un état de direction, l'appareil de commande de direction comprenant une unité de commande électronique (50) configurée pour calculer un premier composant de la valeur de commande en fonction d'un couple de direction qui est appliqué sur un volant (11), dans lequel :

l'unité de commande électronique (50) est configurée pour calculer un angle de rotation cible d'un élément rotatif sur la base d'un couple d'entrée, l'élément rotatif étant configuré pour tourner avec une action du volant (11), le couple d'entrée comprenant au moins l'un parmi le couple de direction et le premier composant, l'unité de commande électronique (50) étant configurée pour calculer un second composant de la valeur de commande par le biais de la commande de rétroaction qui amène un véritable angle de rotation de l'élément rotatif en coïncidence avec l'angle de rotation cible, **caractérisé en ce que** :

l'unité de commande électronique (50) est configurée pour calculer une force axiale idéale sur la base de l'angle de rotation cible, la force axiale idéale étant une force axiale qui agit sur une roue directrice et qui est une force axiale à incorporer dans le couple d'entrée, et l'unité de commande électronique (50) est configurée pour déplacer la force axiale idéale dans une direction spécifiée en fonction d'une pente transversale, qui est une pente dans une direction qui coupe en angle droit un tracé d'une route, en référence à une valeur neutre de la force axiale idéale, associée à un état dans lequel le véhicule se déplace tout droit, la direction spécifiée étant une direction le long de la pente transversale et se dirigeant vers un côté opposé à un côté vers lequel le véhicule s'éloigne de la route en raison de la pente transversale.

2. Appareil de commande de direction selon la revendication 1, dans lequel :
l'unité de commande électronique (50) est configurée pour, lorsque l'unité de commande électronique (50) détermine, sur la base d'une quantité d'état qui reflète un mouvement de virage du véhicule, que le véhicule circule sur une première route en pente qui est un virage avec la pente transversale, qui est une pente dans une direction qui coupe en angle droit un tracé de la route, déplacer la force axiale idéale en fonction de la pente transversale vers un côté vers lequel la pente transversale de la première route en pente descend et vers lequel la direction spécifiée se dirige, en référence à la valeur neutre de la force axiale idéale, associée à l'état dans lequel le véhicule se déplace tout droit.

3. Appareil de commande de direction selon la revendication 1 ou 2, dans lequel :
l'unité de commande électronique (50) est configurée pour, lorsque l'unité de commande électronique (50) détermine, sur la base d'une quantité d'état qui reflète un mouvement de virage du véhicule, que le véhicule se déplace sur une seconde route en pente qui est une route droite avec la pente transversale, qui est une pente dans une direction qui coupe en angle droit un tracé de la route, déplacer la force axiale idéale en fonction de la pente transversale vers un côté vers lequel la pente transversale de la seconde route en pente monte et vers lequel la direction spécifiée se dirige, en référence à la valeur neutre de la force axiale idéale, associée à l'état dans lequel le véhicule se déplace tout droit.

4. Appareil de commande de direction selon la revendication 1, dans lequel :
l'unité de commande électronique (50) est configurée pour déplacer la force axiale idéale dans la direction spécifiée en ajoutant un angle de correction calculé en fonction de la pente transversale, à l'angle de rotation cible qui est utilisé en calculant la force axiale idéale.

5. Appareil de commande de direction selon la revendication 1, dans lequel :
l'unité de commande électronique (50) est configurée pour déplacer la force axiale idéale dans la direction spécifiée en ajoutant une force axiale de correction calculée en fonction de la pente transversale, à la force axiale idéale.

6. Appareil de commande de direction selon la revendication 1, dans lequel :

l'unité de commande électronique (50) est configurée pour déterminer que le véhicule se déplace sur une première route en pente qui est un virage avec la pente transversale lorsqu'une amplitude de mouvement de lacet qui est une quantité d'état qui reflète un mouvement de virage du véhicule et qui est déterminée par un capteur (503), est supérieure ou égale à un seuil ; et
l'unité de commande électronique (50) est configurée pour déterminer que le véhicule se déplace sur une seconde route en pente qui est une route droite avec une pente transversale lorsque l'amplitude de mouvement de lacet est inférieure au seuil.

7. Appareil de commande de direction selon la revendication 1, dans lequel :

l'unité de commande électronique (50) est configurée pour calculer une force axiale qui agit sur la roue directrice en tant que force axiale estimée sur la base d'une quantité d'état qui reflète un comportement de véhicule ou une condition de surface de route ; et
l'unité de commande électronique (50) est configurée pour calculer une force axiale finale pour être incorporée dans le couple d'entrée en ajoutant une valeur obtenue en multipliant la force axiale idéale par un premier rapport de distribution et une valeur obtenue en multipliant la force axiale estimée par un second rapport de distribution, le premier rapport de distribution et le second rapport de distribution étant individuellement déterminés en fonction de la pente transversale.

8. Appareil de commande de direction selon la revendication 7, dans lequel :

l'unité de commande électronique (50) est configurée pour reconnaître la pente transversale sur la base d'un composant de gravité dans une direction le long de la pente transversale, le composant de gravité est calculé à partir d'une accélération latérale, d'une amplitude de mouvement de lacet et d'une vitesse du véhicule ; et
l'unité de commande électronique (50) est configurée pour déterminer le premier rapport de distribution et le second rapport de distribution de sorte qu'une proportion de la force axiale estimée dans la force axiale finale augmente au fur et à mesure qu'une valeur absolue du composant de gravité augmente.

9. Appareil de commande de direction selon la revendication 7, dans lequel :

l'unité de commande électronique (50) est configurée pour reconnaître la pente transversale sur la base d'une différence de force axiale qui est une différence entre la force axiale idéale et la force axiale estimée ; et
l'unité de commande électronique (50) est configurée pour déterminer le premier rapport de distribution et le second rapport de distribution de sorte qu'une proportion de la force axiale estimée dans la force axiale finale augmente au fur et à mesure qu'une valeur absolue de la différence de force axiale augmente.

10. Appareil de commande de direction selon la revendication 1, dans lequel :

l'unité de commande électronique (50) est configurée pour modifier une quantité de déplacement de la force axiale idéale sur la base d'une commande de distribution ; et
la commande de distribution est générée par un organe de commande hôte lorsque l'organe de commande hôte intervient dans la commande de direction et indique un degré auquel l'organe de commande hôte intervient dans la commande de direction.

11. Appareil de commande de direction selon la revendication 10, dans lequel :

l'unité de commande électronique (50) est configurée pour déplacer la force axiale idéale dans la direction spécifiée en ajoutant un angle de correction calculé en fonction de la pente transversale à l'angle de rotation cible qui est utilisé pour calculer la force axiale idéale ; et
l'unité de commande électronique (50) est configurée pour modifier la quantité de déplacement de la force axiale idéale en modifiant l'angle de correction sur la base de la commande de distribution.

12. Appareil de commande de direction selon la revendication 10, dans lequel :

l'unité de commande électronique (50) est configurée pour déplacer la force axiale idéale dans la direction spécifiée en ajoutant une force axiale de correction calculée en fonction de la pente transversale à la force axiale idéale ; et
l'unité de commande électronique (50) est configurée pour modifier la quantité de déplacement de la force axiale idéale en modifiant la force axiale de correction sur la base de la commande de distribution.

13. Appareil de commande de direction selon la revendication 11, dans lequel :

l'unité de commande électronique (50) est configurée pour calculer un rapport de distribution de l'angle de correction sur la base de la commande de distribution ; et
l'unité de commande électronique (50) est configurée pour calculer une valeur finale de l'angle de correction en multipliant le rapport de distribution par l'angle de correction.

14. Appareil de commande de direction selon la revendication 12, dans lequel :

l'unité de commande électronique (50) est configurée pour calculer un rapport de distribution de la force axiale de correction sur la base de la commande de distribution ; et
l'unité de commande électronique (50) est configurée pour calculer une valeur finale de la force axiale de correction en multipliant le rapport de distribution par la force axiale de correction.

# FIG. 1

# FIG. 2

EP 3 575 187 B1

# FIG. 3

TARGET STEERING ANGLE COMPUTING UNIT ~52

STEERING MODEL ~71

$T_i^*$, $T_h$ → 73 → $T_{in}^*$ → 74 → $T_{in}^*$ (FINAL) → 75 $\frac{1}{J}$ (INERTIA CONTROL COMPUTING UNIT) → $a^*$ → 76 $\frac{1}{S}$ → $\omega^*$ → 77 $\frac{1}{S}$ → $\theta^*$

78 $T_{vi}^*$ VISCOSITY MODEL (VISCOSITY CONTROL COMPUTING UNIT)

72 $T_{sp}^*$ VEHICLE MODEL (SPRING CHARACTERISTIC CONTROL COMPUTING UNIT)

$\theta_p^*$, $V$, $I_b$, $LA$, $YR$

EP 3 575 187 B1

# FIG. 4

# FIG. 5A

# FIG. 5B

# FIG. 6

ROAD
SURFACE

$\alpha$

VEHICLE

$\beta$

OUTER
SIDE

INNER
SIDE

Ga

Gb

$\beta$

# FIG. 7

~85

106

$\theta_p$*

CORRECTION
AMOUNT
COMPUTING
UNIT

~103

105

YR

LA

+
−

$G_a$

$\theta_c$*

M1    M2

×

$\theta_c$*
(FINAL)

+

+

$\theta_p$*
(CORRECTED)

×

$a$

$G_c$

104

V

101

102

$G_c$

V

$G_c$

# FIG. 8A

$YR \geqq YR_{th} \Longrightarrow$ FIRST INCLINE
ROAD

# FIG. 8B

$YR < YR_{th} \Longrightarrow$ SECOND INCLINE
ROAD

EP 3 575 187 B1

# FIG. 9A

F1

L2    L0

+F_y
-θ_c*
0    +θ_c*    θ_p*
(FINAL)

-F_y

L1

# FIG. 9B

T_h(T_In*)    L11

L10

-θ_x
0
+θ_x    θ_s

L12

EP 3 575 187 B1

# FIG. 10

# FIG. 11

# FIG. 12

# FIG. 13

# FIG. 14

# FIG. 15

# FIG. 16

# FIG. 17

EP 3 575 187 B1

# FIG. 18

TARGET STEERING ANGLE COMPUTING UNIT

STEERING MODEL

$T_l^*$

$T_h$

$T_{in}^*$

$T_{in}^*$ (FINAL)

$\dfrac{1}{J}$ — 75

(INERTIA CONTROL COMPUTING UNIT)

$a^*$

$\dfrac{1}{S}$

76

$\omega^*$

$\dfrac{1}{S}$

77

$\theta^*$

$T_{vi}^*$ | VISCOSITY MODEL (VISCOSITY CONTROL COMPUTING UNIT) — 78

$T_{sp}^*$ | VEHICLE MODEL (SPRING CHARACTERISTIC CONTROL COMPUTING UNIT) — 72

$\theta_p^*$

V

$I_b$

LA

YR

$DR_a$

EP 3 575 187 B1

# FIG. 19

# FIG. 20A

# FIG.20B

# FIG. 21

# FIG. 22

## FIG. 23A

$YR \geqq YR_{th} \Rightarrow$ FIRST INCLINE
ROAD

$\theta_c{}^* (F_c)$

M1 (M3)

$G_a$

0

## FIG. 23B

$YR < YR_{th} \Rightarrow$ SECOND INCLINE
ROAD

$\theta_c{}^* (F_c)$

M2 (M4)

$+P_c$

$G_a$

0

$-P_c$

## FIG. 24A

## FIG. 24B

EP 3 575 187 B1

# FIG. 25

# FIG. 26

# FIG. 27

# FIG. 28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4453012 B

- EP 2772412 A2